# EUROPEAN PATENT SPECIFICATION

(11) **EP 4 422 148 B1**
(45) Date of publication and mention of the grant of the patent: **09.12.2026**
(21) Application number: 22891771.2
(22) Date of filing: 24.10.2022
(51) Int. Cl.: H04L 47/80, H04W 4/06

(54) **METHOD AND APPARATUS FOR CONFIGURING CHANNEL FOR TRANSMITTING MULTICAST SERVICE**
VERFAHREN UND VORRICHTUNG ZUR KANALKONFIGURATION ZUR ÜBERTRAGUNG EINES MULTICAST-DIENSTES
PROCÉDÉ ET APPAREIL DE CONFIGURATION D'UN CANAL DE TRANSMISSION D'UN SERVICE DE MULTIDIFFUSION

(30) Priority: 11.11.2021 CN 202111334961
(43) Date of publication of application: 28.08.2024
(73) Proprietor: Huawei Technologies Co., Ltd., Shenzhen, Guangdong 518129 (CN)
(72) Inventor: JIN, Meng, Shenzhen, Guangdong 518129 (CN); ZHAO, Yao, Shenzhen, Guangdong 518129 (CN); SUN, Dongzhe, Shenzhen, Guangdong 518129 (CN); ZHANG, Jingyun, Shenzhen, Guangdong 518129 (CN); ZHU, Xudong, Shenzhen, Guangdong 518129 (CN); NI, Guanjun, Shenzhen, Guangdong 518129 (CN); LIAN, Hai, Shenzhen, Guangdong 518129 (CN)
(74) Representative: Epping - Hermann - Fischer
(86) International application number: PCT/CN2022/126908
(87) International publication number: WO 2023/082974

(56) References cited:
- WO-A1-2020/164615
- CN-A- 113 259 970
- CN-A- 113 613 319
- CN-A- 113 630 902

## Description

### TECHNICAL FIELD

This application relates to the communication field, and more specifically, to a method and an apparatus for configuring a channel for transmitting a multicast service.

### BACKGROUND

Short-distance communication may implement communication between electronic devices with a short distance. With the development of the Internet of Things, new application scenarios such as smart cars, smart homes, smart terminals, and smart manufacturing emerge, and a next-generation short-distance access technology (for example, a sparklink alliance (sparklink alliance) access technology) emerges. The sparklink alliance access technology is used as an example. The technology includes but is not limited to a sparklink basic (sparklink basic, SLB) access technology and a sparklink low energy (sparklink low energy, SLE) access technology.

To support a next-generation wireless short-distance communication technology and implement a complete process of a short-distance service, service transmission needs to be designed under a brand-new protocol framework. When service data sent by one electronic device to a plurality of electronic devices is the same, one-to-many service data transmission, that is, multi-cast or multicast (multicast), may be performed between the one electronic device and the plurality of electronic devices. A service transmitted through multicast may be referred to as a multicast service. However, how to configure a channel for transmitting a multicast service becomes an urgent problem to be resolved.

CN113630902A describes a data packet transmission method based on network service quality and a related device. In a data packet transmission process between a first network node and a second network node, the second network node determines a QoS parameter and second channel information according to a mapping relationship between IP packet header information and QoS information sent by a third network node. CN113259970A describes a wireless short-distance communication protocol stack architecture.

### SUMMARY

This application provides a method and an apparatus for configuring a channel for transmitting a multicast service, to implement one-to-many service transmission.

According to a first aspect, a method for configuring a channel for transmitting a multicast service, applied to a first electronic device, is provided as defined in claim 1.

In this embodiment of this application, after the first electronic device, the second electronic device, and the third electronic device establish the mapping relationships between the first logical channel and all of the first service channel, the second service channel, and the third service channel respectively, a one-to-many multicast service may be performed between the first electronic device, the second electronic device, and the third electronic device. Specifically, the first electronic device may transmit the first data to the second electronic device and the third electronic device on the first service channel and the first logical channel. Correspondingly, the second electronic device receives the first data from the first logical channel on the second service channel, and the third electronic device receives the first data from the first logical channel on the third service channel. In this way, multicast service transmission in which a piece of data is sent by the first electronic device and separately received by the second electronic device and the third electronic device may be implemented.

With reference to the first aspect, in a possible implementation, before the first basic service layer sends the first information to the second electronic device, the method further includes: The first basic service layer establishes the first service channel; the first basic service layer sends fifth information to the first access layer, where the fifth information is used to apply for a logical channel for the first service channel; and the first basic service layer receives sixth information sent by the first access layer, where the sixth information indicates the first service channel to establish the mapping relationship with the first logical channel.

With reference to the first aspect, in a possible implementation, the fifth information includes an identifier of the first service channel and device information of the second electronic device, and the device information of the second electronic device in the fifth information indicates the first access layer to establish a logical link between the first electronic device and the second electronic device. The sixth information includes the identifier of the first service channel, an identifier of the first logical channel, and the device information of the second electronic device, and the device information of the second electronic device in the sixth information indicates that establishment of the logical link between the first electronic device and the second electronic device is completed. In this embodiment of this application, an upper layer and a lower layer of an electronic device may interact with each other based on device information that is of the electronic device and that can be identified at all layers, to facilitate multicast member management.

With reference to the first aspect, in a possible implementation, the fifth information includes an identifier of the first service channel and multicast member information, the multicast member information includes a device identifier and/or a device address of an electronic device configured to receive the first data, and the multicast member information in the fifth information indicates the first access layer to establish a logical link between the first electronic device and each of the electronic devices configured to receive the first data. The sixth information includes the identifier of the first service channel, an identifier of the first logical channel, and the multicast member information, and the multicast member information indicates that establishment of the logical link between the first electronic device and each of the electronic devices configured to receive the first data is completed.

The first basic service layer exchanges the multicast member information with the first access layer. In this way, when the first electronic device needs to establish data paths with a plurality of multicast members, the first basic service layer does not need to send member device information to the first access layer in a plurality of times, and does not need to receive member device information sent by the first access layer in a plurality of times. The process can be simplified.

With reference to the first aspect, in a possible implementation, the fifth information includes an identifier of the first service channel and multicast member information, the multicast member information includes a device identifier and/or a device address of an electronic device configured to receive the first data, and the multicast member information in the fifth information indicates the first access layer to establish a logical link between the first electronic device and each of the electronic devices configured to receive the first data. The sixth information includes the identifier of the first service channel, an identifier of the first logical channel, and device information of the second electronic device, and the device information of the second electronic device in the sixth information indicates that establishment of the logical link between the first electronic device and the second electronic device is completed.

The first basic service layer notifies the first access layer of the multicast member information. In this way, when the first electronic device needs to establish data paths with a plurality of multicast members, the first basic service layer does not need to send member device information to the first access layer in a plurality of times. The process can be simplified. The first basic service layer may separately feed back a data path establishment status of each member device.

With reference to the first aspect, in a possible implementation, the first electronic device further includes a first basic application layer. Before the first basic service layer establishes the first service channel, the method further includes: The first basic service layer receives seventh information sent by the first basic application layer, where the seventh information indicates to apply for a service channel for a first port, and the first port is a port used by the first electronic device to transmit the first data. The method further includes: The first basic service layer sends eighth information to the first basic application layer, where the eighth information indicates the first port to establish a mapping relationship with the first service channel.

With reference to the first aspect, in a possible implementation, the seventh information includes an identifier of the first port, the multicast member information, and multicast member port information, the multicast member information includes the device identifier and/or the device address of the electronic device configured to receive the first data, and the multicast member port information includes an identifier of a port used by the electronic device configured to receive the first data. The eighth information includes the identifier of the first port, the identifier of the first service channel, and the device information of the second electronic device; or the eighth information includes the identifier of the first port, the identifier of the first service channel, and the multicast member information.

The first basic application layer notifies the first basic service layer of the multicast member information and the multicast member port information. In this way, when the first electronic device needs to establish data paths with a plurality of multicast members, the first basic application layer does not need to send member device information and port information used by members to the first basic service layer in a plurality of times. The process can be simplified. With reference to the first aspect, in a possible implementation, the port used by the electronic device configured to receive the first data is obtained through negotiation between the first basic application layer of the first electronic device and each of the electronic devices configured to receive the first data.

Data exchanged during negotiation may be transmitted through a default service channel.

With reference to the first aspect, in a possible implementation, before the first basic service layer sends the first information to the second electronic device, the method further includes: The first basic service layer sends ninth information to the first access layer, where the ninth information indicates the first access layer to establish a logical link between the first electronic device and the second electronic device; and the first basic service layer receives tenth information sent by the first access layer, where the tenth information indicates that establishment of the logical link between the first electronic device and the second electronic device is completed. Before the first basic service layer sends the third information to the third electronic device, the method further includes: The first basic service layer sends eleventh information to the first access layer, where the eleventh information indicates the first access layer to establish a logical link between the first electronic device and the third electronic device; and the first basic service layer receives twelfth information sent by the first access layer, where the twelfth information indicates that establishment of the logical link between the first electronic device and the third electronic device is completed.

With reference to the first aspect, in a possible implementation, the logical link between the first electronic device and the second electronic device includes the first logical channel and a second logical channel, the second logical channel separately has a mapping relationship with the first service channel and the second service channel, and the second logical channel is configured to transmit data that is sent by the second electronic device to the first electronic device. The logical link between the first electronic device and the third electronic device includes the first logical channel and a third logical channel, the third logical channel separately has a mapping relationship with the first service channel and the third service channel, and the third logical channel is configured to transmit data that is sent by the third electronic device to the first electronic device. The first logical channel is configured to transmit data that is sent by the first electronic device to the second electronic device and the third electronic device.

In this embodiment of this application, a bottom-layer logical link between the first electronic device and a member device may include a logical channel for transmitting downlink data and a logical channel for transmitting uplink data. For example, the first electronic device may send a multicast service (namely, downlink data) to different member devices on a same logical channel (namely, the first logical channel), and the different member devices may send data to the first electronic device on respective logical channels for transmitting uplink data.

With reference to the first aspect, in a possible implementation, the ninth information includes device information of the second electronic device and an identifier of the first service channel. The tenth information includes the device information of the second electronic device, the identifier of the first service channel, an identifier of the first logical channel, and an identifier of the second logical channel. The eleventh information includes device information of the third electronic device and at least one of the following: the identifier of the first service channel and the identifier of the first logical channel. The twelfth information includes the device information of the third electronic device, the identifier of the first service channel, the identifier of the first logical channel, and an identifier of the third logical channel.

In this embodiment of this application, different electronic devices use different logical channels to send data to the first electronic device, and the first electronic device may distinguish data from different devices based on different logical channel identifiers.

With reference to the first aspect, in a possible implementation, the device information of the second electronic device includes a device identifier and/or a device address of the second electronic device. The device information of the third electronic device includes a device identifier and/or a device address of the third electronic device.

With reference to the first aspect, in a possible implementation, that the first basic service layer sends eighth information to the first basic application layer includes: after the first basic service layer receives the second information and before the first basic service layer sends the third information, sending the eighth information to the first basic application layer. Before the first basic service layer sends the third information to the third electronic device, the method further includes: The first basic service layer receives thirteenth information sent by the first basic application layer, where the thirteenth information is used to apply for reconfiguration of the first service channel, to transmit a multicast service between the first electronic device and the third electronic device; the first basic service layer sends fourteenth information to the first access layer, where the fourteenth information indicates the first access layer to establish a logical link between the first electronic device and the third electronic device; and the first basic service layer receives fifteenth information sent by the first access layer, where the fifteenth information indicates that establishment of the logical link between the first electronic device and the third electronic device is completed. After the first basic service layer receives the fourth information sent by the third electronic device, the method further includes: The first basic service layer sends sixteenth information to the first basic application layer, where the sixteenth information indicates that the first service channel is successfully reconfigured.

In this embodiment of this application, after the first service channel is successfully applied for, in a process in which a member joins multicast, the first service channel may be reconfigured, to establish a data path between the first electronic device and a new member device, so that multicast service transmission between the first electronic device and the new member device is implemented, and multicast communication is more flexible.

With reference to the first aspect, in a possible implementation, the thirteenth information includes device information of the third electronic device and the identifier of the first service channel. The fourteenth information includes the device information of the third electronic device and at least one of the following: the identifier of the first service channel and the identifier of the first logical channel. The fifteenth information includes the device information of the third electronic device, the identifier of the first service channel, and the identifier of the first logical channel. The sixteenth information includes the device information of the third electronic device and the identifier of the first service channel.

With reference to the first aspect, in a possible implementation, the first information includes an identifier of a second port, the identifier of the first service channel, and the identifier of the first logical channel, and the second port is a port used by the second electronic device to transmit the first data. The second information includes an identifier of the second service channel, and the second service channel has a mapping relationship with the second port. The third information includes an identifier of a third port, the identifier of the first service channel, and the identifier of the first logical channel, and the third port is a port used by the third electronic device to transmit the first data. The fourth information includes an identifier of the third service channel, and the third service channel has a mapping relationship with the third port.

In this embodiment of this application, the first port establishes the mapping relationship with the first service channel. The first service channel establishes the mapping relationship with the first logical channel. The first logical channel separately establishes the mapping relationship with the second service channel and the third service channel. The second service channel establishes the mapping relationship with the second port. The third service channel establishes the mapping relationship with the third port. In this way, one-to-many multicast service transmission between the first electronic device and both of the second electronic device and the third electronic device is implemented.

With reference to the first aspect, in a possible implementation, when a channel for transmitting the first data between the first electronic device and the second electronic device needs to be released, the method further includes: The first basic service layer sends seventeenth information to the first access layer, where the seventeenth information indicates the first access layer to remove the mapping relationship between the first logical channel and the second service channel; the first basic service layer receives eighteenth information sent by the first access layer, where the eighteenth information indicates that the mapping relationship between the first logical channel and the second service channel is successfully removed; the first basic service layer sends nineteenth information to the second electronic device, where the nineteenth information indicates the second electronic device to release the second service channel; and the first basic service layer receives twentieth information sent by the second electronic device, where the twentieth information indicates that the second service channel is successfully released.

When the second electronic device leaves multicast, the mapping relationship between the second service channel and the first logical channel may be removed, so that the second service channel is released, and multicast communication is more flexible.

With reference to the first aspect, in a possible implementation, the seventeenth information includes the identifier of the first service channel and the device information of the second electronic device; or the seventeenth information includes the identifier of the first service channel and/or the identifier of the first logical channel.

With reference to the first aspect, in a possible implementation, the method further includes: The first basic service layer receives twenty-first information sent by the first basic application layer, where the twenty-first information indicates to release the channel for transmitting the first data between the first electronic device and the second electronic device; and the twenty-first information includes the identifier of the first service channel and the device information of the second electronic device.

In the method provided in this application, a channel for transmitting a multicast service between the first electronic device and an electronic device may be released.

With reference to the first aspect, in a possible implementation, the method further includes: The first basic service layer receives twenty-first information sent by the first basic application layer, where the twenty-first information indicates to release the first service channel; and the twenty-first information includes the identifier of the first service channel and/or device information of all online devices configured to receive a multicast service sent by the first electronic device.

In the method provided in this application, a channel for transmitting a multicast service between the first electronic device and a plurality of electronic devices may be released.

With reference to the first aspect, in a possible implementation, the second electronic device is a last device that is connected to the primary device and that is configured to receive the first data. The method further includes: The first basic service layer removes the mapping relationship between the first service channel and the first port, to release the first service channel, where the first port is the port used by the first electronic device to transmit the first data; and the first basic service layer sends twenty-second information to the first basic application layer, where the twenty-second information indicates the first basic application layer to release the first port.

When the multicast service stops or ends, a multicast service channel used by the first electronic device to transmit the multicast service may be released. This improves resource utilization efficiency.

With reference to the first aspect, in a possible implementation, the first access layer supports a sparklink basic SLB access technology and/or a sparklink low energy SLE access technology.

According to a second aspect, an apparatus for configuring a channel for transmitting a multicast service is provided. The apparatus includes a module or a unit configured to perform the method in any one of the first aspect or the possible implementations of the first aspect. The module or the unit may be implemented by a hardware circuit, software, or a combination of a hardware circuit and software.

Optionally, the apparatus may be an electronic device, or may be a chip in an electronic device.

In a possible design, the apparatus includes a processing unit and a transceiver unit. When the apparatus is the electronic device, the processing unit may be a processor, and the transceiver unit may be a transceiver. When the apparatus is the chip in the electronic device, the processing unit may be a processor, and the transceiver unit may be an input/output interface, a pin, a circuit, or the like. The transceiver unit may be referred to as a communication interface.

In a possible design, the apparatus further includes a storage unit. The storage unit is configured to store instructions. The processing unit executes the instructions stored in the storage unit, to enable the apparatus to perform the method according to any one of the first aspect or the possible implementations of the first aspect. When the apparatus is the electronic device, the storage unit may be a memory. When the apparatus is the chip in the electronic device, the storage unit may be a storage unit (for example, a register, a cache, or the like) in the chip, or may be a storage unit (for example, a read-only memory, a random access memory, or the like) located outside the chip in the electronic device.

According to a third aspect, an apparatus for configuring a channel for transmitting a multicast service is provided. The apparatus includes: a memory, configured to store a computer program; and a processor, configured to execute the computer program stored in the memory, to enable the apparatus to perform the method according to any one of the first aspect or the possible implementations of the first aspect.

Optionally, the apparatus further includes a transceiver.

According to a fourth aspect, an apparatus for configuring a channel for transmitting a multicast service is provided. The apparatus includes at least one processor and a communication interface. The communication interface is configured to provide input or output of instructions and/or data for the at least one processor. The at least one processor executes a code instruction, to enable the apparatus to perform the method according to any one of the first aspect or the possible implementations of the first aspect.

According to a fifth aspect, a chip system is provided. The chip system includes at least one processor. When program instructions are executed in the at least one processor, the at least one processor is enabled to perform the method according to any one of the first aspect or the possible implementations of the first aspect.

In a possible design, the chip system further includes a memory, configured to store program instructions and/or data. The chip system may include a chip, or may include a chip and another discrete component.

In a possible design, the chip system further includes a transceiver, configured to provide input or output of instructions and/or data for the at least one processor.

According to a sixth aspect, a computer program product is provided. The computer program product includes computer program code. When the computer program code is run on a computer, the computer is enabled to perform the method according to any one of the first aspect or the possible implementations of the first aspect.

It should be noted that all or some of the computer program code may be stored in a first storage medium. The first storage medium may be encapsulated together with a processor, or may be encapsulated separately from a processor. This is not specifically limited in embodiments of this application.

According to a seventh aspect, a computer-readable medium is provided. The computer-readable medium stores a computer-executable instruction. When the computer-executable instruction is run on a computer, the computer is enabled to perform the method according to any one of the first aspect or the possible implementations of the first aspect.

According to an eighth aspect, a communication system is provided. The communication system includes the foregoing first electronic device, the foregoing second electronic device, and the foregoing third electronic device.

Optionally, the first electronic device may be the apparatus according to any one of the second aspect to the fourth aspect.

### BRIEF DESCRIPTION OF DRAWINGS

FIG. 1 is a schematic diagram of a communication system to which an embodiment of this application is applicable;
FIG. 2 is a schematic diagram of a protocol architecture according to an embodiment of this application;
FIG. 3A to FIG. 3C show a schematic flowchart of creating a multicast service channel according to an embodiment of this application;
FIG. 4A and FIG. 4B show a schematic flowchart of creating a multicast service channel according to another embodiment of this application;
FIG. 5 is a schematic diagram of a transmission path of a multicast service according to an embodiment of this application;
FIG. 6 is a schematic diagram of supporting a multicast technology by an access layer according to an embodiment of this application;
FIG. 7A and FIG. 7B show a schematic flowchart of joining multicast by a member device according to an embodiment of this application;
FIG. 8 is a schematic flowchart of leaving multicast by a member device according to an embodiment of this application;
FIG. 9 and FIG. 10A and FIG. 10B are schematic flowcharts of releasing a multicast service channel according to an embodiment of this application;
FIG. 11 to FIG. 13 each are a schematic flowchart of a method for configuring a channel for transmitting a multicast service according to an embodiment of this application;
FIG. 14A and FIG. 14B show a schematic flowchart of a method for configuring a channel for transmitting a multicast service according to another embodiment of this application;
FIG. 15 is a schematic flowchart of a method for configuring a channel for transmitting a multicast service according to another embodiment of this application;
FIG. 16 and FIG. 17 each are a schematic flowchart of a method for configuring a channel for transmitting a multicast service according to still another embodiment of this application;
FIG. 18 is a schematic diagram of a structure of an apparatus according to an embodiment of this application; and
FIG. 19 is a schematic diagram of a structure of an apparatus according to another embodiment of this application.

### DESCRIPTION OF EMBODIMENTS

The following describes technical solutions of this application with reference to the accompanying drawings.

Short-distance communication may implement communication between electronic devices with a short distance. Currently, mainstream access technologies in short-distance communication include a wireless fidelity (wireless fidelity, Wi-Fi) technology, a Bluetooth technology, a ZigBee (ZigBee) technology, and the like. With the development of the Internet of Things, new application scenarios such as smart cars, smart homes, smart terminals, and smart manufacturing emerge, and a next-generation short-distance access technology (for example, a sparklink alliance (sparklink alliance) access technology) emerges. The sparklink alliance access technology is used as an example. The technology includes but is not limited to a sparklink basic (sparklink basic, SLB) access technology and a sparklink low energy (sparklink low energy, SLE) access technology. The SLB access technology can support transmission of high-bandwidth services such as projection, virtual reality (virtual reality, VR), and vehicle-mounted communication. The SLE access technology can support transmission of low-bandwidth, low-rate, and low-power-consumption services such as audio playback, a keyboard, a mouse, and an electronic pen. For ease of description, in the following embodiments, the SLB access technology may be referred to as SLB for short, and the SLE access technology may be referred to as SLE for short. In addition, unless otherwise specified, the access technology mentioned in the following description is a short-distance access technology.

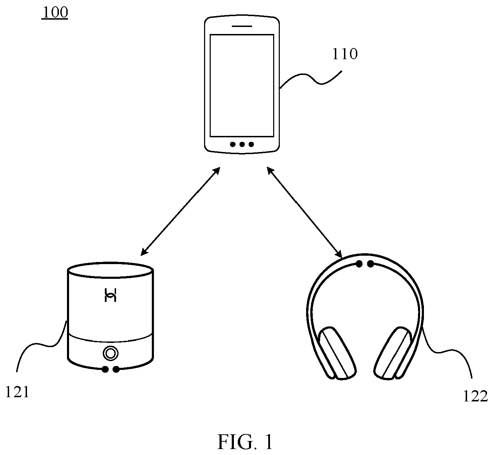

FIG. 1 is a schematic diagram of a communication system according to an embodiment of this application.

As shown in FIG. 1, the communication system 100 includes a first electronic device (for example, a first electronic device 110) and at least one second electronic device (for example, second electronic devices 121 and 122). The first electronic device and each second electronic device may establish a connection by using a short-distance access technology to perform communication. It should be understood that the communication system shown in FIG. 1 is merely an example for description. The communication system 100 may further include another device (for example, a base station). This is not limited in embodiments of this application.

In this embodiment of this application, the first electronic device or the second electronic device may be any device with a wireless transceiver function, including but not limited to a cellular phone (cellular phone), a cordless phone, a session initiation protocol (session initiation protocol, SIP) phone, a smartphone (smartphone), a wireless local loop (wireless local loop, WLL) station, a personal digital assistant (personal digital assistant, PDA), a handheld device having a wireless communication function, a computing device, a vehicle-mounted device, a wearable device, an unmanned aerial vehicle device, an electronic device in the Internet of Things or the Internet of Vehicles, another device connected to a wireless modem, and the like.

Alternatively, the first electronic device or the second electronic device may be an electronic device in virtual reality (virtual reality, VR), an electronic device in augmented reality (augmented reality, AR), an electronic device in industrial control (industrial control) (for example, smart manufacturing), an electronic device in self driving (self driving), an electronic device in remote medical (remote medical), an electronic device in a smart grid (smart grid), an electronic device in a smart city (smart city), an electronic device in a smart home (smart home), and the like.

Alternatively, the first electronic device or the second electronic device may be a personal portable electronic device, a computer peripheral device, and various household or industrial electrical devices, including but not limited to a smartphone (smartphone), a smart screen, a smart air conditioner, a smart alarm clock, a floor sweeping robot, a smart speaker (for example, an artificial intelligence (artificial intelligence, AI) speaker or a high fidelity (high fidelity, HiFi) speaker), a smart sensor, a television (television), a wireless headset, a VR head display, a tablet computer, a monitor, a camera, a portable computer, a laptop computer (laptop computer), a vehicle-mounted computer, a vehicle-mounted terminal (for example, a microphone, a speaker, or the like), a projector, a printer, a keyboard, a mouse, an e-book, a smart wristband (smart wristband), a smart watch (smart watch), smart glasses, a smart car, a smart lathe, a smart monitoring device, and the like.

By way of example and not limitation, the communication system 100 shown in FIG. 1 includes the first electronic device 110, the second electronic device 121, and the second electronic device 122. The first electronic device 110 is a mobile phone, the second electronic device 121 is a smart speaker, and the second electronic device 122 is a headset. It may be understood that the communication system 100 may include any quantity of first electronic devices and any quantity of second electronic devices, and the first electronic device and the second electronic device may be electronic devices in any one of the foregoing forms. Quantities and types of the first electronic device and the second electronic device included in the communication system 100 are not limited in embodiments of this application.

In this embodiment of this application, the first electronic device and the second electronic device may support at least one short-distance access technology, for example, support an SLB access technology and/or an SLE access technology.

One-to-many service transmission (namely, multi-cast or multicast) may be performed between the first electronic device and the at least one second electronic device. To be specific, a piece of service data is sent by the first electronic device and separately received by the at least one second electronic device. Herein, a service sent through multicast may be referred to as a multicast service. The first electronic device may be referred to as a primary device or a central device, and may also be referred to as a sender or a service sender when sending a multicast service. The at least one second electronic device may be referred to as a secondary device or a peripheral device, and may also be referred to as a receiver or a service receiver when receiving a multicast service.

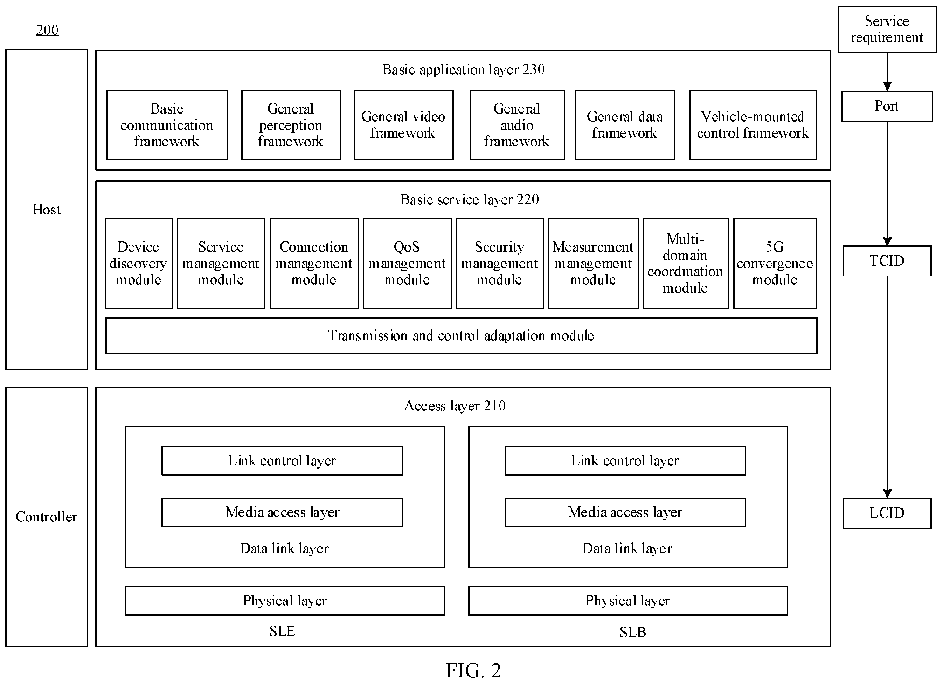

To support a next-generation wireless short-distance communication technology and implement a complete process of a short-distance service, a brand-new protocol framework needs to be established. FIG. 2 is a schematic diagram of a protocol architecture of wireless short-distance communication according to an embodiment of this application. The protocol architecture may be applied to any electronic device that can implement short-distance communication, and may, for example, be applied to the first electronic device and the second electronic device in the communication system 100 shown in FIG. 1.

As shown in FIG. 2, the protocol architecture 200 includes but is not limited to a host (host) and a controller (controller). The host is an upper-layer protocol of the controller. The host includes a basic application layer 230 and a basic service layer 220. The controller may also be referred to as an access layer 210, and is a bottom layer of the protocol architecture.

As shown in FIG. 2, in other words, the protocol architecture 200 may include the access layer 210, the basic service layer 220, and the basic application layer 230 from bottom to top. The following describes in detail the access layer 210, the basic service layer 220, and the basic application layer 230.

The access layer 210 is mainly responsible for processing a bottom-layer logical link, for example, establishing, reconfiguring, and deleting the logical link, to undertake a service requirement (for example, reliable data and real-time data) of the basic service layer 220. The logical link is configured to transmit a service between two electronic devices. The access layer 210 can support a plurality of access technologies, including but not limited to an access technology of a sparklink basic (sparklink basic, SLB) short-distance wireless communication system, an access technology of a sparklink low energy (sparklink low energy, SLE) short-distance wireless communication system, and another access technology, for example, a Bluetooth low energy (Bluetooth low energy, BLE) technology, another future sparklink alliance access technology, and the like. **In** this embodiment of this application, only an SLB access technology and an SLE access technology are used as an example to briefly describe an architecture of the access layer 210.

As shown in FIG. 2, the access layer 210 may further include a data link layer and a physical layer. The data link layer implements functions such as resource management, access control, data segmentation, cascading, and reordering to ensure reliable data transmission. The physical layer uses transmission media to provide physical connections for the data link layer to implement transparent transmission of bitstreams. In some embodiments, the data link layer may include a link control layer and a media access layer. The link control layer mainly exchanges a link control protocol (link control protocol, LCP) on a control link based on a link established between nodes, to implement functions such as physical/logical link management and device behavior control. The media access layer is responsible for allocating radio resources and providing data transmission services for the link control layer. Each sublayer in the access layer 210 implements functions of the sublayer to support the access layer 210.

In this embodiment of this application, for an electronic device that supports two access technologies, such as SLB and SLE, the access layer of the electronic device may separately implement SLB access and SLE access by using different modules, or may implement SLB access and SLE access by using a same module. This is not limited herein. The SLB access technology is mainly responsible for transmitting large-bandwidth, high-rate, and high-power services (such as video playback services). The SLE access technology is mainly responsible for transmitting low-bandwidth, low-rate, and low-power services (such as audio playback services). It may be understood that the names of the two sparklink alliance access technologies described above are merely examples, and should not be understood as a limitation on this embodiment of this application. In another embodiment or in a future architecture, SLB and SLE may alternatively use other names.

A logical channel (logical channel, LC) is established at the access layer 210. The logical channel is a basis for establishing a transmission channel (transmission channel, TC) at the basic service layer 220 at the upper layer. The transmission channel of the basic service layer 220 is available only after the logical channel is successfully established. A plurality of transmission channels may be mapped to the logical channel. To distinguish the logical channel, a logical channel identifier (logical channel identifier, LCID) is defined, to uniquely identify the logical channel.

The basic service layer 220 is a protocol layer located between the access layer 210 and the basic application layer 230, includes a plurality of functional units, and is unbound from a service to implement a common functional process. Specifically, the basic service layer 220 may be responsible for creating, adding, deleting, and releasing a transmission channel, and controlling a logical link (for example, selecting an access technology), to undertake a service requirement (for example, traffic, rate, voice quality, and resolution) of the basic application layer 230. A design objective of the basic service layer 220 is to be compatible with a plurality of access layer technologies, for example, compatible with the SLB and SLE access technologies described above, and retain a capability of being compatible with more future access technologies.

The basic service layer 220 may include a plurality of modules or functional units that implement the foregoing design objectives, including but not limited to a device discovery module, a service management module, a connection management module, a quality of service (quality of service, QoS) management module, a security management module, a measurement management module, a multi-domain coordination module, a 5G convergence module, and a transmission and control adaptation module.

The device discovery module is configured to discover a device when not connected to the device. Specifically, the device discovery module is configured to broadcast a capability of the device discovery module, and scan a peer device that meets a service requirement.

The service management module is configured to discover and operate services on the device. Specifically, the service management module is configured to define a data structure, and provide, for a service function set of the basic application layer, a data module for controlling sending of instructions and small data.

The connection management module is configured to manage a transmission channel, including creating, adding, deleting, and releasing a transmission channel. Specifically, the connection management module is configured to allow the basic application layer to apply for a transmission channel based on a service type (business identifier, BID) and a QoS capability of a service to transmit a data flow, manage establishment and release of the transmission channel for the service, maintain a mapping relationship between the transmission channel and a logical link, and the like. This is described in detail later, and is not described in detail herein.

The QoS management module is configured to manage and negotiate transmission QoS. Specifically, the QoS management module is configured to manage a QoS request static table of the service, and negotiate QoS with the peer device.

The security management module is responsible for a secure connection of the basic service layer. The measurement management module is configured to configure measurement and scheduling at a bottom layer to perform power control and the like.

In a scenario in which a plurality of domains (subnets) exist, the multi-domain coordination module implements information exchange between the domains and implements interference avoidance between the domains, to balance a load.

The 5G convergence module is configured to establish a channel with a cellular 5G remote management capability, and implement, by using an authentication and identification mechanism, a device with a cellular 5G remote control function.

The transmission and control adaptation module is configured to transmit data, and implement functions such as segmentation and reassembly, flow control, and offloading and aggregation on data on a transmission channel.

The transmission channel (transmission channel, TC) is established at the basic service layer 220, to transmit service plane data and control plane data. To distinguish the transmission channel, a transmission channel identifier (transmission channel identifier, TCID) is defined, to uniquely identify the transmission channel. A plurality of ports (ports) may be mapped to the transmission channel. A plurality of transmission channels may be mapped to a same logical channel.

Transmission of the basic service layer 220 may be classified into control plane transmission and service plane transmission. Correspondingly, the transmission channel of the basic service layer 220 may include a control channel and a service channel. The control channel is configured to transmit the control plane data, and the service channel is configured to transmit the service plane data. Establishment of the control channel is a basis for establishing the service channel between electronic devices. In the following embodiments of this application, a process related to the service channel is mainly described in detail. The process related to the service channel is performed based on establishment of the control channel. A process related to establishment of the control channel is not excessively described in this application.

The service channel may include a unicast service channel, a multicast service channel, and a broadcast service channel. The unicast service channel is a service channel for transmitting a unicast service, and can implement point-to-point transmission. The multicast service channel is a service channel for transmitting a multicast service, and can implement point-to-group transmission. The multicast service channel has an acknowledgment (ack) at a bottom layer, and has specific bottom layer reliability. The broadcast service channel is a service channel for transmitting a broadcast service, and can implement connectionless transmission. The broadcast service channel does not have an acknowledgment (ack) at a bottom layer, and reliability needs to be ensured through a plurality of transmissions. In the following embodiments of this application, a process related to establishment of the multicast service channel is mainly described in detail.

In addition, depending on whether the transmission channel is established by default, the transmission channel at the basic service layer 220 may include a default transmission channel and a non-default transmission channel. Generally, the default transmission channel is automatically established after a default logical link at the bottom layer is established. The non-default transmission channel is established based on service requirements.

The basic application layer 230 is mainly responsible for undertaking different service requirements of an upper-layer application (application, APP), and completing routing of data to the basic service layer 220. Based on different classifications of services, the basic application layer 230 may include a plurality of different service function sets (which may also be referred to as service modules or service frameworks). The different service function sets include classified service data processing.

For example, as shown in FIG. 2, the application layer 230 may include a basic communication framework, a general perception framework, a general audio framework, a general data framework, a vehicle-mounted control framework, and the like. The basic communication framework includes processing of communication data. The general perception framework includes processing of perception data. The general audio framework includes processing of audio data, such as encoding and decoding. The general video framework includes processing of video data. The general data framework includes processing of file data, such as encryption and compression. The vehicle-mounted control framework includes processing of vehicle-mounted data. The different service function sets may be distinguished based on the business identifier (business identifier, BID).

A channel at the basic application layer 230 is a port (port), and may undertake a service requirement of an application. A plurality of ports may be mapped to a same transmission channel. In this embodiment of this application, the basic service layer 220 and the basic application layer 230 may be collectively referred to as an upper layer protocol or a host protocol. The host protocol can adapt to the access layer 210 at the bottom layer and support requirements of different services. The upper layer can use a same host protocol regardless of the access technology supported by the access layer. That is, the upper layer is compatible with a plurality of access technologies. Specifically, the Host protocol can be provided for the service module to initiate a service request, and transmit and control service data.

To implement complete service transmission, channels at different layers in the protocol architecture 200 have a mapping relationship. Specifically, the port at the basic application layer 230 has a mapping relationship with the transmission channel at the basic service layer 220, and a plurality of ports may be mapped to a same transmission channel. The transmission channel at the basic service layer 220 has a mapping relationship with the logical channel at the access layer 210, and a plurality of transmission channels may be mapped to a same logical channel. One logical channel corresponds to one access technology. When service data needs to be transmitted, the basic application layer 230 transmits the data by using a data flow (flow) to the basic service layer 220 through a port, and the basic service layer 220 selects one or more transmission channels for transmission. Because the transmission channel has the mapping relationship with the logical channel, correspondingly after receiving the data, the access layer 210 continues transmission on the corresponding logical channel.

In some embodiments, a channel in the protocol architecture 200 may transmit multicast service data (for example, an audio multicast service), to support a multicast service between an electronic device (which may be referred to as a primary device or a central device, for example, the first electronic device 110 in FIG. 1) and a plurality of electronic devices (which may be referred to as a secondary device or a peripheral device, for example, the second electronic devices 121 and 122 in FIG. 1). In this embodiment of this application, the transmission channel that is at the basic service layer 220 and that is configured to transmit the multicast service may be referred to as the multicast service channel. Specifically, the multicast service channel may support service transmission of one primary device to a plurality of secondary devices, and a piece of data is sent by the primary device and separately received by the plurality of secondary devices. If the secondary devices need to send data to the primary device, the secondary devices may separately send data to the primary device.

In this embodiment of this application, the basic application layer includes a device group management protocol. The protocol may maintain a device group concept. For example, a plurality of secondary devices receiving a multicast service may be used as one device group. The basic application layer, the basic service layer, and the access layer of the electronic device may identify device information (for example, a device identifier and/or a device address) of the device, to perform interaction between an upper layer and a lower layer. In addition, the device group management protocol may manage devices in a group to perform same operations, for example, creating a multicast service channel, managing volumes of all devices, processing a delay, and the like.

This embodiment of this application relates to a process related to a multicast service channel, mainly including: a process of creating a multicast service channel, a process in which a member joins multicast, a process in which a member leaves multicast, and a process of releasing a multicast service channel.

Specifically, the process of creating a multicast service channel is a process of creating a new channel for transmitting a multicast service. The process in which a member joins multicast is a process in which a new device is added, based on an existing multicast service channel, to a device group that receives a multicast service. The process in which a member leaves multicast is a process in which a new device is deleted, based on an existing multicast service channel, from a device group that receives a multicast service. The process of releasing a multicast service channel is a process of releasing an existing multicast service channel.

The following uses the first electronic device and the at least one second electronic device as an example. With reference to the protocol architecture shown in FIG. 2, the foregoing processes are described in detail through interaction between the first electronic device and the at least one second electronic device (two second electronic devices are used as an example in the following embodiment) and between layers inside each electronic device. A module used at a basic service layer of the first electronic device and the at least one second electronic device is a connection management module.

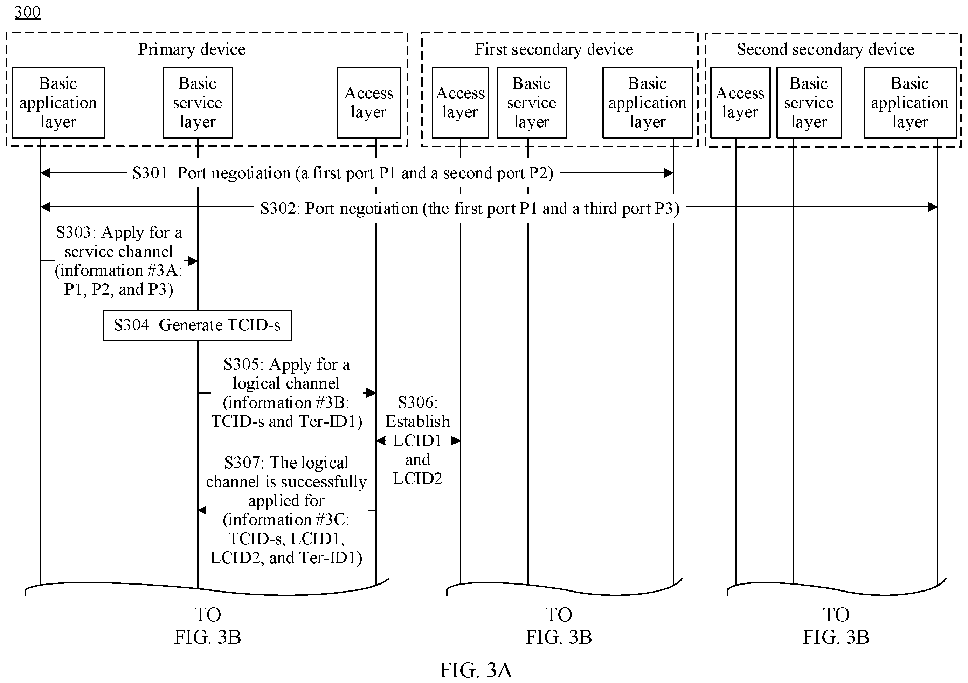

FIG. 3A to FIG. 3C show a schematic flowchart of creating a multicast service channel according to an embodiment of this application.

In an implementation process of this process, a primary device, a first secondary device, and a second secondary device are used. The primary device is an example of the first electronic device. The first secondary device and the second secondary device are examples of the second electronic device. The primary device, the first secondary device, and the second secondary device each have the protocol architecture 200 shown in FIG. 2, that is, each include a basic application layer, a basic service layer, and an access layer.

When the primary device needs to send a multicast service to the first secondary device and the second secondary device, for example, the primary device plays mono audio by using the first secondary device and the second secondary device (for example, the primary device is a mobile phone, and the first secondary device and the second secondary device are left and right earphones), or the primary device performs a group call with the first secondary device and the second secondary device (for example, the primary device, the first secondary device, and the second secondary device are all mobile phones), the process shown in FIG. 3A to FIG. 3C may be performed between the primary device and both of the first secondary device and the second secondary device. A method 300 shown in FIG. 3A to FIG. 3C includes steps S301 to S324. The following describes the steps in detail with reference to the accompanying drawings.

S301: A basic application layer of the primary device performs port negotiation with a basic application layer of the first secondary device.

S302: The basic application layer of the primary device performs port negotiation with a basic application layer of the second secondary device.

Step S301 is similar to step S302, except that objects performing port negotiation with the primary device are different. In step S301, data used in the negotiation process may be transmitted on a default service channel established between the primary device and the first secondary device. In step S302, data used in the negotiation process may be transmitted on a default service channel established between the primary device and the second secondary device. The default service channel is automatically established by a service management module at the basic service layer after a control channel is established. The default service channel is configured to transmit service management data. Herein, the default service channel between the primary device and the first secondary device and the default service channel between the primary device and the second secondary device are unicast service channels.

In some embodiments, in steps S301 and S302, the basic application layer of the primary device may further perform service negotiation, application quality of service (quality of service, QoS) negotiation, and the like with the basic application layer of the first secondary device and the basic application layer of the second secondary device. For example, a service type (the service type in this embodiment of this application is a multicast service) is negotiated through the service negotiation process, and QoS that needs to be satisfied for service transmission is negotiated through the QoS negotiation process. Service negotiation, QoS negotiation, port negotiation, and the like between the primary device and both of the first secondary device and the second secondary device may be uniformly transmitted on the default service channel by using a data template provided by the service management module based on a service framework at the basic application layer. In this embodiment of this application, a result of port negotiation performed by the primary device and both of the first secondary device and the second secondary device is mainly concerned. Therefore, other negotiation processes such as service negotiation and QoS negotiation are not excessively described herein.

For example, a result of negotiation between the primary device and the first secondary device may be that the primary device uses a first port (for example, represented by port1 (which may be referred to as P1 for short)), and the first secondary device uses a second port (for example, represented by port2 (which may be referred to as P2 for short)). A result of negotiation between the primary device and the second secondary device may be that the primary device uses the first port (port1), and the second secondary device uses a third port (for example, represented by port3 (which may be referred to as P3 for short)). Correspondingly, the first port port1 has a mapping relationship with the second port port2. The basic application layer of the primary device and the basic application layer of the first secondary device need to maintain the mapping relationship between the first port and the second port. The first port port1 has a mapping relationship with the third port port3. The basic application layer of the primary device and the basic application layer of the second secondary device need to maintain the mapping relationship between the first port and the third port.

In this embodiment of this application, the second port used by the first secondary device and the third port used by the second secondary device may have a same identifier or different identifiers. An identifier of the second port and an identifier of the third port are specifically allocated by the first secondary device and the second secondary device respectively, and the primary device does not intervene. The primary device may distinguish the ports based on device information of the secondary devices. In other words, there is a correspondence between each port and device information of a device to which the port belongs. The correspondence may be established by the primary device. For example, the primary device obtains the device information of the secondary device in advance, and obtains port information in a port negotiation process. In this way, the correspondence between the port and the device information of the device to which the port belongs can be established. Alternatively, the correspondence may be established by the secondary device. For example, in a port negotiation process, the secondary device sends device information of the secondary device in addition to port information to the primary device. In this way, the primary device may alternatively establish, based on the obtained information, the correspondence between the port and the device information of the device to which the port belongs. In this embodiment of this application, the device information of the secondary device may include a device identifier and/or a device address.

It may be understood that the primary device needs to obtain a service receiver before initiating a service. Therefore, before steps S301 and S302 are performed, the primary device needs to obtain, in advance, information (for example, a device identifier and/or a device address) of a device that receives a multicast service. In this way, when the method 300 is performed, the primary device may separately perform port negotiation with the secondary device that needs to receive the multicast service.

An execution sequence of step S301 and step S302 is not specifically limited in embodiments of this application. The two steps may be performed successively, or may be performed simultaneously. In addition, in this embodiment of this application, only two secondary devices are used as an example to describe a multicast service channel establishment process. In another embodiment, more or less secondary devices may alternatively participate. In this case, the primary device needs to separately perform port negotiation with each secondary device. A negotiation process is similar to steps S301 and S302, and is not described in detail herein.

S303: The basic application layer of the primary device applies to a basic service layer of the primary device for a service channel.

In this step, the basic application layer of the primary device applies to a connection management module at the basic service layer for a service channel for the first port and the second port and for the first port and the third port.

Specifically, in step S303, the basic application layer of the primary device may send information #3A to the connection management module. The information #3A is used to apply for a service channel for a port (for example, the first port, the second port, and the third port that are negotiated). The information #3A may include one or more of the following: service channel type indication information, port information, device information of a secondary device, a quality of service (quality of service, QoS) parameter, and the like.

The service channel type indication information indicates a type of the service channel that is applied for. The type of the service channel may include a unicast service channel, a multicast service channel, and a broadcast service channel. In this embodiment of this application, in a process of creating a multicast service channel, the service channel type indication information indicates that the service channel that is applied for is a multicast service channel.

The port information indicates a port mapped to a service channel, that is, the port obtained through negotiation in steps S301 and S302. In an example in which two secondary devices are used as an example, the port information may include an identifier of the first port, the identifier of the second port, and the identifier of the third port. The first port is configured to be mapped to a service channel on a primary device side, the second port is configured to be mapped to a service channel on a first secondary device side, and the third port is configured to be mapped to a service channel on a second secondary device side.

In some embodiments, the port information may be transmitted in a form of a member port list (portlist). The member port list includes a port used by each secondary device to receive a multicast service, that is, a port determined by each secondary device in a port negotiation process. In this way, when the primary device needs to establish connections to a plurality of secondary devices, the basic application layer of the primary device does not need to send the port information to the basic service layer for a plurality of times. This can simplify a process and reduce consumption of transmission resources.

In some other embodiments, the port information may alternatively include an identifier of a port used by a secondary device that is the first one connected to the primary device to create a multicast service channel and the identifier of the port of the primary device. For example, if the first secondary device is the secondary device that is the first one establishing a connection to the primary device when the multicast service channel is created, the information #3A may include the identifier of the first port and the identifier of the second port. When the primary device establishes a connection to another secondary device, the basic application layer of the primary device may further send, to the basic service layer, information of ports used by the primary device and the another secondary device, to establish a channel for transmitting a multicast service between the primary device and the another secondary device. In this way, the primary device may perform a subsequent process without waiting for all secondary devices to complete port negotiation with the primary device, but may flexibly perform a process of establishing the connections to the plurality of secondary devices.

The device information of the secondary device indicates a secondary device that receives a multicast service, that is, a secondary device that performs port negotiation with the primary device. In an example in which two secondary devices are used as an example, the device information of the secondary device includes device information of the first secondary device and device information of the second secondary device. There is a correspondence between the device information of the first secondary device and the second port used by the first secondary device, and there is a correspondence between the device information of the second secondary device and the third port used by the second secondary device.

In this embodiment of this application, the device information of the secondary device may include a device identifier and/or a device address of the secondary device. Correspondingly, the device information of the first secondary device may include a device identifier and/or a device address of the first secondary device, and the device information of the second secondary device may include a device identifier and/or a device address of the second secondary device.

In some embodiments, the device information of the secondary device may be transmitted in a form of a member list. The member list includes a device identifier and/or a device address of each secondary device configured to receive a multicast service. In this way, when the primary device needs to establish connections to a plurality of secondary devices, the basic application layer of the primary device does not need to send the device information of the secondary device to the basic service layer for a plurality of times. This can simplify a process and reduce consumption of transmission resources.

In some other embodiments, the device information of the secondary device may alternatively include device information of a secondary device that is the first one connected to the primary device to create a multicast service channel. For example, if the first secondary device is the secondary device that is the first one establishing a connection to the primary device when the multicast service channel is created, the information #3A may include the device information of the first secondary device. When the primary device establishes a connection to another secondary device, the basic application layer of the primary device may further send, to the basic service layer, device information of the another secondary device, to establish a channel for transmitting a multicast service between the primary device and the another secondary device. In this way, the primary device may flexibly perform a process of establishing the connections to the plurality of secondary devices.

It may be understood that content included in the device information of the secondary device may correspond to content included in the port information. For example, if the port information includes the member port list, the device information of the secondary device includes the member list. For another example, if the port information includes the identifier of the first port and the identifier of the second port, the device information of the secondary device includes the device information of the first secondary device. Certainly, device information of all secondary devices may be obtained in advance before the method 300 is performed. Therefore, in step S303, the device information of the secondary device may include the member list, and the port information includes the identifier of the first port and the identifier of the second port. In the process shown in FIG. 3A to FIG. 3C, an example in which the port information includes the member port list and the device information of the secondary device includes the member port list is used for description.

The QoS parameter indicates a requirement of a multicast service for a service channel. The QoS parameter may include a sparklink QoS identifier (sparklink QoS identifier, SLQI) and another parameter for determining service QoS. The SLQI indicates a common parameter related to quality of service, for example, a transmission rate, a delay, a packet loss rate, a communication period, a maximum packet size, or the like. The another parameter for determining service QoS indicates a special parameter related to quality of service, for example, an audio sampling rate, a bit depth, or the like.

In some embodiments, the information #3A may further include an additional parameter, for example, transmission mode indication information, dedicated bearer indication information, and the like.

The transmission mode indication information indicates a transmission mode of data. The transmission mode may include a basic mode, a transparent transmission mode, a flow mode, a reliable mode, and the like.

The basic mode is a default transmission mode. When transmission is performed in the basic mode, packet fragmentation, packet aggregation, retransmission, and flow control are not performed.

The transparent transmission mode means that service channels and logical channels are in one-to-one mapping. When transmission is performed in the transparent transmission mode, packet fragmentation and packet aggregation are not performed, and transmission and control module packet headers are not added.

When transmission is performed in the flow mode, data needs to be unidirectionally synchronized in real time. A transmitter has a flush timeout (flush timeout) value to control the refresh of packets that are not sent.

The reliable mode has a reliable transmission mechanism. Data is retransmitted at a transmission control layer. When nack is received from a peer end or a timer expires, the data is retransmitted. Processing such as reassembly and aggregation is not performed on the retransmitted packet. Instead, the entire packet is retransmitted. When a quantity of retransmissions reaches the maximum, the corresponding service channel needs to be disconnected, and a report is sent to the upper layer.

The dedicated bearer indication information indicates whether the multicast service channel is dedicated to transmitting data of a service. The multicast service channel dedicated to a specific service is not multiplexed to transmit other multicast services in other subsequent processes.

In this embodiment of this application, if the information #3A includes the additional parameter, the connection management module may set a related parameter based on the additional parameter in the information #3A. If the information #3A does not include the additional parameter, the connection management module may self-set a related parameter, or set a related parameter according to a preset rule. This is not limited in embodiments of this application.

It should be noted that step S303 may be performed after the primary device completes a port negotiation process with all secondary devices. In this way, the information #3A may include a member port list and a member list. Certainly, step S303 may alternatively be performed after the primary device completes a port negotiation process with a secondary device. In this way, the information #3A may include a port negotiated between the primary device and the secondary device, and a member list (the device information of the secondary device is obtained in advance before the method 300 is performed). The primary device may first apply for a service channel for a negotiated port. After the primary device subsequently completes port negotiation with another secondary device, the basic application layer of the primary device may apply to the basic service layer for a service channel again for another negotiated port. That is, a process in which a member joins multicast is performed. The following describes in detail with reference to the accompanying drawings, and details are not described herein.

In the foregoing solution, the primary device applies for service channels for all ports after completing port negotiation with all secondary devices. This simplifies the process and facilitates management on the primary device side. This solution is used as an example for description in the following embodiments. However, it may be understood that the following solution may also be used in another embodiment, and details are not described herein again.

S304: The basic service layer of the primary device generates an identifier of the first service channel.

Herein, the first service channel is a service channel on the primary device side. For ease of description, the identifier of the first service channel may be represented by TCID-s. During actual application, a service channel for transmitting data between the primary device and the secondary device includes a service channel on the primary device side and a service channel on the secondary device side. An identifier of the service channel on the primary device side is different from an identifier of the service channel on the secondary device side.

S305: The basic service layer of the primary device applies to an access layer of the primary device for a logical channel.

In this step, the basic service layer of the primary device applies to the access layer for the logical channel for the first service channel.

Specifically, in step S305, the basic service layer (specifically, the connection management module) of the primary device may send information #3B to the access layer. The information #3B is used to apply to the access layer for the logical channel for the first service channel. Alternatively, it may be understood that the information #3B indicates to establish a bottom-layer logical link between the primary device and the first secondary device.

The information #3B may include the identifier of the first service channel, logical channel type indication information, quality of service QoS, device information of the first secondary device, and the like.

The identifier TCID-s of the first service channel is used by the access layer to establish a mapping relationship between the first service channel and the logical channel.

The logical channel type indication information indicates a type of the logical channel that is applied for. The type of the logical channel may include a unicast logical channel, a multicast logical channel, and a broadcast logical channel. In this embodiment of this application, in a process of creating a multicast service channel, the logical channel type indication information indicates that the logical channel that is applied for is a multicast logical channel.

The QoS is used by the access layer to select a logical channel or configure a related parameter of the logical channel.

The device information of the first secondary device indicates the first secondary device that establishes the logical link with the primary device.

In some embodiments, the information #3B may include only the device information of the first secondary device, and does not necessarily include device information of another secondary device. In some other embodiments, in addition to the device information of the first secondary device, the information #3B further needs to include device information of another secondary device.

In other words, in step S305, the information #3B may include device information of a specific member that receives a multicast service, or may include device information (for example, including a member list) of all members that receive a multicast service. For example, when the logical channel selected by the basic service layer of the primary device corresponds to an SLB access technology, the information #3B may include the device information of the first secondary device. For another example, when the logical channel selected by the basic service layer of the primary device corresponds to an SLE access technology, because SLE needs to allocate an uplink physical resource to each secondary device, the information #3B needs to include device information of all secondary devices. As shown in the example in FIG. 3A to FIG. 3C, the information #3B needs to include the device information of the first secondary device and the device information of the second secondary device.

Whether the information #3B includes a single member or a member list may depend on the selected access technology. The support of the SLB access technology and the SLE access technology for a multicast technology is briefly described below, and details are not described herein.

In some embodiments, the information #3B may further include an additional parameter, for example, dedicated bearer indication information. The dedicated bearer indication information indicates whether a service channel exclusively occupies a logical channel. Herein, the access layer may select the logical channel or configure the related parameter of the logical channel based on the dedicated bearer indication information.

In step S305, the basic service layer of the primary device applies to the access layer of the primary device for the logical channel, and this may be understood in a broad sense as applying for a channel for transmitting data at the access layer for the first service channel. In this embodiment of this application, data sent by the primary device to the secondary device may be referred to as downlink data, and data sent by the secondary device to the primary device may be referred to as uplink data. Specifically, the basic service layer may apply to the access layer for a logical channel group. The logical channel group includes a logical channel for transmitting the downlink data and a logical channel for transmitting the uplink data. When there are a plurality of secondary devices, the logical channel group includes one logical channel for transmitting the downlink data and a plurality of logical channels for transmitting the uplink data. The primary device sends multicast service data to the plurality of secondary devices on the logical channel for transmitting the downlink data, and receives, on the logical channel for transmitting uplink data between the primary device and each secondary device, the data sent by the secondary device. In some embodiments, the logical channel group may be collectively referred to as the multicast logical channel.

S306: Establish a first logical channel and a second logical channel between the access layer of the primary device and an access layer of the first secondary device.

The first logical channel is configured to transmit data that is sent by the primary device to the first secondary device, and the second logical channel is configured to transmit data that is sent by the first secondary device to the primary device. In practice, the first logical channel is a logical channel for transmitting downlink data sent by the primary device to each secondary device. For ease of understanding, an identifier of the first logical channel may be LCID1, and is used to identify the first logical channel. An identifier of the second logical channel may be LCID2, and is used to identify the second logical channel.

In this step, the access layer of the primary device may further establish the mapping relationship between the first service channel and the logical channel. Specifically, the first logical channel LCID1 has a mapping relationship with the first service channel TCID-s, and the first logical channel LCID1 may receive data from the first service channel TCID-s. The second logical channel LCID2 has a mapping relationship with the first service channel TCID-s, and the second logical channel LCID2 may send data to the first service channel TCID-s. It may be understood that the bottom-layer logical link between the primary device and the first secondary device is established in step S306.

S307: The access layer of the primary device feeds back, to the basic service layer of the primary device, that the logical channel is successfully applied for.

Specifically, in this step, the access layer of the primary device may send information #3C to the basic service layer. The information #3C indicates that the logical channel is successfully applied for, or may indicate that the first service channel successfully establishes the mapping relationship with the first logical channel and the second logical channel. In practice, it may be understood that the information #3C indicates that establishment of the logical link between the primary device and the first secondary device is completed.

The information #3C may include the identifier of the first service channel, the identifier of the first logical channel, the identifier of the second logical channel, and the device information of the first secondary device. For example, the identifier of the first service channel is TCID-s. The identifier of the first logical channel and the identifier of the second logical channel are LCID1 and LCID2 respectively. The device information of the first secondary device includes a device identifier and/or a device address (represented by Ter-ID1 below) of the first secondary device.

After receiving the mapping relationship between the first service channel and the logical channel, the basic service layer of the primary device considers that the bottom-layer logical link can be used for transmission.

S308: The basic service layer of the primary device sends a transmission channel creation request to a basic service layer of the first secondary device.

The transmission channel creation request is used to notify the first secondary device of establishment of the mapping relationships between the first service channel and both of the first logical channel and the second logical channel on the primary device side, and also indicates the first secondary device to establish a second service channel. The second service channel is a service channel on the first secondary device side, and is configured to receive a multicast service that is sent by the primary device on the first service channel.

Specifically, in this step, the basic service layer of the primary device may send information #3D to the basic service layer of the first secondary device. The information #3D indicates that the primary device has established a mapping relationship between a local service channel and a logical channel, and also indicates the first secondary device to establish a mapping relationship between a peer service channel and a logical channel.

The information #3D may include port information used by the first secondary device, the identifier of the first service channel, the identifier of the first logical channel, and the identifier of the second logical channel. For example, the port information used by the first secondary device includes an identifier P2 of the second port. The identifier of the first service channel is TCID-s, the identifier of the first logical channel is LCID1, and the identifier of the second logical channel is LCID2.

S309: The basic service layer of the first secondary device generates an identifier of the second service channel.

Herein, the second service channel is a service channel on the first secondary device side. For ease of description, the identifier of the second service channel may be represented by TCID-d1.

After step S309 is completed, the first secondary device may consider that the basic service layers of the two devices (the first secondary device and the primary device) have established a connection between the first service channel TCID-s and the second service channel TCID-d1, and may determine a mapping relationship between the first service channel TCID-s and the second service channel TCID-d1. The first secondary device may further establish a mapping relationship between the second service channel and a logical channel, and specifically establish a mapping relationship between the second service channel TCID-d1 and the first logical channel LCID1 and a mapping relationship between the second service channel TCID-d1 and the second logical channel LCID2.

S310: The basic service layer of the first secondary device sends port information and service channel information of the first secondary device to the basic application layer of the first secondary device, to perform port mapping.

Specifically, in this step, the basic service layer of the first secondary device may send information #3E to the basic application layer. The information #3E indicates a mapping relationship between a service channel and a port on the first secondary device side. The basic application layer of the first secondary device performs mapping of the second port based on the information #3E.

The information #3E may include the identifier of the second port used by the first secondary device and the identifier of the second service channel, and is used by the basic application layer of the first secondary device to establish a mapping relationship between the second port and the second service channel. For example, the identifier of the second port is P2, and the identifier of the second service channel is TCID-d1.

S311: The basic application layer of the first secondary device feeds back port mapping success to the basic service layer of the first secondary device.

S312: The basic service layer of the first secondary device sends a transmission channel creation response to the basic service layer of the primary device.

The transmission channel creation response is used to notify the primary device that establishment of the second service channel on the first secondary device side is completed.

Specifically, in this step, the basic service layer of the first secondary device may send information #3F to the basic service layer of the primary device. The information #3F indicates that establishment of the second service channel on the first secondary device side is completed and the second service channel may be configured to transmit service data.

The information #3F may include the identifier TCID-d1 of the second service channel. Optionally, the information #3F may further include the identifier LCID1 of the first logical channel and/or the identifier LCID2 of the second logical channel.

It should be noted that in step S308 and step S312, data exchanged between the basic service layer of the primary device and the basic service layer of the first secondary device may be transmitted on a control channel established between the primary device and the first secondary device. In addition, signaling carried in step S308 has a correspondence with signaling carried in step S312. For example, the signaling is sent by using a request (request) of an identifier, and a response (response) should be replied with by using the same identifier. For example, the transmission channel creation request sent in step S308 and the transmission channel creation response sent in step S312 should carry a same identifier. In this way, the primary device may determine, based on information of the identifier, that the signaling received in step S312 is the response to the request sent in step S308. It should be understood that request signaling and response signaling in the embodiment shown in FIG. 3A to FIG. 3C and other embodiments described below are also applicable to the foregoing rules. For brevity, details are not described one by one again.

After step S312 is completed, the primary device may consider that the basic service layers of the two electronic devices (the primary device and the first secondary device) have established the connection between the first service channel TCID-s and the second service channel TCID-d1, and may determine and maintain the mapping relationship between the first service channel TCID-s and the second service channel TCID-d1.

S313: The basic service layer of the primary device notifies the basic application layer of the primary device that the service channel is successfully applied for.

Specifically, in this step, the basic service layer of the primary device may send information #3G to the basic application layer. The information #3G indicates a mapping relationship between the first service channel TCID-s and the first port P1 of the primary device.

The information #3G may include port information used by the primary device, for example, the identifier P1 of the first port, the identifier TCID-s of the first service channel, the device information of the first secondary device, and the like. The device information of the first secondary device includes the device identifier and/or the device address (represented by Ter-ID1) of the first secondary device.

So far, the primary device successfully applies for a service channel for the first port P1 and the second port P2, and establishes a service transmission channel between the primary device and the first secondary device. The following mapping relationships are established between channels of layers of the primary device and the first secondary device:
the mapping relationship between the first port P1 and the first service channel TCID-s;
the mapping relationship between the first service channel TCID-s and the first logical channel LCID1;
the mapping relationship between the first service channel TCID-s and the second logical channel LCID2;
the mapping relationship between the second port P2 and the second service channel TCID-d1;
the mapping relationship between the second service channel TCID-d1 and the first logical channel LCID1;
the mapping relationship between the second service channel TCID-d1 and the second logical channel LCID2;
the mapping relationship between the first port P1 and the second port P2; and
the mapping relationship between the first service channel TCID-s and the second service channel TCID-d1.

It should be noted that the first logical channel LCID1 and the second logical channel LCID2 belong to a same logical channel group.

S314: The basic service layer of the primary device determines that the first secondary device completes preparation.

In other words, the basic service layer of the primary device determines that establishment of a data path between the primary device and the first secondary device is completed.

Step S314 is an optional step. During actual application, the basic service layer of the primary device may determine that the first secondary device completes preparation when receiving the transmission channel creation response sent in step S312, or when feeding back, to the basic application layer, that the service channel is successfully applied for.

Then, the primary device may establish a data path with the second secondary device.

S315: The basic service layer of the primary device applies to the access layer of the primary device for reconfiguration of the logical channel.

In this step, the basic service layer of the primary device applies to the access layer for reconfiguration of the logical channel group applied for in step S307. Because the logical channel has been successfully established between the primary device and the first secondary device in step S307, when a new member joins multicast, the primary device also needs to establish a logical channel with the new member. In this way, multicast members corresponding to the logical channel group change. Therefore, the logical channel group needs to be reconfigured.

Specifically, in step S315, the basic service layer (specifically, the connection management module) of the primary device may send information #3H to the access layer. The information #3H is used to apply to the access layer for reconfiguration of the logical channel. Alternatively, it may be understood that the information #3H indicates to establish a bottom-layer logical link between the primary device and the second secondary device.

The information #3H may include the device information of the second secondary device, at least one of the following: the identifier TCID-s of the first service channel and the identifier LCID1 of the first logical channel, and the like.

The identifier of the first service channel or the identifier of the first logical channel or both indicate a reconfigured logical channel group.

The device information of the second secondary device indicates the second secondary device that establishes the logical link with the primary device. The device information of the second secondary device may include a device identifier and/or a device address (represented by Ter-ID2 below) of the second secondary device.

In some embodiments, the information #3H may include only the device information of the second secondary device, and does not necessarily include device information of another secondary device. In some other embodiments, in addition to the device information of the second secondary device, the information #3H further needs to include device information of another secondary device. In other words, the information #3H may include device information of a specific member that receives a multicast service, or may include device information (for example, including a member list) of all members that receive a multicast service.

S316: Establish a first logical channel and a third logical channel between the access layer of the primary device and an access layer of the second secondary device.

The first logical channel LCID1 is configured to transmit data that is sent by the primary device to the second secondary device, and the third logical channel is configured to transmit data that is sent by the second secondary device to the primary device. For ease of understanding, an identifier of the third logical channel may be LCID3, and is used to identify the third logical channel.

In step S306, the access layer of the primary device has established the mapping relationship between the first logical channel LCID1 and the first service channel TCID-s. Therefore, in step S316, the access layer of the primary device may further establish a mapping relationship between the third logical channel LCID3 and the first service channel TCID-s. The third logical channel LCID3 may send data to the first service channel TCID-s.

It may be understood that the bottom-layer logical link between the primary device and the second secondary device is established in this step.

S317: The access layer of the primary device feeds back, to the basic service layer of the primary device, that the logical channel is successfully reconfigured.

Specifically, in this step, the access layer of the primary device may send information #3J to the basic service layer. The information #3J indicates that the logical channel is successfully reconfigured, that is, the first service channel establishes the mapping relationship with the first logical channel and the third logical channel. In practice, it may be understood that the information #3J indicates that establishment of the logical link between the primary device and the second secondary device is completed.

The information #3J may include the identifier of the first service channel, the identifier of the first logical channel, the identifier of the third logical channel, and the device information of the second secondary device. For example, the identifier of the first service channel is TCID-s. The identifier of the first logical channel and the identifier of the third logical channel are LCID1 and LCID3 respectively. The device information of the second secondary device includes the device identifier and/or the device address (represented by Ter-ID2) of the second secondary device.

After receiving the information #3J, the basic service layer of the primary device considers that the bottom-layer logical link between the primary device and the second secondary device can be used for transmission.

S318: The basic service layer of the primary device sends a transmission channel creation request to a basic service layer of the second secondary device.

The transmission channel creation request is used to notify the second secondary device of establishment of the mapping relationships between the first service channel and both of the first logical channel and the second logical channel on the primary device side, and also indicates the second secondary device to establish a third service channel. The third service channel is a service channel on the second secondary device side, and is configured to receive a multicast service that is sent by the primary device on the first service channel.

Specifically, in this step, the basic service layer of the primary device may send information #3K to the basic service layer of the second secondary device. The information #3K indicates that the primary device has established a mapping relationship between a local service channel and a logical channel, and also indicates the second secondary device to establish a mapping relationship between a peer service channel and a logical channel.

The information #3K may include port information used by the second secondary device, the identifier of the first service channel, the identifier of the first logical channel, and the identifier of the third logical channel. For example, the port information used by the second secondary device includes the identifier P3 of the third port. The identifier of the first service channel is TCID-s, the identifier of the first logical channel is LCID1, and the identifier of the third logical channel is LCID3.

S319: The basic service layer of the second secondary device generates an identifier of the third service channel.

Herein, the third service channel is a service channel on the second secondary device side. For ease of description, the identifier of the third service channel may be represented by TCID-d2.

After step S319 is completed, the second secondary device may consider that the basic service layers of the two devices (the second secondary device and the primary device) have established a connection between the first service channel TCID-s and the third service channel TCID-d2, and may determine a mapping relationship between the first service channel TCID-s and the third service channel TCID-d2. The second secondary device may further establish a mapping relationship between the third service channel and a logical channel, and specifically establish a mapping relationship between the third service channel TCID-d2 and the first logical channel LCID1 and a mapping relationship between the third service channel TCID-d2 and the third logical channel LCID3.

S320: The basic service layer of the second secondary device sends port information and service channel information of the second secondary device to the basic application layer of the second secondary device, to perform port mapping.

Specifically, in this step, the basic service layer of the second secondary device may send information #3L to the basic application layer. The information #3L indicates a mapping relationship between a service channel and a port on the second secondary device side. The basic application layer of the second secondary device performs mapping of the third port based on the information #3L.

The information #3L may include the identifier of the third port used by the second secondary device and the identifier of the third service channel, and is used by the basic application layer of the second secondary device to establish a mapping relationship between the third port and the third service channel. For example, the identifier of the third port is P3, and the identifier of the third service channel is TCID-d2.

S321: The basic application layer of the second secondary device feeds back port mapping success to the basic service layer of the second secondary device.

S322: The basic service layer of the second secondary device sends a transmission channel creation response to the basic service layer of the primary device.

The transmission channel creation response is used to notify the primary device that establishment of the third service channel on the second secondary device side is completed.

Specifically, in this step, the basic service layer of the second secondary device may send information #3M to the basic service layer of the primary device. The information #3M indicates that establishment of the third service channel on the second secondary device side is completed and the third service channel may be configured to transmit service data.

The information #3M may include the identifier TCID-d2 of the third service channel. Optionally, the information #3M may further include the identifier LCID1 of the first logical channel and/or the identifier LCID3 of the third logical channel.

It should be noted that in step S318 and step S322, data exchanged between the basic service layer of the primary device and the basic service layer of the second secondary device may be transmitted on a control channel established between the primary device and the second secondary device.

After step S322 is completed, the primary device may consider that the basic service layers of the two electronic devices (the primary device and the second secondary device) have established the connection between the first service channel TCID-s and the third service channel TCID-d2, and may determine and maintain the mapping relationship between the first service channel TCID-s and the third service channel TCID-d2.

S323: The basic service layer of the primary device notifies the basic application layer of the primary device that the service channel is successfully reconfigured.

Specifically, in this step, the basic service layer of the primary device may send information #3N to the basic application layer. The information #3N indicates that the first service channel of the primary device is successfully reconfigured.

Because the first service channel has been successfully applied for in step S131, when a new member joins multicast, multicast members corresponding to the first service channel change. Therefore, the first service channel needs to be reconfigured.

The information #3N may include port information used by the primary device, for example, the identifier P1 of the first port, the identifier TCID-s of the first service channel, the device information of the second secondary device, and the like. The device information of the second secondary device includes the device identifier and/or the device address (represented by Ter-ID2) of the second secondary device.

So far, the primary device reconfigures the first service channel, to successfully establish a service transmission channel between the primary device and the second secondary device. The following mapping relationships are established between channels of layers of the primary device and the second secondary device:
the mapping relationship between the first port P1 and the first service channel TCID-s;
the mapping relationship between the first service channel TCID-s and the first logical channel LCID1;
the mapping relationship between the first service channel TCID-s and the third logical channel LCID3;
the mapping relationship between the third port P3 and the third service channel TCID-d2;
the mapping relationship between the third service channel TCID-d2 and the first logical channel LCID1;
the mapping relationship between the third service channel TCID-d2 and the third logical channel LCID3;
the mapping relationship between the first port P1 and the third port P3; and
the mapping relationship between the first service channel TCID-s and the third service channel TCID-d2.

It should be noted that, in a process of interaction between the primary device and the first secondary device, the mapping relationship between the first port P1 and the first service channel TCID-s and the mapping relationship between the first service channel TCID-s and the first logical channel LCID1 have been established. It is emphasized again herein to reflect a path for transmitting data between the primary device and the second secondary device.

In addition, the first logical channel LCID1, the second logical channel LCID2, and the third logical channel LCID3 all belong to a same logical channel group. The logical channel group is configured to provide a service for the first service channel TCID-s. In this embodiment of this application, in a process of establishing the data path between the primary device and a 1^{st} secondary device, for example, in step S306, the access layer of the primary device has generated the logical channel group, and allocated a transmission resource to the logical channel group. The logical channels established between the primary device and all the secondary devices are scheduled by the access layer of the primary device.

S324: The basic service layer of the primary device determines that the second secondary device completes preparation.

In other words, the basic service layer of the primary device determines that establishment of the data path between the primary device and the second secondary device is completed.

Step S324 is an optional step. During actual application, the basic service layer of the primary device may determine that the second secondary device completes preparation when receiving the transmission channel creation response sent in step S322, or when feeding back, to the basic application layer, that the service channel is successfully reconfigured.

In this embodiment of this application, only an example in which the primary device establishes a service channel with two secondary devices is used for description. If another secondary device establishes a data path with the primary device, the primary device may then establish the data path with the another secondary device. The steps are similar to steps S315 to S324. For brevity, details are not described again.

As mentioned above, the multicast service channel is a channel for transmitting a multicast service. Specifically, in the example in FIG. 3A to FIG. 3C, the multicast service channel may include the first service channel TCID-s, the second service channel TCID-d1, and the third service channel TCID-d2. That is, the service channels established between the primary device and the plurality of secondary devices are collectively referred to as the multicast service channel. The channel for transmitting a multicast service between the primary device and the first secondary device includes the first service channel TCID-s and the second service channel TCID-d1. The channel for transmitting a multicast service between the primary device and the second secondary device includes the first service channel TCID-s and the third service channel TCID-d2.

The multicast logical channel is configured to provide bottom-layer transmission for the multicast service channel. Specifically, in the example in FIG. 3A to FIG. 3C, the multicast logical channel includes the first logical channel LCID1, the second logical channel LCID2, and the third logical channel LCID3. The first logical channel LCID1 is configured to transmit downlink data that is sent by the primary device to each secondary device. The second logical channel LCID2 and the third logical channel LCID3 are separately configured to transmit uplink data that is sent by the secondary device to the primary device.

It should be noted that, in the example in FIG. 3A to FIG. 3C, the logical channel group (or referred to as the multicast logical channel) used in step S306 and step S316 is a newly established logical channel.

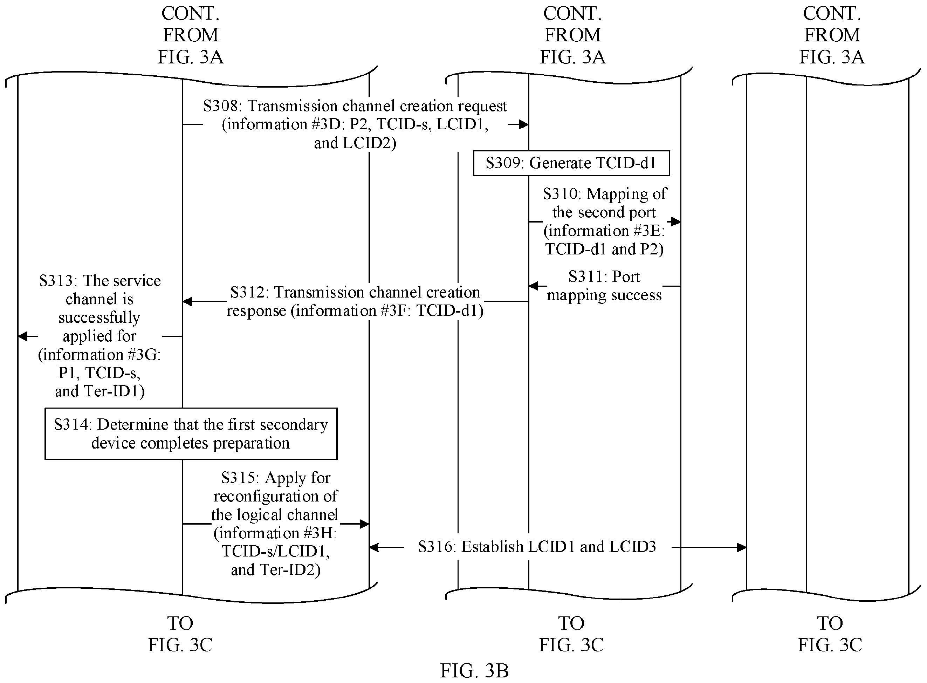

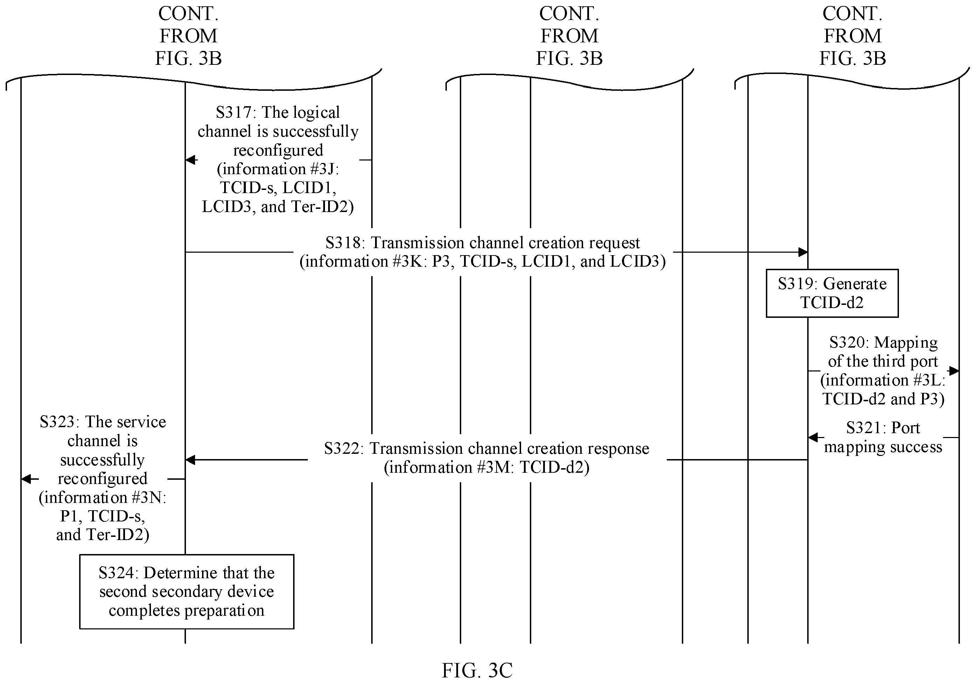

In some other embodiments, the access layer of the primary device may alternatively choose to directly multiplex an existing multicast logical channel. For example, when multicast members corresponding to the existing multicast logical channel are the same as multicast members corresponding to a service channel (namely, the first service channel) that is newly applied for, and a QoS capability of the existing multicast logical channel can satisfy the service channel that is newly applied for, the existing multicast logical channel may be directly multiplexed in step S306. When a data path is established between the primary device and a subsequent secondary device, steps S315 to S317 shown in FIG. 3B and FIG. 3C may be omitted.

In some other embodiments, the access layer of the primary device may alternatively choose to reconfigure an existing multicast logical channel, and then multiplex a reconfigured multicast logical channel. For example, when multicast members corresponding to the existing multicast logical channel are the same as multicast members corresponding to a service channel that is newly applied for, but a QoS capability of the existing multicast logical channel cannot satisfy the service channel that is newly applied for, the existing multicast logical channel may be reconfigured so that the QoS capability of the existing multicast logical channel meets the requirement, and then the reconfigured multicast logical channel is multiplexed. Similarly, when a data path is established between the primary device and a subsequent secondary device, steps S315 to S317 shown in FIG. 3B and FIG. 3C may be omitted.

It should be understood that, during specific implementation, the access layer of the primary device may select a solution based on a transmission status to establish a bottom-layer logical link. In addition, the foregoing several solutions and applicable scenarios are merely examples. In another embodiment, a manner selected when the access layer establishes the bottom-layer logical link may be other manners, and scenarios to which the foregoing several solutions are applicable are other scenarios. Details are not described one by one herein.

In some embodiments, before step S306 or S316 is performed, the basic service layer of the primary device may perform channel parameter negotiation with the basic service layer of the corresponding secondary device.

Specifically, the basic service layer of the primary device may send a channel parameter negotiation request to the basic service layer of the secondary device. Correspondingly, the basic service layer of the secondary device may send a channel parameter negotiation response to the basic service layer of the primary device. Channel parameters are negotiated in the interaction process. In the negotiation process, information that needs to be exchanged between the primary device and the secondary device may be transmitted on a control channel.

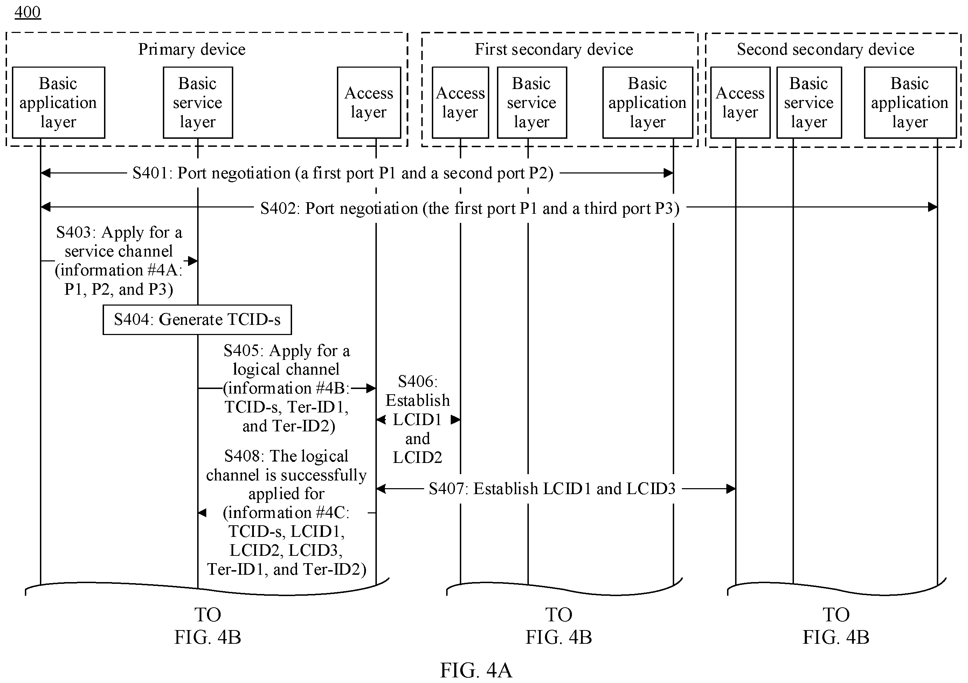

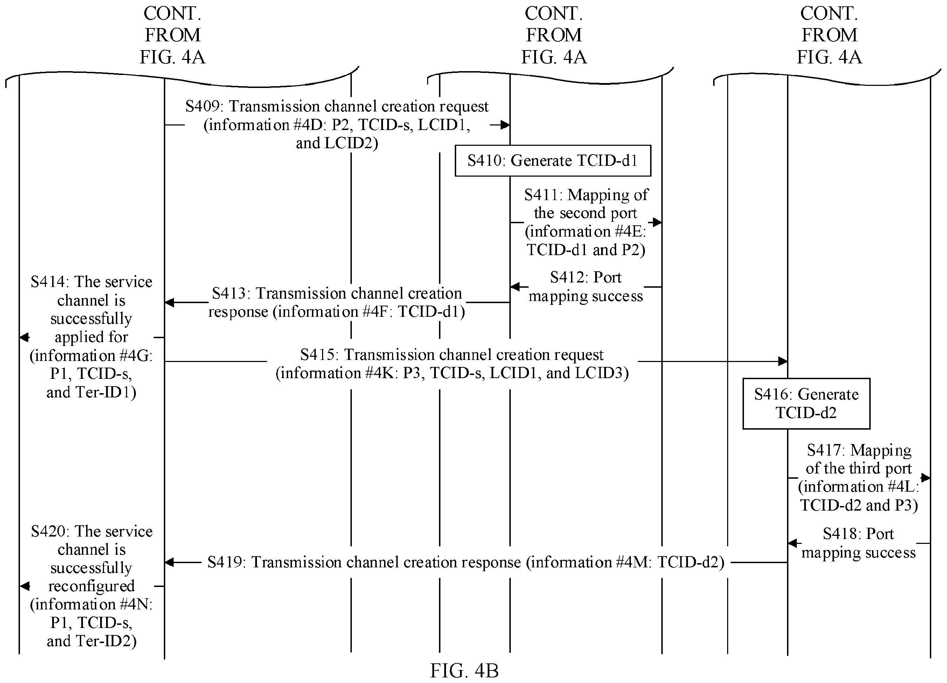

FIG. 4A and FIG. 4B show a schematic flowchart of creating a multicast service channel according to another embodiment of this application.

A method 400 shown in FIG. 4A and FIG. 4B is similar to the method 300, except that execution sequences of some steps are different, or some steps are combined. The following describes only the differences in detail. For other parts that are not described in detail, refer to the related descriptions of the method 300.

S401: A basic application layer of a primary device performs port negotiation with a basic application layer of a first secondary device.

S402: The basic application layer of the primary device performs port negotiation with a basic application layer of a second secondary device.

S403: The basic application layer of the primary device applies to a basic service layer of the primary device for a service channel.

S404: The basic service layer of the primary device generates an identifier of a first service channel. Steps S401 to S404 are the same as steps S301 to S304 in the method 300, and information #4A sent in step S403 is similar to the information #3A sent in the method 300. For specific descriptions of the steps and content included in the information #4A, refer to the related descriptions of the method 300. For brevity, details are not described herein again.

S405: The basic service layer of the primary device applies to an access layer of the primary device for a logical channel.

Specifically, in step S405, the basic service layer (specifically, a connection management module) of the primary device may send information #4B to the access layer. The information #4B is used to apply to the access layer for the logical channel for the first service channel. Alternatively, it may be understood that the information #4B indicates the primary device to separately establish a bottom-layer logical link with each secondary device.

The information #4B may include an identifier TCID-s of the first service channel, device information (for example, a member list) of each secondary device, and the like. In the example in FIG. 4A and FIG. 4B, the device information of each secondary device includes device information Ter-ID1 of the first secondary device and device information Ter-ID2 of the second secondary device.

The information #4B may further include logical channel type indication information, quality of service QoS, and the like. For descriptions of specific information, refer to the related descriptions of the information #3B.

S406: Establish a first logical channel LCID1 and a second logical channel LCID2 between the access layer of the primary device and an access layer of the first secondary device.

This step is similar to step S306 in the method 300. A bottom-layer logical link between the primary device and the first secondary device is established in this step. For descriptions of step S406, refer to the related descriptions of step S306. For brevity, details are not described herein again.

S407: Establish a first logical channel LCID1 and a third logical channel LCID3 between the access layer of the primary device and an access layer of the second secondary device.

A bottom-layer logical link between the primary device and the second secondary device is established in this step. Step S407 is similar to step S316 in the method 300. For details, refer to the related descriptions of step S316. For brevity, details are not described herein again.

It may be understood that, if another secondary device is connected to the primary device to transmit a multicast service, the primary device performs a step similar to step S407, so that a logical channel established between the primary device and the another secondary device is added to a logical channel group.

Step S406 and step S407 may be performed successively, or may be performed synchronously. This is not limited in embodiments of this application.

S408: The access layer of the primary device feeds back, to the basic service layer of the primary device, that the logical channel is successfully applied for.

Specifically, in this step, the access layer of the primary device may send information #4C to the basic service layer. The information #4C indicates that the logical channel is successfully applied for, or may indicate to establish a mapping relationship between the first service channel and each of the first logical channel LCID1, the second logical channel LCID2, and the third logical channel LCID3. In practice, it may be understood that the information #4C indicates that establishment of the logical link between the primary device and the first secondary device and the logical link between the primary device and the second secondary device is completed.

The information #4C may include the identifier of the first service channel, an identifier of a multicast logical channel, and device information of each secondary device with which a connection has been established.

For example, the identifier of the first service channel is TCID-s. The identifier of the multicast logical channel includes an identifier LCID1 of the first logical channel, an identifier LCID2 of the second logical channel, and an identifier LCID3 of the third logical channel. The secondary device that has established a connection with the primary device includes the first secondary device and the second secondary device. Therefore, the device information of the secondary device may include a device identifier and/or a device address Ter-ID1 of the first secondary device, and a device identifier and/or a device address Ter-ID2 of the second secondary device.

After receiving the information #4C, the basic service layer of the primary device considers that the bottom-layer logical link can be used for transmission.

S409: The basic service layer of the primary device sends a transmission channel creation request to a basic service layer of the first secondary device.

The transmission channel creation request indicates the first secondary device to establish a second service channel.

S410: The basic service layer of the first secondary device generates an identifier TCID-d1 of the second service channel.

S411: The basic service layer of the first secondary device sends port information and service channel information of the first secondary device to the basic application layer of the first secondary device, to perform port mapping.

S412: The basic application layer of the first secondary device feeds back port mapping success to the basic service layer of the first secondary device.

S413: The basic service layer of the first secondary device sends a transmission channel creation response to the basic service layer of the primary device.

The transmission channel creation response indicates that establishment of the second service channel on the first secondary device side is completed, and the second service channel may be configured to transmit service data.

S414: The basic service layer of the primary device notifies the basic application layer of the primary device that the service channel is successfully applied for.

Steps S409 to S414 are the same as steps S308 to S313 in the method 300. The information #4D, #4E, #4F, and #4G are similar to the information #3D, #3E, #3F, and #3G in the method 300 respectively. For specific descriptions of the steps and content included in the information, refer to the related descriptions of the method 300. For brevity, details are not described herein again.

S415: The basic service layer of the primary device sends a transmission channel creation request to a basic service layer of the second secondary device.

The transmission channel creation request indicates the second secondary device to establish a third service channel.

S416: The basic service layer of the second secondary device generates an identifier TCID-d2 of the third service channel.

S417: The basic service layer of the second secondary device sends port information and service channel information of the second secondary device to the basic application layer of the second secondary device, to perform port mapping.

S418: The basic application layer of the second secondary device feeds back port mapping success to the basic service layer of the second secondary device.

S419: The basic service layer of the second secondary device sends a transmission channel creation response to the basic service layer of the primary device.

The transmission channel creation response indicates that establishment of the second service channel on the second secondary device side is completed, and the second service channel may be configured to transmit service data.

S420: The basic service layer of the primary device notifies the basic application layer of the primary device that the service channel is successfully reconfigured.

Steps S415 to S420 are the same as steps S318 to S323 in the method 300. The information #4K, #4L, #4M, and #4N are similar to the information #3K, #3L, #3M, and #3N in the method 300 respectively. For specific descriptions of the steps and content included in the information, refer to the related descriptions of the method 300. For brevity, details are not described herein again.

In conclusion, the method 400 differs from the method 300 in that after the access layer of the primary device receives an indication for applying for a logical channel (that is, after step S405 is performed), the access layer of the primary device separately establishes a bottom-layer logical link with each secondary device. After the primary device establishes the logical link with each secondary device to be connected, the basic service layer of the primary device separately establishes, with each secondary device, a service channel for transmitting a multicast service, namely, a multicast service channel.

In this embodiment of this application, steps S409 to S413 describe a process in which the primary device establishes a multicast service channel with the first secondary device, and the steps have a sequence. Steps S415 to S419 describe a process in which the primary device establishes a multicast service channel with the second secondary device, and the steps have a sequence. However, the process in which the primary device establishes the multicast service channel with the first secondary device and the process in which the primary device establishes the multicast service channel with the second secondary device may be independent of each other. The primary device may establish a multicast service channel with each secondary device in sequence, or may simultaneously establish multicast service channels with a plurality of secondary devices. This is not limited in embodiments of this application.

In some embodiments, the basic service layer of the primary device may send a feedback to the basic application layer of the primary device each time when receiving a transmission channel creation response sent by a secondary device, for example, in step S313 and step S323 shown in FIG. 3B and FIG. 3C and step S414 and step S420 shown in FIG. 4B.

In some other embodiments, the basic service layer of the primary device may alternatively feed back, to the basic application layer of the primary device after receiving transmission channel creation responses fed back by all multicast members, that the service channel is successfully applied for. For example, step S313 and step S323 shown in FIG. 3B and FIG. 3C may be combined into one step, to be performed after step S322. Alternatively, step S414 and step S420 shown in FIG. 4B may be combined into one step, to be performed after step S419. Information fed back by the basic service layer of the primary device may include port information used by the primary device, the identifier of the first service channel, device information of each secondary device, and the like. For example, the port information used by the primary device includes an identifier P1 of a first port. The identifier of the first service channel is TCID-s. The device information of the secondary device may include the device identifier and/or the device address of the first secondary device and the device identifier and/or the device address of the second secondary device.

In some other embodiments, the basic service layer of the primary device may alternatively send a feedback to the basic application layer of the primary device when preset time expires. The feedback information indicates that multicast service channels between the primary device and some secondary devices are successfully established. After the preset time expires, the basic service layer of the primary device sends a feedback to the basic application layer of the primary device each time when receiving a transmission channel creation response sent by a secondary device. The feedback information indicates that a multicast service channel between the primary device and the secondary device is successfully established.

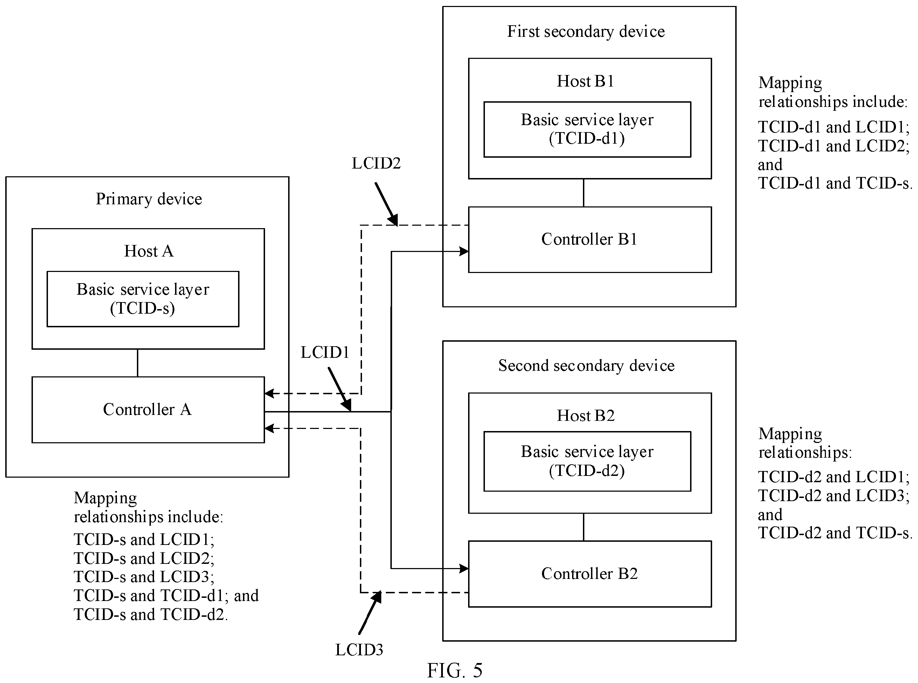

After the method 300 shown in FIG. 3A to FIG. 3C or the method 400 shown in FIG. 4A and FIG. 4B is performed, the primary device may establish a multicast service channel with at least one secondary device. Specifically, the primary device is responsible for establishing a service channel (for example, the first service channel) of a transmitter, and spreading service channel information by using a broadcast message. The secondary device is responsible for receiving service channel information of a sender, and establishing a service channel (for example, the second service channel and the third service channel) of a receiver based on the information. The primary device may send service data on the first service channel, and the first secondary device and the second secondary device receive the service data on the second service channel and the third service channel respectively, so that a one-to-many multicast service can be performed. For ease of understanding, FIG. 5 is a schematic diagram of a channel mapping relationship and a data transmission path between devices.

As shown in FIG. 5, the primary device may include a host A (Host A) and a controller A (Controller A). The first service channel TCID-s is established at the basic service layer of the host A.

The first secondary device may include a host B1 (Host B1) and a controller B1 (Controller B1). The second service channel TCID-d1 is established at the basic service layer of the host B1.

The second secondary device may include a host B2 (Host B2) and a controller B2 (Controller B2). The third service channel TCID-d2 is established at the basic service layer of the host B2.

The primary device establishes a multicast logical channel with the first secondary device and the second secondary device. The multicast logical channel includes the first logical channel LCID1, the second logical channel LCID2, and the third logical channel LCID3.

The mapping relationships maintained on the primary device side include:
the mapping relationship between the first service channel and the first logical channel (that is, TCID-s and LCID1);
the mapping relationship between the first service channel and the second logical channel (that is, TCID-s and LCID2);
the mapping relationship between the first service channel and the third logical channel (that is, TCID-s and LCID3);
the mapping relationship between the first service channel and the second service channel (that is, TCID-s and TCID-d1); and
the mapping relationship between the first service channel and the third service channel (that is, TCID-s and TCID-d2).

The mapping relationships maintained on the first secondary device side include:
the mapping relationship between the second service channel and the first logical channel (that is, TCID-d1 and LCID1);
the mapping relationship between the second service channel and the second logical channel (that is, TCID-d1 and LCID2); and
the mapping relationship between the second service channel and the first service channel (that is, TCID-d1 and TCID-s).

The mapping relationships maintained on the second secondary device side include:
the mapping relationship between the third service channel and the first logical channel (that is, TCID-d2 and LCID1);
the mapping relationship between the third service channel and the third logical channel (that is, TCID-d2 and LCID3); and
the mapping relationship between the third service channel and the first service channel (that is, TCID-d2 and TCID-s).

When performing a multicast service, the primary device that serves as the sender transmits the service data to the first secondary device and the second secondary device on the first service channel TCID-s and the first logical channel LCID1. The first secondary device and the second secondary device that serve as the receiver receive, from the first logical channel LCID1 on the second service channel TCID-d1 and the third service channel TCID-d2 respectively, the multicast service data sent by the primary device. The data transmission path is shown by solid lines with arrows shown in FIG. 5.

When the first secondary device needs to send data to the primary device, the first secondary device transmits the data to the primary device on the second service channel TCID-d1 and the second logical channel LCID2. The primary device receives, from the second logical channel LCID2 on the first service channel TCID-s, the data sent by the first secondary device.

Similarly, when the second secondary device needs to send data to the primary device, the second secondary device transmits the data to the primary device on the third service channel TCID-d2 and the third logical channel LCID3. The primary device receives, from the third logical channel LCID3 on the first service channel TCID-s, the data sent by the second secondary device.

Because identifiers of logical channels used by different secondary devices to transmit uplink data are different, the primary device may distinguish, based on the identifiers of the logical channels, a secondary device from which the data is received. The data transmission path is shown by dashed lines with arrows shown in FIG. 5.

In the technical solutions provided in this embodiment of this application, the primary device may separately establish data paths with a plurality of secondary devices. When performing a multicast service, the primary device only needs to send one piece of service data, and the secondary device receives the service data respectively, so that a one-to-many multicast service is implemented. The primary device does not need to separately send data to each secondary device, and the data does not need to be forwarded by an intermediate node. This avoids a problem that the primary device needs to send data for a plurality of times when transmitting same data to a plurality of secondary devices. In addition, after the primary device sends the data, the secondary device may feed back the ack, or may send the uplink data to the primary device.

It should be noted that, in the examples in FIG. 3A to FIG. 3C to FIG. 5, the logical channel for transmitting the uplink data is established between the primary device and the access layer of each secondary device, so that the secondary device can send the data to the primary device. In some other embodiments, if the secondary device does not need to send the data to the primary device, only the logical channel for transmitting the downlink data may be established between the primary device and the secondary device.

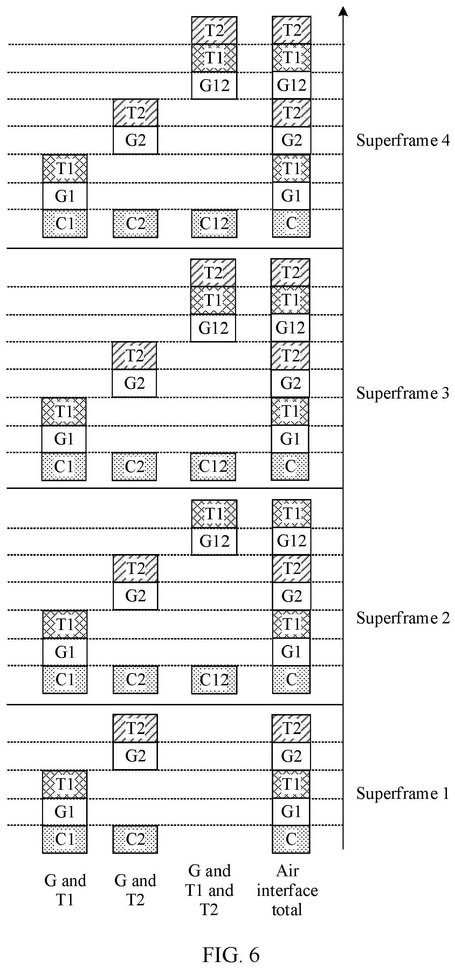

In this embodiment of this application, the access layers of the primary device, the first secondary device, and the second secondary device can all support a plurality of access technologies, for example, the SLB access technology and the SLE access technology. When the primary device performs a multicast service for a plurality of secondary devices, the user does not need to select or specify an access technology for service transmission, but after the basic application layer of the primary device delivers the service requirement, the basic service layer of the primary device self-selects a bottom-layer access technology based on the service requirement, and establishes a service channel for transmission. In this embodiment of this application, only when the access layers of the primary device and the secondary device support the multicast technology, the primary device can perform a multicast service with a plurality of secondary devices. With reference to FIG. 6, the following briefly describes support of the SLE access technology and the SLB access technology for the multicast technology.

### (1) SLE multicast

FIG. 6 shows an example in which the primary device (the access layer may be referred to as a node G) and the two secondary devices (the first secondary device and the second secondary device, and the access layers may be referred to as a node T1 and a node T2) perform multicast. In FIG. 6, a horizontal axis represents a time line, different rows on a vertical axis represent different link data packets (a first row indicates a data packet sent between the node G and the node T1, a second row indicates a data packet sent between the node G and the node T2, and a third row indicates a data packet sent between the node G and the node T1 and between the node G and the node T2), and a last row indicates a data packet finally and totally sent over an air interface.

In FIG. 6, there are four superframes (the superframe is a periodic transmission unit of SLE) in a chronological order from left to right. In each superframe, one block indicates one data packet. A box marked with G indicates a data packet sent by the node G. A box marked with T1 indicates a data packet sent by the node T1. A box marked with T2 indicates a data packet sent by the node T2. A box marked with C (for example, C, C1, C2, or C12) indicates a scheduling packet.

In FIG. 6, a link corresponding to the first row indicates a logical channel corresponding to a pre-established control channel between the node G and the node T1, and a link corresponding to the second row indicates a logical channel corresponding to a pre-established control channel between the node G and the node T2. On this basis, a link corresponding to the third row indicates a logical channel corresponding to a multicast service channel established by the node G with the node T1 and the node T2.

Refer to a superframe 1. Channels for transmitting a multicast service between the node G and both of the node T1 and the node T2 are not established, and the node G exchanges multicast link establishment information with the node T1 and the node T2 on control channels. Refer to a superframe 2. A channel for transmitting a multicast service between the node G and the node T1 is established, but a channel for transmitting a multicast service between the node G and the node T2 is not established. The node G sends multicast service data, the node T1 can successfully receive and reply to the data packet, but the node T2 cannot receive the multicast service data packet. Refer to a superframe 3 and a superframe 4. Channels for transmitting a multicast service between the node G and both of the node T1 and the node T2 are established. The node G sends multicast service data, and both the node T1 and the node T2 can successfully receive and reply to the data packet.

In a specific transmission process, frequency hopping is performed on data packets between different transmission events. A specific hopping frequency is indicated by information (for example, ChannelMap) carried in access signaling in an access process, and may be updated by using scheduling packet signaling after access.

### (2) SLB multicast

SLB data transmission is performed based on scheduling. Specifically, a node G may send control information to a node T, to indicate to the node T whether the node T needs to receive data or whether the node T needs to be scheduled to send data. The node T blindly detects the control information sent by the node G. After blindly detecting control information belonging to the node T, the node T receives data or sends data based on the control information sent by the node G to the node T. The control information sent by the node G may include information such as radio resource information and encoding information, to indicate the node T to receive data or schedule the node T to send data.

The control information sent by the node G is scrambled by using a physical layer identifier, and only the node T that has the corresponding physical layer identifier can blindly detect the corresponding control information. If a multicast service is performed, a same multicast physical layer identifier is allocated to all receivers in a group. In this way, all the devices in the group can blindly detect control information of the multicast.

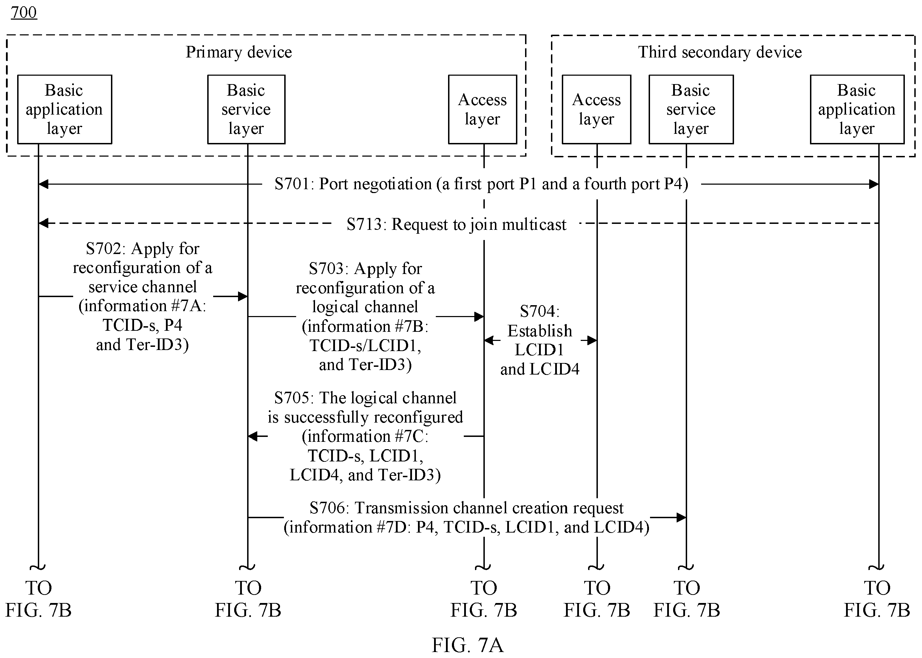

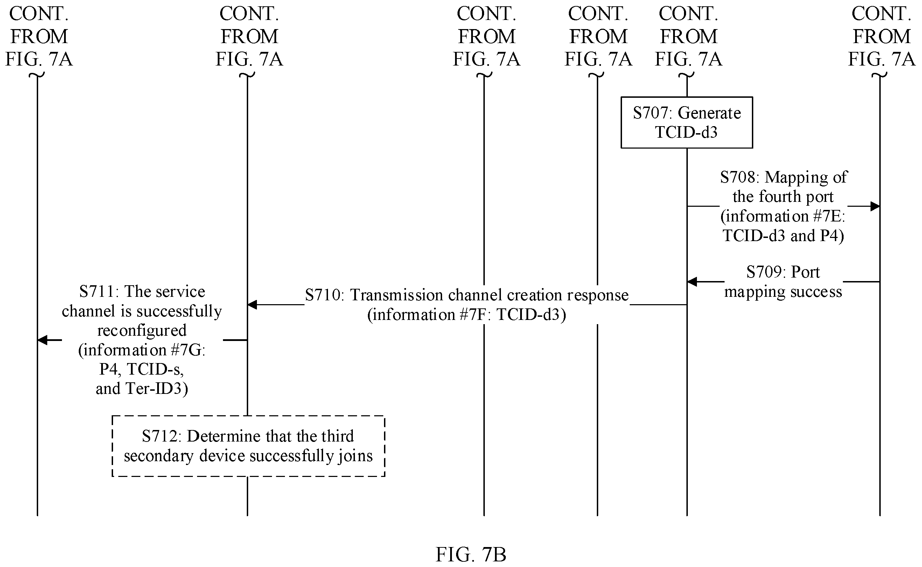

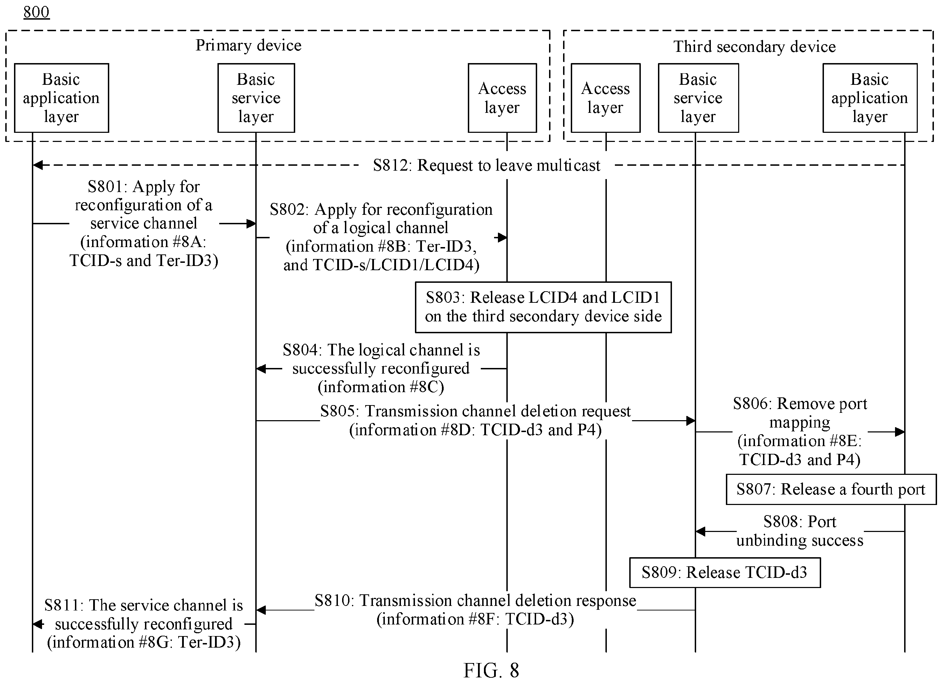

The foregoing describes a process in which the primary device establishes the multicast service channel with the at least one secondary device with reference to FIG. 3A to FIG. 3C to FIG. 5. In a process in which the primary device performs multicast with the at least one device, a new multicast member may further join or leave the multicast. The following describes a process in which a member joins or leaves multicast with reference to FIG. 7A and FIG. 7B and FIG. 8. FIG. 7A and FIG. 7B show a schematic flowchart of joining multicast by a member device according to an embodiment of this application, and specifically relates to a process of establishing a channel for transmitting a multicast service between the primary device and a new member when the member joins multicast.

In FIG. 7A and FIG. 7B, that the new member device is a third secondary device is used as an example. Therefore, in an implementation process of this process, the primary device and the third secondary device are used. The primary device is an example of the first electronic device, and the primary device has established a channel for transmitting a multicast service with the first secondary device and the second secondary device. The third secondary device is another example of the second electronic device, and serves as a new receiver of the multicast service. The third secondary device also has the protocol architecture 200 shown in FIG. 2, that is, includes a basic application layer, a basic service layer, and an access layer.

When a new secondary device (for example, the third secondary device) joins multicast in a process in which the primary device performs multicast with the at least one secondary device, for example, a user first makes a call by using one earphone and then puts on another earphone, or a user makes a call by using two earphones and another pair of earphones join for a conference call, the primary device and the new secondary device (for example, the third secondary device) may perform the process shown in FIG. 7A and FIG. 7B. A method 700 shown in FIG. 7A and FIG. 7B includes step S701 to step S713. The following describes the steps in detail with reference to the accompanying drawings.

S701: The basic application layer of the primary device performs port negotiation with the basic application layer of the third secondary device.

In this step, data used in the negotiation process may be transmitted on a default service channel established between the primary device and the third secondary device.

In some embodiments, in step S701, the basic application layer of the primary device and the basic application layer of the third secondary device may further perform service negotiation, QoS negotiation, and the like. A negotiation process in this step is similar to steps S301 and S302 in the method 300 and steps S401 and S402 in the method 400. For details, refer to the related descriptions of the method 300 or 400. For brevity, details are not described herein again.

For example, a result of negotiation between the primary device and the third secondary device may be that the primary device uses the first port (P1), and the third secondary device uses a fourth port (for example, represented by port4 (which may be referred to as P4 for short)). Correspondingly, the first port P1 has a mapping relationship with the fourth port P4. The basic application layer of the primary device and the basic application layer of the third secondary device need to maintain the mapping relationship between the first port and the fourth port.

S702: The basic application layer of the primary device applies to a basic service layer of the primary device for reconfiguration of a service channel.

The basic application layer of the primary device needs to apply to the connection management module in the basic service layer for a service channel for the first port and the fourth port. In this embodiment of this application, after joining existing multicast, the third secondary device also needs to receive multicast service data from the first service channel TCID-s. Therefore, the multicast members corresponding to the first service channel TCID-s change. In this step, the basic application layer of the primary device applies to the basic service layer for reconfiguration of the first service channel. Step S702 may also be understood as that the basic application layer of the primary device notifies the basic service layer of the primary device to add a new service receiver. Specifically, in step S702, the basic application layer of the primary device may send information #7A to the connection management module. The information #7A is used to apply to the connection management module in the basic service layer for reconfiguration of the first service channel. Alternatively, it may be understood that the information #7A indicates to establish, based on the existing multicast, a channel for transmitting a multicast service between the primary device and the third secondary device.

The information #7A may include the identifier TCID-s of the first service channel, device information of the third secondary device, port information of the third secondary device such as the identifier P4 of the fourth port, and the like. The device information of the third secondary device includes a device identifier and/or a device address (represented by Ter-ID3 below) of the third secondary device.

Optionally, the information #7A may further include a QoS parameter that indicates a requirement of a multicast service for a service channel.

S703: The basic service layer of the primary device applies to the access layer of the primary device for reconfiguration of the logical channel.

Specifically, in this step, the basic service layer (specifically, the connection management module) of the primary device may send information #7B to the access layer. The information #7B is used to apply to the access layer for reconfiguration of the logical channel. Because the multicast logical channel (namely, the foregoing logical channel group) for the first service channel has been successfully applied for before the method 700, when a new member joins multicast, the multicast members corresponding to the multicast logical channel change. Therefore, the multicast logical channel needs to be reconfigured. It may also be understood that the information #7B indicates to establish a bottom-layer logical link between the primary device and the third secondary device. The information #7B may include the device information of the third secondary device, at least one of the following: the identifier TCID-s of the first service channel and the identifier LCID1 of the first logical channel, and the like. The device information of the third secondary device includes the device identifier and/or the device address Ter-ID3 of the third secondary device.

In this step, the information #7B includes the identifier TCID-s of the first service channel and/or the identifier LCID1 of the first logical channel. In this case, the access layer of the primary device may determine, based on the identifier TCID-s of the first service channel and/or the identifier LCID1 of the first logical channel, a logical channel group to be reconfigured.

Optionally, the information #7A may further include quality of service QoS.

S704: Establish a first logical channel and a fourth logical channel between the access layer of the primary device and an access layer of the third secondary device.

The first logical channel LCID1 is configured to transmit data that is sent by the primary device to the third secondary device, and the fourth logical channel is configured to transmit data that is sent by the third secondary device to the primary device. For ease of understanding, an identifier of the fourth logical channel may be LCID4, and is used to identify the fourth logical channel.

In the method 300 in FIG. 3A to FIG. 3C, the access layer of the primary device has established the mapping relationship between the first logical channel LCID1 and the first service channel TCID-s. Therefore, in step S704, the access layer of the primary device may further establish a mapping relationship between the fourth logical channel LCID4 and the first service channel TCID-s. The fourth logical channel LCID4 may send data to the first service channel TCID-s. Step S704 may be understood as a process in which the primary device and the third secondary device establish a logical link between the primary device and the third secondary device based on the multicast logical channel that has been applied for.

S705: The access layer of the primary device feeds back, to the basic service layer of the primary device, that the logical channel is successfully reconfigured.

Specifically, in this step, the access layer of the primary device may send information #7C to the basic service layer. The information #7C indicates that the logical channel is successfully reconfigured. In practice, the information #7C indicates that establishment of the logical link between the primary device and the third secondary device is completed.

The information #7C may include the identifier TCID-s of the first service channel, the identifier LCID1 of the first logical channel, the identifier LCID4 of the fourth logical channel, and the device information of the third secondary device. The device information of the third secondary device includes the device identifier and/or the device address Ter-ID3 of the third secondary device.

After receiving the information #7C, the basic service layer of the primary device considers that the bottom-layer logical link between the primary device and the third secondary device can be used for transmission.

S706: The basic service layer of the primary device sends a transmission channel creation request to the basic service layer of the third secondary device.

The transmission channel creation request indicates the third secondary device to establish a fourth service channel. The fourth service channel is a service channel on the third secondary device side, and is configured to receive a multicast service that is sent by the primary device on the first service channel.

Specifically, in this step, the basic service layer of the primary device may send information #7D to the basic service layer of the third secondary device. The information #7D indicates the third secondary device to establish a mapping relationship between a service channel and a logical channel.

The information #7D may include port information used by the third secondary device, the identifier of the first service channel, the identifier of the first logical channel, and the identifier of the fourth logical channel. For example, the port information used by the third secondary device includes the identifier P4 of the fourth port. The identifier of the first service channel is TCID-s. The identifier of the first logical channel is LCID1. The identifier of the fourth logical channel is LCID4.

S707: The basic service layer of the third secondary device generates an identifier of the fourth service channel.

Herein, the fourth service channel is a service channel on the third secondary device side. For ease of description, the identifier of the fourth service channel may be represented by TCID-d3.

After step S707 is completed, the third secondary device may consider that the basic service layers have established a connection between the first service channel TCID-s and the fourth service channel TCID-d3, and may determine and maintain a mapping relationship between the first service channel TCID-s and the fourth service channel TCID-d3. The third secondary device may further establish a mapping relationship between the fourth service channel and a logical channel, and specifically establish a mapping relationship between the fourth service channel TCID-d3 and the first logical channel LCID1 and a mapping relationship between the fourth service channel TCID-d3 and the fourth logical channel LCID4.

S708: The basic service layer of the third secondary device sends port information and service channel information of the third secondary device to the basic application layer of the third secondary device, to perform port mapping.

Specifically, in this step, the basic service layer of the third secondary device may send information #7E to the basic application layer. The basic application layer of the third secondary device performs mapping of the fourth port based on the information #7E.

The information #7E may include the identifier P4 of the fourth port used by the third secondary device and the identifier TCID-d3 of the fourth service channel, and is used by the basic application layer of the third secondary device to establish a mapping relationship between the fourth port and the fourth service channel.

S709: The basic application layer of the third secondary device feeds back port mapping success to the basic service layer of the third secondary device.

S710: The basic service layer of the third secondary device sends a transmission channel creation response to the basic service layer of the primary device.

The transmission channel creation response is used to notify the primary device that establishment of the fourth service channel on the third secondary device side is completed.

Specifically, in this step, the basic service layer of the third secondary device may send information #7F to the basic service layer of the primary device. The information #7F may include the identifier TCID-d3 of the fourth service channel. Optionally, the information #7F may further include the identifier LCID1 of the first logical channel and/or the identifier LCID4 of the fourth logical channel.

It should be noted that in step S706 and step S710, data exchanged between the basic service layer of the primary device and the basic service layer of the third secondary device may be transmitted on a control channel established between the primary device and the third secondary device.

After step S710 is completed, the primary device may consider that the basic service layers of the two electronic devices (the primary device and the third secondary device) have established the connection between the first service channel TCID-s and the fourth service channel TCID-d3, and may determine and maintain the mapping relationship between the first service channel TCID-s and the fourth service channel TCID-d3.

S711: The basic service layer of the primary device notifies the basic application layer of the primary device that the service channel is successfully reconfigured.

Specifically, in this step, the basic service layer of the primary device may send information #7G to the basic application layer. The information #7G indicates that the first service channel is successfully reconfigured.

The information #7G may include port information used by the primary device, for example, the identifier P1 of the first port, the identifier TCID-s of the first service channel, the device information of the third secondary device, and the like. The device information of the third secondary device includes the device identifier and/or the device address Ter-ID3 of the third secondary device.

So far, the first service channel is successfully reconfigured, and the channel for transmitting the multicast service is successfully established between the primary device and the third secondary device. The following mapping relationships are established between channels of layers of the primary device and the third secondary device:
the mapping relationship between the first port port1 and the first service channel TCID-s;
the mapping relationship between the first service channel TCID-s and the first logical channel LCID1;
the mapping relationship between the first service channel TCID-s and the fourth logical channel LCID4;
the mapping relationship between the fourth port P4 and the fourth service channel TCID-d3;
the mapping relationship between the fourth service channel TCID-d3 and the first logical channel LCID1;
the mapping relationship between the fourth service channel TCID-d3 and the fourth logical channel LCID4;
the mapping relationship between the first port P1 and the fourth port P4; and
the mapping relationship between the first service channel TCID-s and the fourth service channel TCID-d3.

It should be noted that, in a process of interaction between the primary device and the first secondary device, the mapping relationship between the first port P1 and the first service channel TCID-s and the mapping relationship between the first service channel TCID-s and the first logical channel LCID1 have been established. It is emphasized again herein to reflect a path for transmitting data between the primary device and the third secondary device.

In addition, the first logical channel LCID1 and the fourth logical channel LCID4 belong to a same logical channel group. The logical channel group further includes the second logical channel LCID2 and the third logical channel LCID3 that have been established.

Optionally, the method 700 further includes the following step.

S712: The basic service layer of the primary device determines that the third secondary device successfully joins.

In other words, the basic service layer of the primary device determines that establishment of the data path between the primary device and the third secondary device is completed. This step is an optional step. During actual application, the basic service layer of the primary device may determine that the third secondary device successfully accesses when receiving the transmission channel creation response sent in step S710, or when feeding back, to the basic application layer, that the service channel is successfully reconfigured.

It may be understood that step S701 and step S702 and subsequent steps are not necessarily implemented in a same process, provided that the primary device completes port negotiation with the third secondary device before the third secondary device joins multicast. For example, step S701 and steps S301 and S302 in the method 300 may be performed simultaneously or sequentially, and steps S702 to S712 may be performed after step S324 in the method 300, or may be performed simultaneously with steps S315 to S324 in the method 300.

In this embodiment of this application, if the primary device actively adds a new multicast member, the primary device may directly perform step S702, that is, the primary device applies for reconfiguration of the first service channel.

If the new secondary device requests to join multicast or requests to establish a channel for transmitting a multicast service with the primary device, before step S702, the method 700 may further include the following step.

S713: The basic application layer of the third secondary device requests the basic application layer of the primary device to join multicast.

In other words, if a service receiver (namely, the third secondary device) initiates an action of joining multicast, the service receiver needs to notify a basic application layer of a service initiator (namely, the primary device).

The information used in step S713 may be transmitted on a default service channel established between the primary device and the third secondary device.

According to the method provided in this embodiment of this application, a new member device can join existing multicast. This implements flexible multicast communication.

FIG. 8 is a schematic flowchart of leaving multicast by a member device according to an embodiment of this application, and specifically relates to a process of releasing a channel for transmitting a multicast service between the primary device and a leaving member when the member leaves multicast.

When a secondary device (for example, a third secondary device) leaves multicast in a process in which the primary device performs multicast with the at least one secondary device, for example, a user makes a call by two ears and takes off one earphone, or two persons make a conference call on one mobile phone and one of them leaves, the primary device and the leaving secondary device (for example, the third secondary device) may perform a process shown in FIG. 8. A method 800 shown in FIG. 8 includes step S801 to step S812. The following describes the steps in detail with reference to the accompanying drawings.

S801: The basic application layer of the primary device applies to the basic service layer of the primary device for reconfiguration of a service channel.

After the third secondary device leaves multicast, the multicast members corresponding to the first service channel change. Therefore, in this step, the basic application layer of the primary device applies to the basic service layer for reconfiguration of the first service channel. Step S801 may also be understood as applying for releasing a channel for transmitting a multicast service between the primary device and a member (for example, the third secondary device) that leaves multicast. Specifically, in step S801, the basic application layer of the primary device may send information #8A to the connection management module. The information #8A is used to apply to the connection management module for reconfiguration of the first service channel, to release the service channel for transmitting the multicast service between the primary device and the third secondary device.

The information #8A may include the identifier TCID-s of the first service channel, device information of a member that leaves multicast, and the like. For example, the device information of the member that leaves multicast may include a device identifier and/or a device address Ter-ID3 of the third secondary device.

In some embodiments, the member that leaves multicast may passively leave multicast. In this case, the primary device may directly perform step S801. In some other embodiments, the member that leaves multicast may actively leave multicast. In this case, the method 800 may further include the following step.

S812: A basic application layer of the third secondary device requests the basic application layer of the primary device to leave multicast.

In other words, if a service receiver (namely, the third secondary device) initiates an action of leaving multicast, the service receiver needs to notify a basic application layer of a service initiator (namely, the primary device).

Information exchanged in step S812 may be transmitted on a default service channel created by service management modules of the primary device and the third secondary device.

S802: The basic service layer of the primary device applies to the access layer of the primary device for reconfiguration of the logical channel.

When a member leaves multicast, the multicast members corresponding to the multicast logical channel change. Therefore, the multicast logical channel needs to be reconfigured. Specifically, in this step, the basic service layer (specifically, the connection management module) of the primary device may send information #8B to the access layer. The information #8B is used to apply for reconfiguration of the multicast logical channel to release a logical channel between the primary device and the third secondary device. Alternatively, it may be understood that the information #8B indicates to remove a logical link between the primary device and the third secondary device, that is, to remove a mapping relationship between the multicast logical channel and a fourth service channel.

The information #8B may include device information of the third secondary device, at least one of the following: the identifier TCID-s of the first service channel, the identifier LCID1 of the first logical channel, and an identifier LCID4 of a fourth logical channel, and the like. The device information of the third secondary device includes the device identifier and/or the device address Ter-ID3 of the third secondary device.

S803: Release the fourth logical channel LCID4 and the first logical channel LCID1 on the third secondary device side.

In this step, because the third secondary device leaves multicast, the third secondary device no longer sends data to the primary device. Therefore, the fourth logical channel LCID4 for transmitting uplink data between the third secondary device and the primary device may be released. Although the third secondary device no longer receives data sent by the primary device, because the first logical channel LCID1 for transmitting downlink data is configured to send data to the third secondary device, and also configured to send data to the first secondary device and the second secondary device. Therefore, in this step, only LCID1 on the third secondary device side is released, and LCID1 on the primary device side may still be used to send data to another member in multicast.

In this step, the mapping relationship between the multicast logical channel and the fourth service channel may be removed, to release the logical channel. Specifically, the third secondary device may remove a mapping relationship between the fourth service channel TCID-d3 and the first logical channel LCID1 and a mapping relationship between the fourth service channel TCID-d3 and the fourth logical channel LCID4. The primary device may remove a mapping relationship between the first service channel TCID-s and the fourth logical channel LCID4. In this way, a resource corresponding to the fourth logical channel LCID4 is released, and a resource corresponding to the first logical channel LCID1 used by the third secondary device is released.

S804: The access layer of the primary device feeds back, to the basic service layer of the primary device, that the logical channel is successfully reconfigured.

Specifically, in this step, the access layer of the primary device may send information #8C to the basic service layer. The information #8C indicates that the logical channel is successfully reconfigured, or it may be understood that the information #8C indicates that the logical link between the primary device and the third secondary device is successfully removed.

Optionally, the information #8C may include the device identifier and/or the device address of the third secondary device.

After receiving the information #8C, the basic service layer of the primary device considers that the bottom-layer logical link between the primary device and the third secondary device is removed.

S805: The basic service layer of the primary device sends a transmission channel deletion request to a basic service layer of the third secondary device.

The transmission channel deletion request indicates the third secondary device to release the fourth service channel.

Specifically, in this step, the basic service layer of the primary device may send information #8D to the basic service layer of the third secondary device. The information #8D may include an identifier TCID-d3 of the fourth service channel and an identifier P4 of a fourth port.

S806: The basic service layer of the third secondary device requests the basic application layer of the third secondary device to remove port mapping.

Specifically, in this step, the basic service layer of the third secondary device sends information #8E to the basic application layer of the third secondary device. The information #8E is used to request to remove a mapping relationship between the fourth port and the fourth service channel. The information #8E may include the identifier TCID-d3 of the fourth service channel and the identifier P4 of the fourth port.

S807: The basic application layer of the third secondary device releases the fourth port. Specifically, in this step, the basic application layer of the third secondary device releases the fourth port, that is, removes the mapping relationship between the fourth port and the fourth service channel.

S808: The basic application layer of the third secondary device feeds back port unbinding success to the basic service layer of the third secondary device.

S809: The basic service layer of the third secondary device releases the fourth service channel.

In this step, the basic service layer of the third secondary device removes the mapping relationship between the fourth service channel and the multicast logical channel. Specifically, the mapping relationship between the fourth service channel TCID-d3 and the first logical channel LCID1 and the mapping relationship between the fourth service channel TCID-d3 and the fourth logical channel LCID4 are removed.

S810: The basic service layer of the third secondary device sends a transmission channel deletion response to the basic service layer of the primary device.

The transmission channel deletion response is used to notify the primary device that the service channel on the third secondary device side is successfully released.

Specifically, in this step, the basic service layer of the third secondary device may send information #8F to the basic service layer of the primary device. The information #8F may include the identifier TCID-d3 of the fourth service channel.

S811: The basic service layer of the primary device feeds back, to the basic application layer of the primary device, that the service channel is successfully reconfigured.

Specifically, in this step, the basic service layer of the primary device may send information #8G to the basic application layer of the primary device. Optionally, the information #8G may include the device identifier and/or the device address Ter-ID3 of the third secondary device.

According to the method provided in this embodiment of this application, a member device can leave existing multicast. This implements flexible multicast communication.

It should be noted that in the method 800 shown in FIG. 8, the third secondary device may be any secondary device among multicast members. Correspondingly, content related to the third secondary device in the process may be directly replaced with content corresponding to another member device that needs to leave multicast. Details are not described herein again.

When the multicast service between the primary device and the at least one secondary device is stopped, or a last secondary device leaves multicast, the multicast service channel may be released.

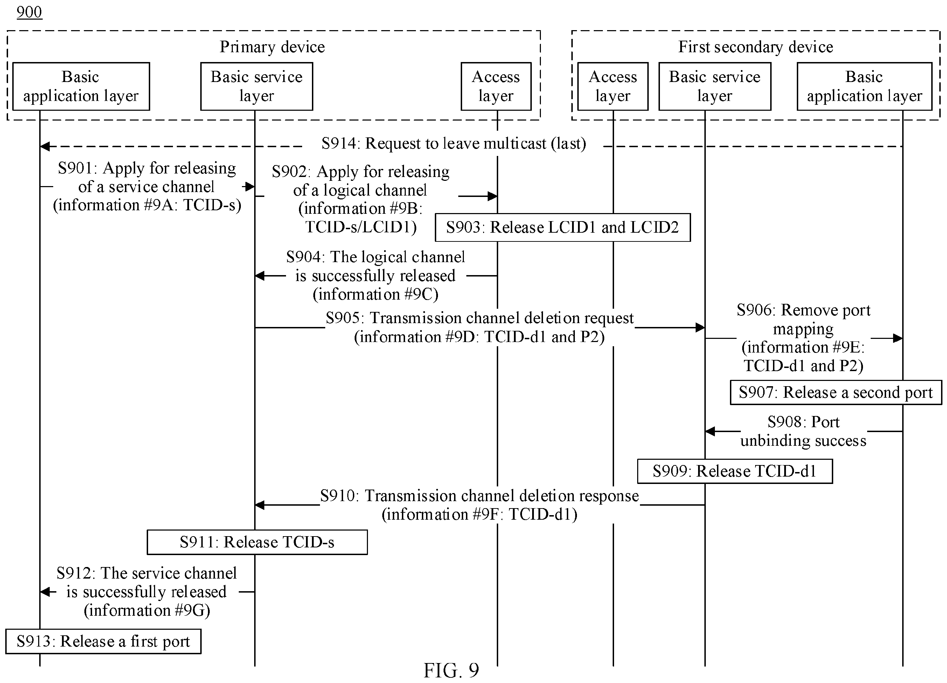

FIG. 9 is a schematic flowchart of releasing a multicast service channel according to an embodiment of this application. A method 900 shown in FIG. 9 includes step S901 to step S914. With reference to the accompanying drawings, the following describes in detail steps of the method 900 by using an example in which the last device that leaves multicast is the first secondary device. S901: The basic application layer of the primary device applies to the basic service layer of the primary device for releasing of a service channel.

This step may also be understood as releasing a multicast service channel for performing a multicast service between the primary device and each secondary device. In this embodiment of this application, the primary device may release data paths to secondary devices one by one, or may release data paths to all multicast members.

Specifically, in step S901, the basic application layer of the primary device may send information #9A to the basic service layer of the primary device, to apply for releasing of the first service channel.

The information #9A may include the identifier TCID-s of the first service channel. The basic service layer of the primary device may determine, based on the identifier of the first service channel in the information #9A, to release the first service channel.

In some embodiments, the information #9A may further include device information (for example, device identifiers and/or device addresses) of all multicast members, and indicates to release multicast service channels between the primary device and all the multicast members.

In some embodiments, the leaving multicast member may passively leave multicast. When the last secondary device leaves multicast, the primary device may directly perform step S901.

In some other embodiments, the leaving multicast member may actively leave multicast, and the method 900 may further include the following step.

S914: The basic application layer of the first secondary device requests the basic application layer of the primary device to leave multicast.

Herein, the first secondary device is the last device that leaves multicast.

S902: The basic service layer of the primary device applies to the access layer of the primary device for releasing of a logical channel.

The logical channel is a multicast logical channel (or referred to as a logical channel group). This step may also be understood as applying to the access layer for releasing of a logical link between the primary device and the last secondary device.

Specifically, in this step, the basic service layer (specifically, the connection management module) of the primary device may send information #9B to the access layer, to apply for releasing of the logical channel between the primary device and the first secondary device.

The information #9B may include the identifier TCID-s of the first service channel and/or the identifier LCID1 of the first logical channel.

Optionally, the information #9B may further include the device information (for example, the device identifiers and/or the device addresses) of all the multicast members, and indicates to release logical links between the primary device and all the multicast members.

S903: The access layer of the primary device releases the first logical channel and the second logical channel.

In this step, because the first secondary device is the last member that leaves multicast, the primary device no longer sends data to the secondary device, and the first secondary device no longer receives data from the primary device. Therefore, the logical channels between the primary device and the first secondary device may be released.

Specifically, the mapping relationships between the multicast logical channel and the service channels (namely, the first service channel and the second service channel) on the primary device side and the first secondary device side may be removed, to release the logical channel. More specifically, the primary device may remove the mapping relationships between the first service channel and both of the first logical channel and the second logical channel, and the first secondary device may remove the mapping relationships between the second service channel and both of the first logical channel and the second logical channel. In this way, resources corresponding to the first logical channel and the second logical channel are released.

S904: The access layer of the primary device feeds back, to the basic service layer of the primary device, that the logical channel is successfully released.

Specifically, in this step, the access layer of the primary device may send information #9C to the basic service layer. The information #9C indicates that the multicast logical channel is successfully released.

Optionally, the information #9C may include the identifier of the first service channel and/or the identifier of the first logical channel.

S905: The basic service layer of the primary device sends a transmission channel deletion request to the basic service layer of the first secondary device.

The transmission channel deletion request indicates the first secondary device to release the second service channel.

Specifically, in this step, the basic service layer of the primary device may send information #9D to the basic service layer of the first secondary device. The information #9D may include the identifier TCID-d1 of the second service channel and the identifier P2 of the second port.

S906: The basic service layer of the first secondary device requests the basic application layer of the first secondary device to remove port mapping.

Specifically, in this step, the basic service layer of the first secondary device sends information #9E to the basic application layer of the first secondary device. The information #9E is used to request to remove the mapping relationship between the second port and the second service channel.

The information #9E may include the identifier TCID-d1 of the second service channel and the identifier P2 of the second port.

S907: The basic application layer of the first secondary device releases the second port.

In this step, the mapping relationship between the second port and the second service channel is removed.

S908: The basic application layer of the first secondary device feeds back port unbinding success to the basic service layer of the first secondary device.

S909: The basic service layer of the first secondary device releases the second service channel.

In this step, the basic service layer of the first secondary device removes the mapping relationship between the second service channel and the multicast logical channel. Specifically, the mapping relationship between the identifier TCID-d1 of the second service channel and the first logical channel LCID1 and the mapping relationship between the identifier TCID-d1 of the second service channel and the second logical channel LCID2 are removed.

S910: The basic service layer of the first secondary device sends a transmission channel deletion response to the basic service layer of the primary device.

The transmission channel deletion response is used to notify the primary device that the service channel on the first secondary device side is successfully released.

Specifically, in this step, the basic service layer of the first secondary device may send information #9F to the basic service layer of the primary device. The information #9F may include the identifier TCID-d1 of the second service channel.

S911: The basic service layer of the primary device releases the first service channel.

Herein, the identifier of the first service channel is TCID-s. In this step, the basic service layer of the primary device may remove the mapping relationships between the first service channel and both of the first logical channel and the second logical channel.

S912: The basic service layer of the primary device feeds back, to the basic application layer of the primary device, that the service channel is successfully released.

Specifically, in this step, the basic service layer of the primary device may send information #9G to the basic application layer of the primary device. Optionally, the information #9G may include the identifier TCID-s of the first service channel.

S913: The basic application layer of the primary device releases the first port.

In this step, the basic application layer of the primary device may remove the mapping relationship between the first port and the first service channel.

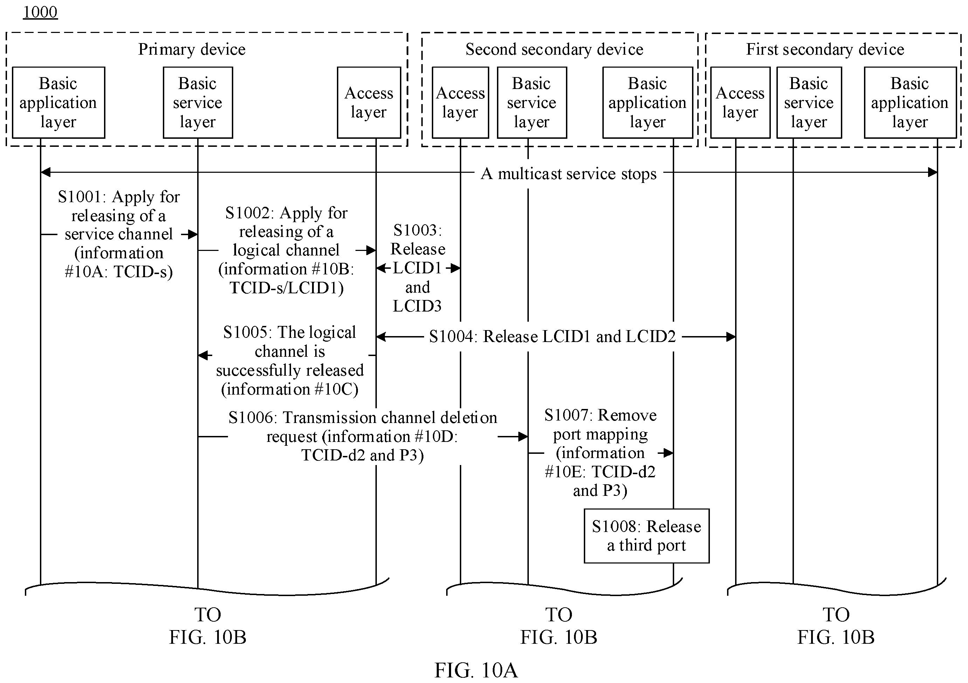

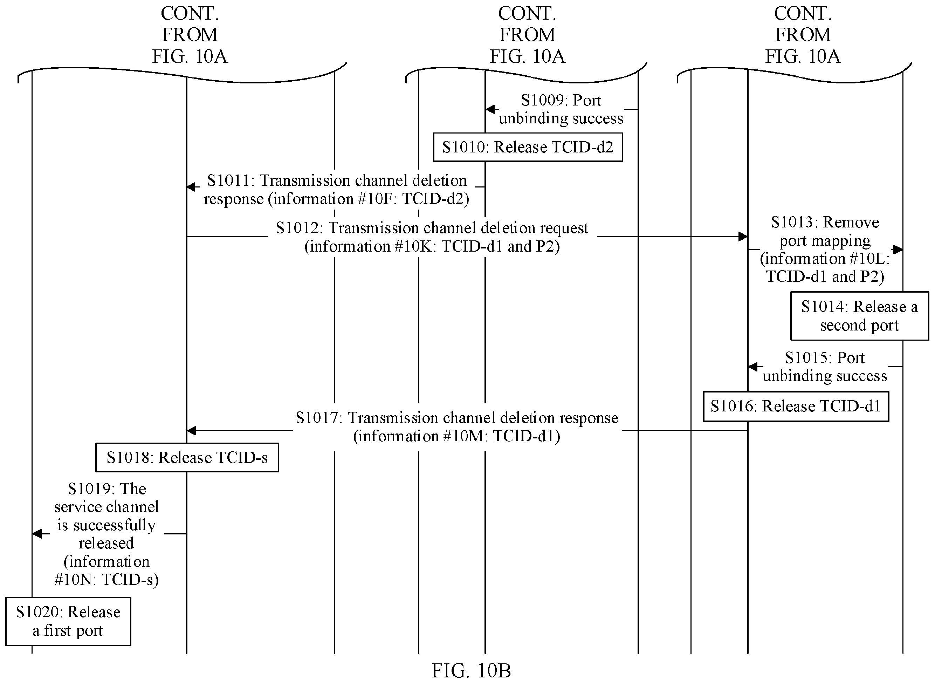

It should be noted that, when the first secondary device is the last device that leaves multicast, when releasing the multicast service channel, the primary device may perform the process shown in FIG. 9 with the first secondary device. When the multicast service between the primary device and the at least one secondary device is stopped, the primary device and the at least one secondary device may perform a process of releasing a multicast service channel shown in FIG. 10A and FIG. 10B.

FIG. 10A and FIG. 10B show a schematic flowchart of releasing a multicast service channel according to another embodiment of this application. A method 1000 shown in FIG. 10A and FIG. 10B includes step S1001 to step S1020. With reference to the accompanying drawings, the following describes in detail steps of the method 1000 by using an example in which the primary device, the first secondary device, and the second secondary device perform the method 1000. S1001: The basic application layer of the primary device applies to the basic service layer of the primary device for releasing of a service channel.

Specifically, in this step, the basic application layer of the primary device may send information #10A to the basic service layer of the primary device, to apply for releasing of the first service channel.

The information #10A may include the identifier TCID-s of the first service channel.

Optionally, the information #10A may further include device information of all multicast members.

FIG. 10A and FIG. 10B are used as an example. The information #10A may include the device identifier and/or the device address of the first secondary device, and the device identifier and/or the device address of the second secondary device.

The basic service layer of the primary device determines, based on the identifier of the first service channel in the information #10A or the device information of all the multicast members, to release the first service channel.

S1002: The basic service layer of the primary device applies to the access layer of the primary device for releasing of a logical channel.

The logical channel is the foregoing logical channel group. This step may also be understood as applying to the access layer for releasing of a logical link between the primary device and each secondary device.

Specifically, in this step, the basic service layer (specifically, the connection management module) of the primary device may send information #10B to the access layer. The information #10B may include the device information of all the multicast members and at least one of the following: the identifier TCID-s of the first service channel and the identifier LCID1 of the first logical channel. The access layer of the primary device determines, based on the information #10B, to release the multicast logical channel.

S1003: The access layer of the primary device and the access layer of the second secondary device release the first logical channel LCID1 and the third logical channel LCID3.

S1004: The access layer of the primary device and the access layer of the first secondary device release the first logical channel LCID1 and the second logical channel LCID2.

The access layer of the primary device removes the logical links between the primary device and the secondary devices sequentially or simultaneously. Specifically, the access layer of the primary device removes the mapping relationship between the multicast logical channel and the service channel on each secondary device side.

It should be noted that, because the first logical channel LCID1 is configured to send multicast service data to a plurality of secondary devices, in a process of releasing the logical channel, the releasing LCID1 in step S1003 may be understood as releasing LCID1 on the second secondary device side, and the releasing LCID1 in step S1004 may be understood as releasing LCID1 on the first secondary device side. When the primary device completes removing of the logical link between the primary device and the last secondary device, LCID1 on the primary device side is released.

S1005: The access layer of the primary device feeds back, to the basic service layer of the primary device, that the logical channel is successfully released.

Specifically, in this step, the access layer of the primary device may send information #10C to the basic service layer. The information #10C indicates that the multicast logical channel is successfully released, and also indicates that the logical link between the primary device and each secondary device is released.

Optionally, the information #10C may include a device identifier and/or a device address of a secondary device that removes a logical link from the primary device. In the example in FIG. 10A and FIG. 10B, the information #10C may include the identifier of the first service channel and/or the identifier of the first logical channel.

S1006: The basic service layer of the primary device sends a transmission channel deletion request to the basic service layer of the second secondary device.

The transmission channel deletion request indicates the second secondary device to release the third service channel.

Specifically, in this step, the basic service layer of the primary device may send information #10D to the basic service layer of the second secondary device. The information #10D may include the identifier TCID-d2 of the third service channel and the identifier P3 of the third port.

S1007: The basic service layer of the second secondary device requests the basic application layer of the second secondary device to remove port mapping.

Specifically, in this step, the basic service layer of the second secondary device sends information #10E to the basic application layer of the second secondary device. The information #10E may include the identifier TCID-d2 of the third service channel and the identifier P3 of the third port, and is used to request to remove the mapping relationship between the third port and the third service channel.

S1008: The basic application layer of the second secondary device releases the third port.

In this step, the mapping relationship between the third port and the third service channel is removed.

S1009: The basic application layer of the second secondary device feeds back port unbinding success to the basic service layer of the second secondary device.

S1010: The basic service layer of the second secondary device releases the third service channel (TCID-d2).

In this step, the basic service layer of the second secondary device removes a mapping relationship between the third service channel and the multicast logical channel. Specifically, the basic service layer of the second secondary device removes the mapping relationship between the third service channel TCID-d2 and the first logical channel LCID1, and removes the mapping relationship between the third service channel TCID-d2 and the third logical channel LCID3.

S1011: The basic service layer of the second secondary device sends a transmission channel deletion response to the basic service layer of the primary device.

The transmission channel deletion response is used to notify the primary device that the service channel on the second secondary device side is successfully released.

Specifically, in this step, the basic service layer of the second secondary device may send information #10F to the basic service layer of the primary device. The information #10F may include the identifier TCID-d2 of the third service channel.

S1012: The basic service layer of the primary device sends a transmission channel deletion request to the basic service layer of the first secondary device.

The transmission channel deletion request indicates the first secondary device to release the second service channel.

Specifically, in this step, the basic service layer of the primary device may send information #10K to the basic service layer of the first secondary device. The information #10K may include the identifier TCID-d1 of the second service channel and the identifier P2 of the second port.

S1013: The basic service layer of the first secondary device requests the basic application layer of the first secondary device to remove port mapping.

Specifically, in this step, the basic service layer of the first secondary device sends information #10L to the basic application layer of the first secondary device. The information #10L may include the identifier TCID-d1 of the second service channel and the identifier P2 of the second port, and is used to request to remove the mapping relationship between the second port and the second service channel.

S1014: The basic application layer of the first secondary device releases the second port.

In this step, the mapping relationship between the second port and the second service channel is removed.

S1015: The basic application layer of the first secondary device feeds back port unbinding success to the basic service layer of the first secondary device.

S1016: The basic service layer of the first secondary device releases the second service channel (TCID-d1).

In this step, the basic service layer of the first secondary device removes the mapping relationship between the second service channel and the multicast logical channel. Specifically, the basic service layer of the first secondary device removes the mapping relationship between the second service channel TCID-d1 and the first logical channel LCID1, and removes the mapping relationship between the second service channel TCID-d1 and the second logical channel LCID2. S1017: The basic service layer of the first secondary device sends a transmission channel deletion response to the basic service layer of the primary device.

The transmission channel deletion response is used to notify the primary device that the service channel on the first secondary device side is successfully released.

Specifically, in this step, the basic service layer of the first secondary device may send information #10M to the basic service layer of the primary device. The information #10M may include the identifier TCID-d1 of the second service channel.

It may be understood that, if more secondary devices are disconnected from the primary device, the primary device and each secondary device perform steps similar to steps S1006 to S1011 or steps S1012 to S1017. Only two secondary devices are used as an example herein. However, a quantity of secondary devices is not limited in this application.

When the bottom-layer logical link between the primary device and the multicast member device is disconnected, the following steps are performed.

S1018: The basic service layer of the primary device releases the first service channel.

In this step, the mapping relationship between the first service channel and the multicast logical channel is removed. Specifically, the basic service layer of the primary device removes the mapping relationship between the first service channel TCID-s and the first logical channel LCID1. S1019: The basic service layer of the primary device feeds back, to the basic application layer of the primary device, that the service channel is successfully released.

Specifically, in this step, the basic service layer of the primary device may send information #10N to the basic application layer of the primary device. Optionally, the information #10N may include the identifier TCID-s of the first service channel.

S1020: The basic application layer of the primary device releases the first port.

In this step, the mapping relationship between the first port P1 and the first service channel TCID-s is removed.

In the methods 900 and 1000 provided in embodiments of this application, when the multicast service ends or the last multicast member leaves multicast, the multicast service channel of the primary device may be released, so that transmission resources can be released, and resource utilization is improved.

The device identifier in the foregoing embodiments may be an identifier obtained upon delivery of an electronic device, for example, a device identifier (device identifier, Device ID), a unique device identifier (unique device identifier, UDID), or a universally unique identifier (universally unique identifier, UUID), an international mobile equipment identity (international mobile equipment identity, IMEI), or the like; or may be an identifier allocated by another electronic device (for example, the first electronic device).

The device address in the foregoing embodiments may be an address obtained upon delivery of an electronic device, for example, a media access control (media access control, MAC) address, a physical address, or the like; or may be an address allocated by a network after an electronic device is connected to the network.

With reference to the foregoing embodiments and the accompanying drawings, an embodiment of this application provides a method for configuring a channel for transmitting a multicast service. The method may be implemented in the communication system 100 shown in FIG. 1, and more specifically, is implemented in an electronic device having the protocol architecture shown in FIG. 2, for example, applied to a first electronic device. The first electronic device may include a basic application layer, a basic service layer, and an access layer. A port may be configured at the basic application layer. A service channel may be configured at the basic service layer. A logical channel may be configured at the access layer. The port has a mapping relationship with the service channel. The service channel has a mapping relationship with the logical channel. After the mapping relationship between the port and the service channel and the mapping relationship between the service channel and the logical channel are completed, it may be considered that a formed channel can be used for service transmission.

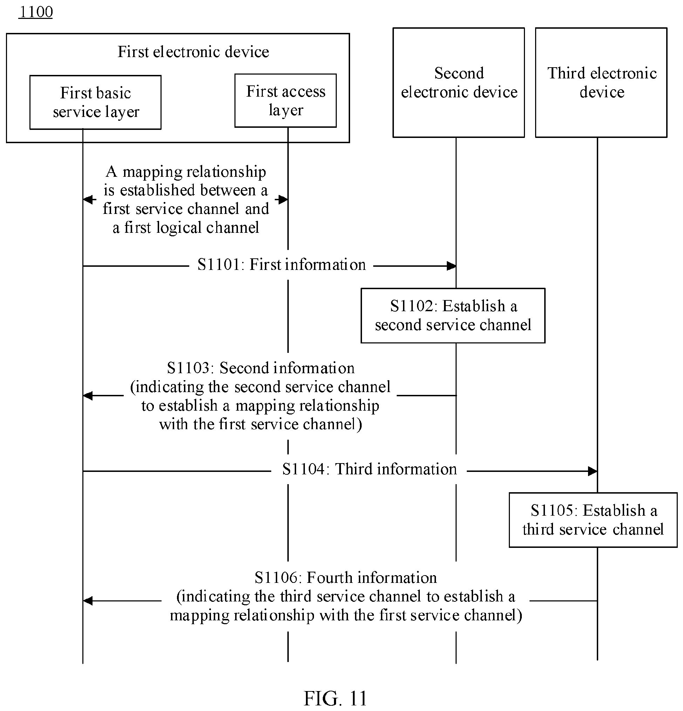

FIG. 11 is a schematic flowchart of a method for configuring a channel for transmitting a multicast service according to an embodiment of this application. The method 1100 may be applied to a first electronic device. The first electronic device includes a first basic service layer and a first access layer. A first service channel is configured at the first basic service layer. A first logical channel is configured at the first access layer. The first service channel has a mapping relationship with the first logical channel. The first logical channel may receive data from the first service channel. In this embodiment of this application, the first service channel and the first logical channel are configured to transmit first data. The first data is multicast service data.

As shown in FIG. 11, the method 1100 may include steps S1101 to S1106.

S1101: The first basic service layer sends first information to a second electronic device.

The first information indicates the second electronic device to establish a second service channel. In this embodiment of this application, the second electronic device has the architecture shown in FIG. 2, and includes a basic service layer. The second service channel is a service channel on the second electronic device side, and is specifically a channel at the basic service layer of the second electronic device.

S1102: The second electronic device establishes the second service channel.

Specifically, this step may be performed by the basic service layer (specifically, a connection management module) of the second electronic device. After establishing the second service channel, the second electronic device may establish a mapping relationship between the second service channel and the first logical channel, and establish a mapping relationship between the second service channel and the first service channel.

S1103: The first basic service layer receives second information sent by the second electronic device.

The second information indicates the second service channel to establish the mapping relationship with the first service channel.

After the second service channel establishes the mapping relationship with the first service channel, the second service channel may be configured to receive first data from the first logical channel. The first data transmitted on the first logical channel comes from the first service channel. S1104: The first basic service layer sends third information to a third electronic device.

The third information indicates the third electronic device to establish a third service channel.

In this embodiment of this application, the third electronic device has the architecture shown in FIG. 2, and includes a basic service layer. The third service channel is a service channel on the third electronic device side, and is specifically a channel at the basic service layer of the third electronic device.

S1105: The third electronic device establishes the third service channel.

Specifically, this step may be performed by the basic service layer (specifically, a connection management module) of the third electronic device. After establishing the third service channel, the third electronic device may establish a mapping relationship between the third service channel and the first logical channel, and establish a mapping relationship between the third service channel and the first service channel.

S1106: The first basic service layer receives fourth information sent by the third electronic device. The fourth information indicates the third service channel to establish the mapping relationship with the first logical channel.

After the third service channel establishes the mapping relationship with the first service channel, the third service channel is configured to receive the first data from the first service channel. The first data transmitted on the first logical channel comes from the first service channel.

In other words, after the first electronic device, the second electronic device, and the third electronic device establish the mapping relationships between the first logical channel and all of the first service channel, the second service channel, and the third service channel respectively, a one-to-many multicast service may be performed between the first electronic device, the second electronic device, and the third electronic device. Specifically, the first electronic device may transmit the first data to the second electronic device and the third electronic device on the first service channel and the first logical channel. Correspondingly, the second electronic device receives the first data from the first logical channel on the second service channel, and the third electronic device receives the first data from the first logical channel on the third service channel. In this way, multicast service transmission in which a piece of data is sent by the first electronic device and separately received by the second electronic device and the third electronic device may be implemented.

In this embodiment of this application, the first electronic device is an example of the foregoing primary device, for example, the first electronic device 110 in FIG. 1. The second electronic device and the third electronic device are examples of secondary devices, for example, the second electronic device 121 and the second electronic device 122 in FIG. 1.

In this embodiment of this application, the first information and the second information that are exchanged between the first electronic device and the second electronic device may be transmitted on a control channel between the first electronic device and the second electronic device. The second information and the fourth information that are exchanged between the first electronic device and the third electronic device may be transmitted on a control channel between the first electronic device and the third electronic device.

In some embodiments, the first information may include an identifier of a second port, an identifier of the first service channel, and an identifier of the first logical channel. The second port is a port used by the second electronic device to transmit the first data.

Herein, the identifier of the second port is used by the second electronic device to establish a mapping relationship between the second service channel and the second port. The identifier of the first service channel is used by the second electronic device to establish the mapping relationship between the second service channel and the first service channel. The identifier of the first logical channel is used by the second electronic device to establish the mapping relationship between the second service channel and the first logical channel.

The second port is obtained through negotiation between the second electronic device and the first electronic device.

In some embodiments, the second information may include an identifier of the second service channel. The second service channel has the mapping relationship with the second port. The second service channel has the mapping relationship with the first logical channel. Optionally, the second information may further include an identifier of a bottom-layer logical channel, for example, the identifier of the first logical channel.

In some embodiments, the third information may include an identifier of a third port, the identifier of the first service channel, and the identifier of the first logical channel. The third port is a port used by the third electronic device to transmit the first data.

Herein, the identifier of the third port is used by the third electronic device to establish a mapping relationship between the third service channel and the third port. The identifier of the first service channel is used by the third electronic device to establish a mapping relationship between the third service channel and the first service channel. The identifier of the first logical channel is used by the third electronic device to establish the mapping relationship between the third service channel and the first logical channel.

The third port is obtained through negotiation between the third electronic device and the first electronic device.

In some embodiments, the fourth information may include an identifier of the third service channel. The third service channel has the mapping relationship with the third port. The third service channel has the mapping relationship with the first logical channel. Optionally, the fourth information may further include an identifier of a bottom-layer logical channel, for example, the identifier of the first logical channel.

In some embodiments, the first information and the third information may be carried in a transmission channel creation request message. The second information and the fourth information may be carried in a transmission channel creation response message.

By way of example and not limitation, the first information may be, for example, the information #3D in FIG. 3B, the information #4D in FIG. 4B, or the information #7D in FIG. 7A. The second information may be, for example, the information #3F in FIG. 3B, the information #4F in FIG. 4B, or the information #7F in FIG. 7B. The third information may be, for example, the information #3K in FIG. 3C, the information #4K in FIG. 4B, or the information #7D in FIG. 7A. The fourth information may be, for example, the information #3M in FIG. 3C, the information #4M in FIG. 4B, or the information #7F in FIG. 7B. For descriptions of various information, refer to the foregoing related descriptions. For brevity, details are not described herein again.

As mentioned above, the first service channel is a service channel on the first electronic device side, and has the mapping relationship with the first logical channel. Therefore, before step S1101, the first electronic device needs to establish the mapping relationship between the first service channel and the first logical channel.

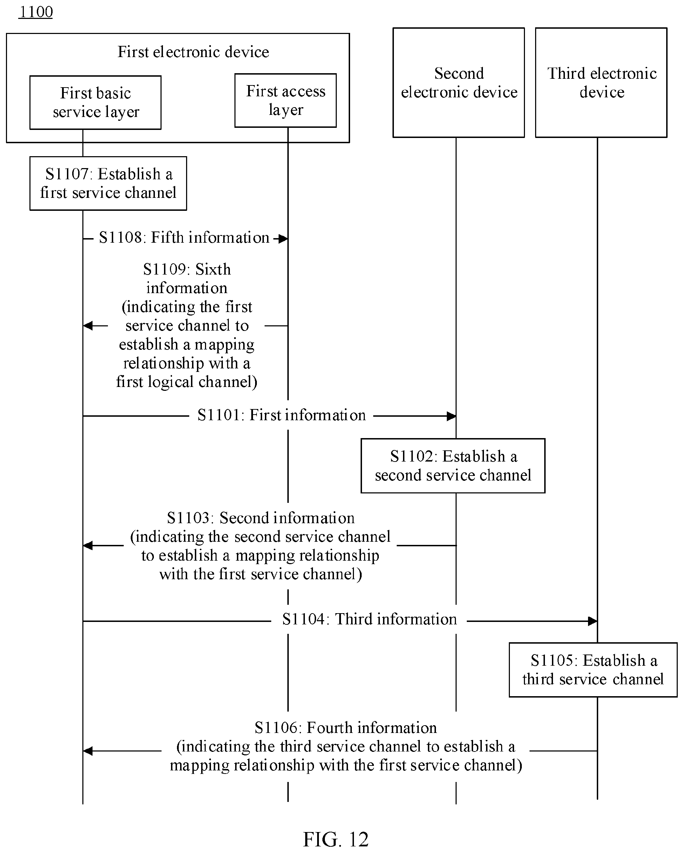

Refer to FIG. 12. In some embodiments, before step S1101, the method 1100 further includes the following steps.

S1107: The first basic service layer establishes the first service channel.

Specifically, this step may be performed by a connection management module of the first electronic device.

S1108: The first basic service layer sends fifth information to the first access layer.

The fifth information is used to apply for a logical channel for the first service channel.

Correspondingly, the first access layer maps the first service channel to the first logical channel based on the fifth information. The first logical channel may be an existing logical channel of the first access layer, may be a reconfigured logical channel at the first access layer, or may be a newly established logical channel at the first access layer. The first access layer may determine the first logical channel based on a transmission status.

S1109: The first basic service layer receives sixth information sent by the first access layer.

The sixth information indicates the first service channel to establish the mapping relationship with the first logical channel.

In this embodiment of this application, a process in which the first electronic device establishes the mapping relationship between the first service channel and the first logical channel (that is, steps S1107 to S1109) may be performed in a process in which a data transmission path is established between the first electronic device and the second electronic device, may be performed in a process in which a data transmission path is established between the first electronic device and the third electronic device, or may be performed before data transmission paths are established between the first electronic device and both of the second electronic device and the third electronic device (that is, in a process in which a data transmission path is established between the first electronic device and an electronic device other than the second electronic device and the third electronic device).

In other words, steps S1107 to S1109 are performed in the process in which the data transmission path is established between the first electronic device and a 1^{st} secondary device. The 1^{st} secondary device may be the second electronic device, may be the third electronic device, or may be the electronic device other than the second electronic device and the third electronic device.

In some embodiments, the second electronic device may be a secondary device that is the first one establishing a data path with the first electronic device. The fifth information may include the identifier of the first service channel and device information of the second electronic device.

In other words, when applying for a logical channel, the first basic service layer of the first electronic device may indicate information of a secondary device to the first access layer. The secondary device is the secondary device that is the first one establishing the data path with the first electronic device.

Herein, the identifier of the first service channel is used by the first access layer to establish the mapping relationship between the first service channel and the first logical channel. The device information of the second electronic device indicates the first access layer to establish a logical link between the first electronic device and the second electronic device. In other words, the device information of the second electronic device indicates the first electronic device to establish the data path with the second electronic device.

Optionally, the device information of the second electronic device may include a device identifier and/or a device address of the second electronic device.

The device identifier of the second electronic device may be an identifier obtained upon delivery of the second electronic device, for example, a device ID, a UDID, a UUID, an IMEI, or the like. The device identifier of the second electronic device may alternatively be an identifier allocated by the first electronic device. For example, the primary device may allocate, to a secondary device that receives a multicast service, an identifier for distinguishing between different secondary devices.

The device address of the second electronic device may be a device address obtained upon delivery of the second electronic device, for example, a MAC address, a physical address, or the like. The device address of the second electronic device may alternatively be an address allocated by a network after the second electronic device is connected to the network.

In this embodiment of this application, there may be a correspondence between the device identifier of the second electronic device and the device address of the second electronic device. Based on one piece of information and the correspondence between two pieces of information, the other piece of information may be obtained. For example, the device address of the second electronic device may be obtained based on the device identifier of the second electronic device and the correspondence.

In some other embodiments, the second electronic device may be a secondary device that is the first one establishing a data path with the first electronic device. The fifth information may include the identifier of the first service channel and multicast member information. The multicast member information includes device information of an electronic device configured to receive the first data. In other words, when applying for a logical channel, the first basic service layer of the first electronic device may indicate information of a plurality of secondary devices to the first access layer. The plurality of secondary devices are a plurality of secondary devices that need to establish data paths with the first electronic device.

Herein, the identifier of the first service channel is used by the first access layer to establish the mapping relationship between the first service channel and the first logical channel. The multicast member information indicates the first access layer to establish a logical link between the first electronic device and each of the electronic devices configured to receive the first data. In other words, the multicast member information indicates the first electronic device to establish a data path with each electronic device that receives the first data.

Optionally, the device information of the electronic device configured to receive the first data includes a device identifier and/or a device address of the electronic device configured to receive the first data.

The device identifier herein may be an identifier obtained upon delivery of the electronic device, for example, a device ID, a UDID, a UUID, an IMEI, or the like; or may be an identifier allocated by the first electronic device.

The device address herein may be an address obtained upon delivery of the electronic device, for example, a MAC address, a physical address, or the like; or may be an address allocated by a network after the electronic device is connected to the network.

In this embodiment of this application, there may be a correspondence between the device identifier of the electronic device and the device address of the electronic device. Based on one piece of information and the correspondence between two pieces of information, the other piece of information may be obtained.

By way of example and not limitation, the fifth information may be, for example, the information #3B in FIG. 3A or the information #4B in FIG. 4A. For descriptions of various information, refer to the foregoing related descriptions. For brevity, details are not described herein again.

As mentioned above, the sixth information indicates the first service channel to establish the mapping relationship with the first logical channel. The sixth information may be sent to the first basic service layer after the first access layer completes establishment of the logical link between the first electronic device and the 1^{st} secondary device, or may be sent to the first basic service layer after the first access layer completes establishment of all the logical links between the first electronic device and the plurality of secondary devices (including the secondary device that is the first one establishing the data path with the first electronic device).

In some embodiments, an example in which the second electronic device is the secondary device that is the first one establishing the data path with the first electronic device is still used. The sixth information may include the identifier of the first service channel, the identifier of the first logical channel, and the device information of the second electronic device.

In other words, after completing establishment of the logical link between the first electronic device and the 1^{st} secondary device, the first access layer of the first electronic device feeds back, to the first basic service layer, that the first service channel is successfully applied for.

Herein, the identifier of the first service channel and the identifier of the first logical channel indicate that the mapping relationship is established between the first service channel and the first logical channel. The device information of the second electronic device indicates that establishment of the logical link between the first electronic device and the second electronic device is completed.

In this embodiment of this application, the first logical channel is established between the first electronic device and each secondary device.

In some other embodiments, an example in which the second electronic device is the secondary device that is the first one establishing the data path with the first electronic device is still used. The sixth information may include the identifier of the first service channel, the identifier of the first logical channel, and the multicast member information.

In other words, after completing establishment of all the logical links between the first electronic device and the plurality of secondary devices, the first access layer of the first electronic device feeds back, to the first basic service layer, that the first service channel is successfully applied for. Herein, the identifier of the first service channel and the identifier of the first logical channel indicate that the mapping relationship is established between the first service channel and the first logical channel. The multicast member information indicates that establishment of the logical link between the first electronic device and each of the plurality of electronic devices configured to receive the first data is completed.

By way of example and not limitation, the sixth information may be, for example, the information #3C in FIG. 3A or the information #4C in FIG. 4A. For descriptions of various information, refer to the foregoing related descriptions. For brevity, details are not described herein again.

In this embodiment of this application, the plurality of electronic devices configured to receive the first data are the electronic devices indicated by the first basic service layer in the fifth information. For example, when the fifth information includes the device information of the second electronic device and the device information of the third electronic device, the fifth information indicates the first access layer to establish the logical link between the first electronic device and the second electronic device and the logical link between the first electronic device and the third electronic device. After the first access layer completes establishment, the first access layer sends the sixth information to the first basic service layer. The sixth information includes the device information of the second electronic device and the device information of the third electronic device, to indicate that establishment of the logical link between the first electronic device and the second electronic device is completed and establishment of the logical link between the first electronic device and the third electronic device is completed.

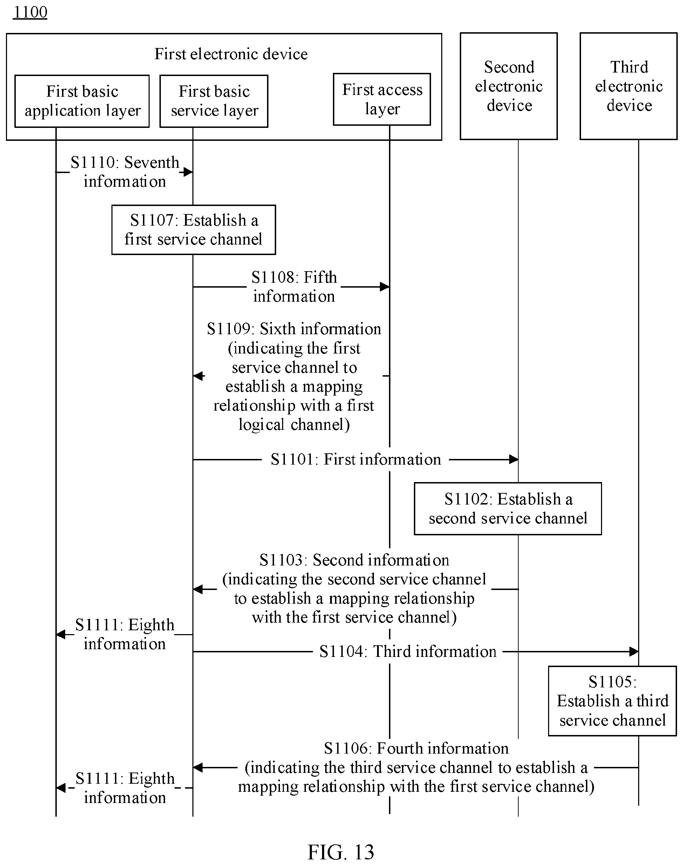

Refer to FIG. 13. In some embodiments, the first electronic device further includes a first basic application layer. Before step S1107, the method 1100 further includes the following step.

S1110: The first basic service layer receives seventh information sent by the first basic application layer.

The seventh information indicates to apply for a service channel for a first port. The first port is a port that is used by the first electronic device to transmit the first data.

In other words, the first basic service layer may establish the first service channel based on the indication of the first basic application layer.

The seventh information may include an identifier of the first port.

Herein, the identifier of the first port is used by the first basic service layer to establish the mapping relationship between the first service channel and the first port.

In some embodiments, an example in which the second electronic device is the secondary device that is the first one establishing the data path with the first electronic device is still used. The seventh information may further include the device information of the second electronic device and the identifier of the second port. The second port is the port used by the second electronic device to receive the first data.

In other words, before the first basic service layer establishes the first service channel, the first basic application layer may indicate, to the first basic service layer, device information of and a port used by a secondary device that is the first one establishing a data path with the first electronic device, to indicate the first service layer to complete application for the first service channel in a process in which the data path is established between the first electronic device and the 1^{st} secondary device.

In some other embodiments, an example in which the second electronic device is the secondary device that is the first one establishing the data path with the first electronic device is still used. The seventh information may further include the multicast member information and multicast member port information.

The multicast member information includes the device information (for example, the device identifier and/or the device address) of the electronic device configured to receive the first data, and indicates an electronic device that establishes a data path with the first electronic device (specifically, an electronic device that needs to establish a data path with the first electronic device before a multicast service is transmitted). The multicast member port information includes an identifier of a port used by the electronic device configured to receive the first data, and indicates the port used by the electronic device configured to receive the first data. More specifically, the multicast member port information is used by each electronic device that receives the first data subsequently to establish a mapping relationship between a port and a service channel.

It should be understood that the electronic device configured to receive the first data herein is an electronic device that needs to receive the first data before the first electronic device transmits a multicast service.

By way of example and not limitation, the seventh information may be, for example, the information #3A in FIG. 3A or the information #4A in FIG. 4A. For descriptions of various information, refer to the foregoing related descriptions. For brevity, details are not described herein again.

In this embodiment of this application, the port used by the electronic device configured to receive the first data is obtained through negotiation between the first basic application layer of the first electronic device and each of the electronic devices configured to receive the first data.

In other words, before the first basic service layer establishes the first service channel, the first basic application layer may indicate, to the first basic service layer, device information of and ports used by a plurality of secondary devices that establish data paths with the first electronic device, to indicate the first service layer to complete application for the first service channel in a process in which the data paths are established between the first electronic device and the plurality of secondary devices.

Corresponding to step S1110, the method 1100 further includes the following step.

S1111: The first basic service layer sends eighth information to the first basic application layer. The eighth information indicates the first port to establish the mapping relationship with the first service channel.

In this embodiment of this application, step S1111 may be performed after step S1103 and before step S1104, as shown in step S1111 represented by a solid line in FIG. 13. To be specific, the eighth information may be sent after establishment of the data path between the first electronic device and the second electronic device is completed and before establishment of the data path between the first electronic device and the third electronic device is completed. The second electronic device is a secondary device that is the first one establishing a data path with the first electronic device.

In this embodiment, the eighth information may include the identifier of the first port, the identifier of the first service channel, and the device information of the second electronic device.

Herein, the identifier of the first port and the identifier of the first service channel indicate that the mapping relationship is established between the first port and the first service channel. The device information of the second electronic device indicates that establishment of the data path between the first electronic device and the second electronic device is completed, and the second electronic device may receive multicast service data sent by the first electronic device.

Optionally, step S1111 may also be performed after step S1104, as shown in step S1111 represented by a dashed line in FIG. 13. To be specific, the eighth information may be sent after establishment of the data paths between the first electronic device and the plurality of secondary devices is completed. The plurality of secondary devices include the secondary device that is the first one establishing the data path with the first electronic device.

In this embodiment, the eighth information may include the identifier of the first port, the identifier of the first service channel, and the multicast member information.

Herein, the identifier of the first port and the identifier of the first service channel indicate that the mapping relationship is established between the first port and the first service channel. The multicast member information includes the device information (for example, device identifiers and/or device addresses) of the plurality of electronic devices that have established the data paths with the first electronic device, and indicates an electronic device that can receive the multicast service data sent by the first electronic device.

By way of example and not limitation, the eighth information may be, for example, the information #3G in FIG. 3B or the information #4G in FIG. 4B. For descriptions of various information, refer to the foregoing related descriptions. For brevity, details are not described herein again.

The second electronic device and the third electronic device in the foregoing embodiment may be electronic devices that need to establish data paths with the first electronic device in a process in which the first basic service layer applies for a service channel (or before a multicast service is performed). For example, the second electronic device may be the first secondary device used in the foregoing descriptions in FIG. 3A to FIG. 3C to FIG. 4A and FIG. 4B, and the third electronic device may be the second secondary device used in the foregoing descriptions in FIG. 3A to FIG. 3C to FIG. 4A and FIG. 4B.

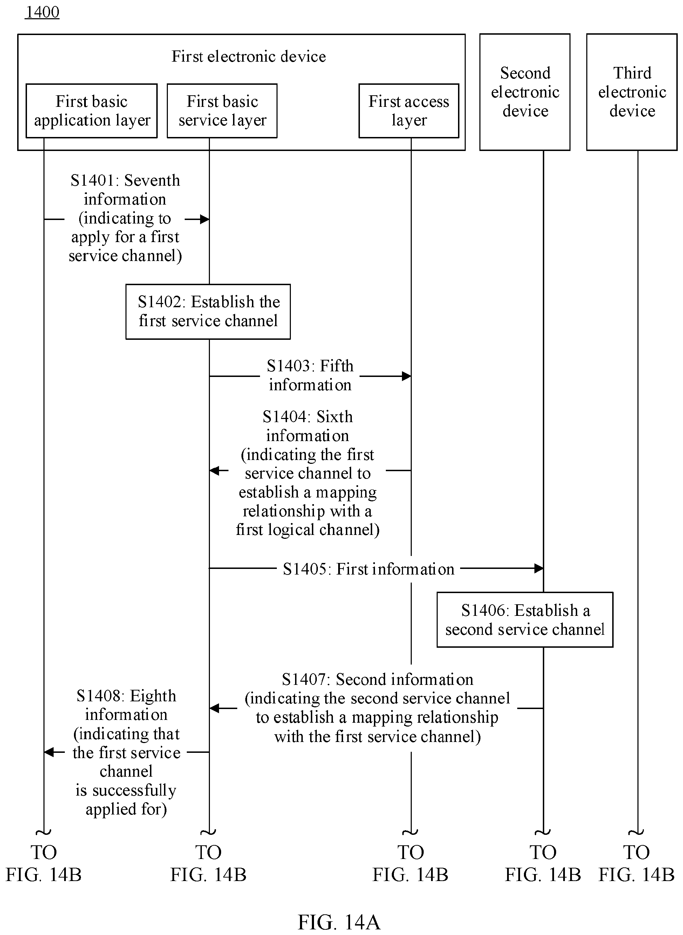

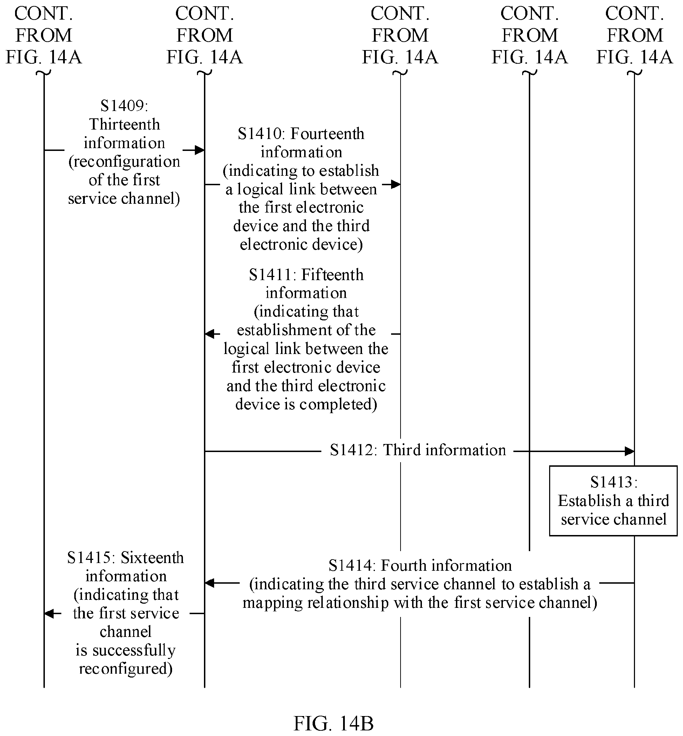

FIG. 14A and FIG. 14B show a schematic flowchart of another method for configuring a channel for transmitting a multicast service according to an embodiment of this application. The method 1400 may be applied to a first electronic device. The first electronic device includes a first basic application layer, a first basic service layer, and a first access layer. The method 1400 includes step S1401 to step S1415.

S1401: The first basic service layer receives seventh information sent by the first basic application layer.

The seventh information indicates to apply for a service channel for a first port. The first port is a port that is used by the first electronic device to transmit first data.

In some embodiments, the seventh information may include an identifier of the first port, device information of a second electronic device, and an identifier of a second port. The second port is a port that is used by the second electronic device to receive the first data. In this example, the second electronic device is a secondary device that is the first one establishing a data path with the first electronic device.

Herein, the identifier of the first port is used by the first basic service layer to establish a mapping relationship between a first service channel and the first port. The device information of the second electronic device and the second port indicate device information of and a port used by the secondary device that is the first one establishing the data path with the first electronic device respectively.

In some other embodiments, the seventh information may include an identifier of the first port, multicast member information, and multicast member port information.

Herein, the identifier of the first port is used by the first basic service layer to establish a mapping relationship between a first service channel and the first port. The multicast member information includes device information (for example, a device identifier and/or a device address) of an electronic device configured to receive the first data, and indicates an electronic device that establishes a data path with the first electronic device before a multicast service is performed. The multicast member port information includes an identifier of a port used by the electronic device configured to receive the first data, and indicates the port used by the electronic device configured to receive the first data.

Content included in the seventh information in step S1401 is similar to content included in the seventh information in step S1110 of the method 1100. This is merely a brief description herein. For other parts that are not detailed, refer to the related descriptions of step S1110.

It should be noted that the multicast member information in the method 1100 may include the second electronic device and the third electronic device, but the multicast member information in the method 1400 includes the second electronic device, but does not include a third electronic device. In the method 1400, the second electronic device needs to establish the data path with the first electronic device before a multicast service is performed, and the third electronic device needs to establish a data path with the first electronic device when a multicast service is performed.

However, it may be understood that the optional embodiment described in the method 1100 is also applicable to the method 1400, provided that the third electronic device is replaced with another electronic device that needs to establish a data path with the first electronic device before a multicast service is transmitted in the related descriptions of the third electronic device. For brevity, only brief description is provided in the description of the method 1400. For detailed descriptions, refer to the related descriptions of the method 1100.

S1402: The first basic service layer establishes the first service channel.

S1403: The first basic service layer sends fifth information to the first access layer.

The fifth information is used to apply for a logical channel for the first service channel. Correspondingly, the first access layer maps the first service channel to a first logical channel based on the fifth information.

In some embodiments, the fifth information may include an identifier of the first service channel and the device information of the second electronic device.

Herein, the identifier of the first service channel is used by the first access layer to establish a mapping relationship between the first service channel and the first logical channel. The device information of the second electronic device indicates the first access layer to establish a logical link between the first electronic device and the second electronic device.

In some other embodiments, the fifth information may include the identifier of the first service channel and the multicast member information.

Herein, the identifier of the first service channel is used by the first access layer to establish a mapping relationship between the first service channel and the first logical channel. The multicast member information indicates the first access layer to establish a logical link between the first electronic device and each of the electronic devices configured to receive the first data. The electronic device configured to receive the first data herein is an electronic device that needs to establish a data path with the first electronic device before a multicast service is transmitted.

S1404: The first basic service layer receives sixth information sent by the first access layer.

The sixth information indicates the first service channel to establish the mapping relationship with the first logical channel.

In some embodiments, the sixth information may include the identifier of the first service channel, an identifier of the first logical channel, and device information of the second electronic device.

Herein, the identifier of the first service channel and the identifier of the first logical channel indicate that the mapping relationship is established between the first service channel and the first logical channel. The device information of the second electronic device indicates that establishment of the logical link between the first electronic device and the second electronic device is completed.

In some other embodiments, the sixth information may include the identifier of the first service channel, an identifier of the first logical channel, and the multicast member information.

Herein, the identifier of the first service channel and the identifier of the first logical channel indicate that the mapping relationship is established between the first service channel and the first logical channel. The multicast member information indicates that establishment of the logical link between the first electronic device and each of the plurality of electronic devices configured to receive the first data is completed. The electronic device configured to receive the first data herein is an electronic device that needs to establish a data path with the first electronic device before a multicast service is transmitted.

S1405: The first basic service layer sends first information to the second electronic device.

The first information indicates the second electronic device to establish a second service channel. Optionally, the first information may include the identifier of the second port, the identifier of the first service channel, and the identifier of the first logical channel. The second port is a port used by the second electronic device to transmit the first data.

S1406: The second electronic device establishes the second service channel.

In addition, the second electronic device establishes a mapping relationship between the second service channel and the first service channel, and establishes a mapping relationship between the second service channel and the first logical channel.

S1407: The first basic service layer receives second information sent by the second electronic device.

The second information indicates the second service channel to establish the mapping relationship with the first service channel.

Optionally, the second information may include an identifier of the second service channel. Optionally, the second information may further include the identifier of the first logical channel. The second service channel has a mapping relationship with the second port. The second service channel has the mapping relationship with the first logical channel.

S1408: The first basic service layer sends eighth information to the first basic application layer. The eighth information indicates the first port to establish the mapping relationship with the first service channel.

In some embodiments, the eighth information may include the identifier of the first port, the identifier of the first service channel, and the device information of the second electronic device. Herein, the identifier of the first port and the identifier of the first service channel indicate that the mapping relationship is established between the first port and the first service channel. The device information of the second electronic device indicates that establishment of the data path between the first electronic device and the second electronic device is completed, and the second electronic device may receive multicast service data sent by the first electronic device.

In some other embodiments, the eighth information may include the identifier of the first port, the identifier of the first service channel, and the multicast member information.

Herein, the identifier of the first port and the identifier of the first service channel indicate that the mapping relationship is established between the first port and the first service channel. The multicast member information includes device information (for example, device identifiers and/or device addresses) of a plurality of electronic devices that have established data paths with the first electronic device, and indicates an electronic device that can receive the multicast service data sent by the first electronic device. The plurality of electronic devices that have established the data paths with the first electronic device herein is electronic devices that need to establish data paths with the first electronic device before a multicast service is transmitted.

Steps S1402 to S1408 are similar to steps S1107, S1108, S1109, S1101, S1102, S1103, and S1111 in the method 1100. For specific content of the information carried in steps S1402 to S1408, refer to the related descriptions of the corresponding steps in the method 1100. Details are not described herein again.

After step S1408 is completed, the first electronic device may transmit a multicast service. In a transmission process of the multicast service, the third electronic device is an electronic device that newly joins multicast. A process in which the data path is established between the first electronic device and the third electronic device is shown in steps S1409 to S1415 in FIG. 14B. Still refer to FIG. 14A and FIG. 14B.

S1409: The first basic service layer receives thirteenth information sent by the first basic application layer.

The thirteenth information is used to apply for reconfiguration of the first service channel, to transmit a multicast service between the first electronic device and the third electronic device.

Optionally, the thirteenth information may include device information of the third electronic device and the identifier of the first service channel.

Herein, the device information of the third electronic device indicates that an electronic device establishing a data path with the first electronic device is the third electronic device. The identifier of the first service channel indicates the first basic service layer to reconfigure the first service channel, so that the first electronic device can transmit multicast service data (for example, the foregoing first data) to the third electronic device on the first service channel.

S1410: The first basic service layer sends fourteenth information to the first access layer.

The fourteenth information indicates the first access layer to establish a logical link between the first electronic device and the third electronic device. Specifically, the fourteenth information indicates to establish a logical channel between an access layer of the first electronic device and an access layer of the third electronic device. The logical channel established between the access layer of the first electronic device and the access layer of the third electronic device includes the first logical channel.

Optionally, the fourteenth information may include the device information of the third electronic device and at least one of the following: the identifier of the first service channel and the identifier of the first logical channel.

Herein, the identifier of the first service channel or the identifier of the first logical channel or both indicate to establish the first logical channel between the access layer of the first electronic device and the access layer of the third electronic device. In this embodiment of this application, the mapping relationship has been established between the first service channel and the first logical channel. Therefore, the first access layer may determine, based on the identifier of the first service channel, that the logical channel established between the first electronic device and the third electronic device includes the first logical channel. The device information of the third electronic device indicates the first access layer to establish the logical link between the first electronic device and the third electronic device.

Optionally, the device information of the third electronic device may include a device identifier and/or a device address of the third electronic device.

The device identifier of the third electronic device may be an identifier obtained upon delivery of the third electronic device, for example, a device ID, a UDID, a UUID, an IMEI, or the like; or may be an identifier allocated by the first electronic device.

The device address of the third electronic device may be an address obtained upon delivery of the third electronic device, for example, a MAC address, a physical address, or the like; or may be an address allocated by a network after the third electronic device is connected to the network.

S1411: The first basic service layer receives fifteenth information sent by the first access layer.

The fifteenth information indicates that establishment of the logical link between the first electronic device and the third electronic device is completed.

Optionally, the fifteenth information may include the identifier of the first service channel, the identifier of the first logical channel, and the device information of the third electronic device.

Herein, the device information of the third electronic device indicates that establishment of the logical link between the first electronic device and the third electronic device is completed, to complete reconfiguration of the first service channel.

S1412: The first basic service layer sends third information to the third electronic device.

The third information indicates the third electronic device to establish a third service channel.

Optionally, the third information may include an identifier of a third port, the identifier of the first service channel, and the identifier of the first logical channel. The third port is a port used by the third electronic device to transmit the first data.

S1413: The third electronic device establishes the third service channel.

S1414: The first basic service layer receives fourth information sent by the third electronic device. The fourth information indicates the third service channel to establish a mapping relationship with the first service channel.

Optionally, the fourth information may include an identifier of the third service channel. Optionally, the fourth information may further include the identifier of the first logical channel. The third service channel has a mapping relationship with the third port. The third service channel has a mapping relationship with the first logical channel.

Steps S1412 to S1414 are similar to steps S1104 to S1106 in the method 1100. For specific content of the information carried in steps S1412 to S1414, refer to the related descriptions of the corresponding steps in the method 1100. Details are not described herein again.

S1415: The first basic service layer sends sixteenth information to the first basic application layer. The sixteenth information indicates that the first service channel is successfully reconfigured, and the multicast service may be transmitted between the first electronic device and the third electronic device on the first service channel.

Optionally, the sixteenth information may include the device information of the third electronic device and the identifier of the first service channel.

Herein, the device information of the third electronic device indicates that establishment of the data path between the first electronic device and the third electronic device is completed, and the third electronic device may receive the multicast service data sent by the first electronic device.

Optionally, the sixteenth information may include the identifier of the first port.

Herein, the identifier of the first service channel or the identifier of the first port or both indicate that the first service channel is successfully reconfigured.

By way of example and not limitation, the thirteenth information may be, for example, the information #7A in FIG. 7A. The fourteenth information may be, for example, the information #7B in FIG. 7A. The fifteenth information may be, for example, the information #7C in FIG. 7A. The sixteenth information may be, for example, the information #7G in FIG. 7B. For descriptions of various information, refer to the foregoing related descriptions. For brevity, details are not described herein again.

In the embodiment described in the method 1400, the second electronic device may be an electronic device that needs to establish a data path with the first electronic device in a process in which the first basic service layer applies for a service channel (or before a multicast service is transmitted), and the third electronic device may be an electronic device that needs to establish a data path with the first electronic device to join multicast in a process in which the first electronic device transmits a multicast service. For example, the second electronic device may be the first secondary device used in the foregoing descriptions in FIG. 3A to FIG. 3C to FIG. 4A and FIG. 4B, and the third electronic device may be the third secondary device used in the foregoing descriptions in FIG. 7A and FIG. 7B.

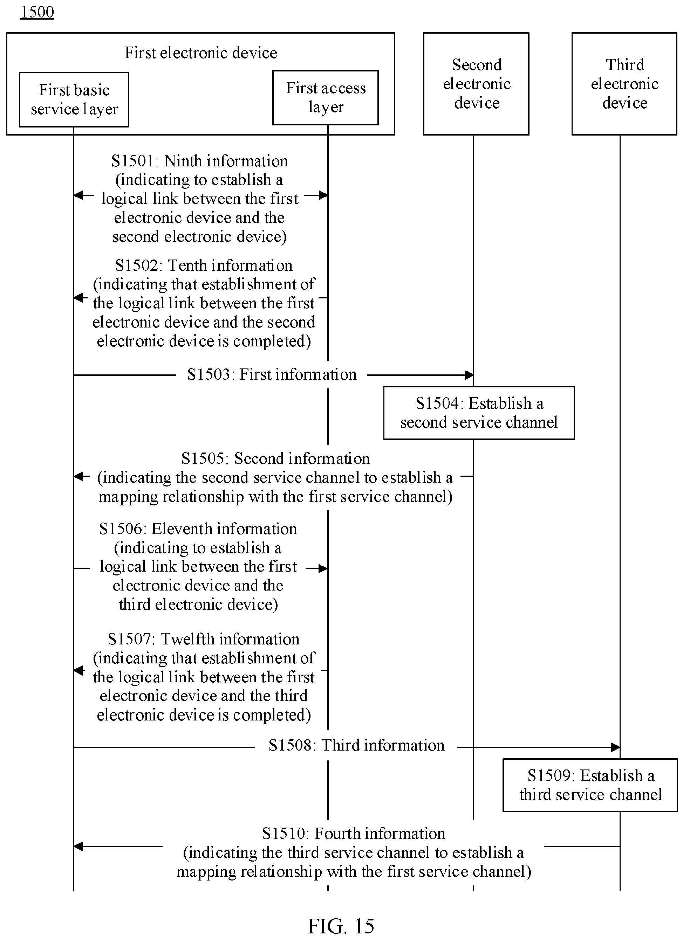

FIG. 15 is a schematic flowchart of another method for configuring a channel for transmitting a multicast service according to an embodiment of this application. The method 1500 may be applied to a first electronic device. The first electronic device includes a first basic application layer, a first basic service layer, and a first access layer. A first service channel is configured at the first basic service layer. A first logical channel is configured at the first access layer. The first service channel has a mapping relationship with the first logical channel. The first logical channel may receive data (for example, first data) from the first service channel.

The method 1500 is mainly used to describe a process in which a logical link is established between the first electronic device and another electronic device. The method 1500 includes step S1501 to step S1510.

S1501: The first basic service layer sends ninth information to the first access layer.

The ninth information indicates the first access layer to establish a logical link between the first electronic device and a second electronic device.

Optionally, the ninth information may include device information of the second electronic device and an identifier of the first service channel.

In some embodiments, the logical link between the first electronic device and the second electronic device includes the first logical channel. The first logical channel is configured to transmit data that is sent by the first electronic device to the another electronic device.

In some embodiments, the logical link between the first electronic device and the second electronic device includes the first logical channel and a second logical channel. Both the first logical channel and the second logical channel have a mapping relationship with the first service channel. The first logical channel is configured to transmit data that is sent by the first electronic device to the second electronic device, and the second logical channel is configured to transmit data that is sent by the second electronic device to the first electronic device. In other words, the first logical channel and the second logical channel are configured to transmit uplink data and downlink data respectively.

S1502: The first basic service layer receives tenth information sent by the first access layer.

The tenth information indicates that establishment of the logical link between the first electronic device and the second electronic device is completed.

Optionally, if the first logical channel is established between the first electronic device and the second electronic device in step S1501, the tenth information may include the device information of the second electronic device, the identifier of the first service channel, and an identifier of the first logical channel.

Optionally, if the first logical channel and the second logical channel are established between the first electronic device and the second electronic device in step S1501, the tenth information may include the device information of the second electronic device, the identifier of the first service channel, an identifier of the first logical channel, and an identifier of the second logical channel. Optionally, the device information of the second electronic device may include a device identifier and/or a device address of the second electronic device.

S1503: The first basic service layer sends first information to the second electronic device.

The first information indicates the second electronic device to establish a second service channel. S1504: The second electronic device establishes the second service channel.

Optionally, if the first logical channel is established between the first electronic device and the second electronic device in step S1501, the second electronic device may further establish a mapping relationship between the second service channel and the first logical channel in this step. Optionally, if the first logical channel and the second logical channel are established between the first electronic device and the second electronic device in step S1501, the second electronic device may further establish a mapping relationship between the second service channel and the first logical channel and a mapping relationship between the second service channel and the second logical channel in this step.

S1505: The first basic service layer receives second information sent by the second electronic device.

The second information indicates the second service channel to establish a mapping relationship with the first service channel.

Steps S1503 to S1505 are similar to steps S1101 to S1103 in the method 1100. For specific content of the information carried in steps S1503 to S1505, refer to the related descriptions of the corresponding steps in the method 1100. Details are not described herein again.

S1506: The first basic service layer sends eleventh information to the first access layer.

The eleventh information indicates the first access layer to establish a logical link between the first electronic device and the third electronic device.

Optionally, the eleventh information may include device information of the third electronic device and at least one of the following: the identifier of the first service channel and the identifier of the first logical channel.

In some embodiments, the logical link between the first electronic device and the third electronic device includes the first logical channel. The first logical channel is configured to transmit the data that is sent by the first electronic device to the another electronic device.

In some embodiments, the logical link between the first electronic device and the second electronic device includes the first logical channel and a third logical channel. Both the first logical channel and the third logical channel have a mapping relationship with the first service channel. The first logical channel is configured to transmit data that is sent by the first electronic device to the third electronic device, and the third logical channel is configured to transmit data that is sent by the third electronic device to the first electronic device. In other words, the first logical channel and the third logical channel are configured to transmit uplink data and downlink data respectively.

In other words, the first electronic device may establish the first logical channel with both the second electronic device and the third electronic device. The first logical channel is configured to transmit multicast service data from the first electronic device to the second electronic device and the third electronic device. In addition, logical channels for transmitting data sent to the first electronic device are separately established between the first electronic device and the second electronic device and between the first electronic device and the third electronic device.

S1507: The first basic service layer receives twelfth information sent by the first access layer.

The twelfth information indicates that establishment of the logical link between the first electronic device and the third electronic device is completed.

Optionally, if the first logical channel is established between the first electronic device and the third electronic device in step S1506, the twelfth information may include the device information of the third electronic device, the identifier of the first service channel, and the identifier of the first logical channel.

Optionally, if the first logical channel and the third logical channel are established between the first electronic device and the third electronic device in step S1506, the tenth information may include the device information of the third electronic device, the identifier of the first service channel, the identifier of the first logical channel, and an identifier of the third logical channel.

Optionally, the device information of the third electronic device may include a device identifier and/or a device address of the third electronic device.

S1508: The first basic service layer sends third information to the third electronic device.

The third information indicates the third electronic device to establish a third service channel.

S1509: The third electronic device establishes the third service channel.

Optionally, if the first logical channel is established between the first electronic device and the third electronic device in step S1506, the third electronic device may further establish a mapping relationship between the third service channel and the first logical channel in this step.

Optionally, if the first logical channel and the third logical channel are established between the first electronic device and the third electronic device in step S1506, the third electronic device may further establish a mapping relationship between the third service channel and the first logical channel and a mapping relationship between the third service channel and the third logical channel in this step.

S1510: The first basic service layer receives fourth information sent by the third electronic device. The fourth information indicates the third service channel to establish a mapping relationship with the first service channel.

Steps S1508 to S1510 are similar to steps S1104 to S1106 in the method 1100. For specific content of the information carried in steps S1508 to S1510, refer to the related descriptions of the corresponding steps in the method 1100. Details are not described herein again.

By way of example and not limitation, the ninth information may be, for example, the information #3B in FIG. 3A. The tenth information may be, for example, the information #3C in FIG. 3A. The eleventh information may be, for example, the information #3H in FIG. 3B. The twelfth information may be, for example, the information #3J in FIG. 3C.

By way of example and not limitation, the ninth information and the eleventh information may be combined into, for example, the information #4B in FIG. 4A. The tenth information and the twelfth information may be combined into, for example, the information #4C in FIG. 4A.

For descriptions of various information, refer to the foregoing related descriptions. For brevity, details are not described herein again.

In this embodiment of this application, each logical channel established between the first electronic device and a multicast member device may be a unidirectional transmission channel. For example, the first logical channel is configured to transmit the data that is sent by the first electronic device to the another electronic device. The second logical channel is configured to transmit the data that is sent by the second electronic device to the first electronic device. The third logical channel is configured to transmit the data that is sent by the third electronic device to the first electronic device. A service channel established at a basic service layer of an electronic device may be a bidirectional transmission channel. For example, the first service channel on the first electronic device side may transmit the data that is sent by the first electronic device to the another electronic device, or may transmit data that is sent by the another electronic device to the first electronic device. Specifically, the first service channel may send data to the first logical channel, and may receive data from the second logical channel or the third logical channel.

The second electronic device and the third electronic device in the method 1500 may be any electronic device that establishes a data path with the first electronic device to transmit a multicast service. For example, the second electronic device and the third electronic device may be any two of the first secondary device, the second secondary device, and the third secondary device mentioned in the foregoing embodiments.

The embodiments related to the foregoing methods 1100 and 1400 may also be applied to the method 1500. It should be noted that, when the second electronic device is a secondary device that is the first one establishing a data path with the first electronic device, the foregoing fifth information and the ninth information in step S1501 may be combined and sent in one message, and the foregoing sixth information and the tenth information in step S1502 may be combined and sent in one message.

It should be noted that, in the foregoing methods 1100 and 1400, if a logical channel for transmitting uplink data and a logical channel for transmitting downlink data need to be established between the first electronic device and each electronic device that receives multicast service data, for example, corresponding actions are performed in steps S1108 and S1109 in the method 1100 or steps S1403 and S1404 and steps S1410 to S1411 in the method 1400, the first access layer may feed back, to the first basic service layer, identifiers of corresponding uplink logical channels (for example, the second logical channel and the third logical channel) in addition to an identifier of a downlink logical channel (for example, the first logical channel).

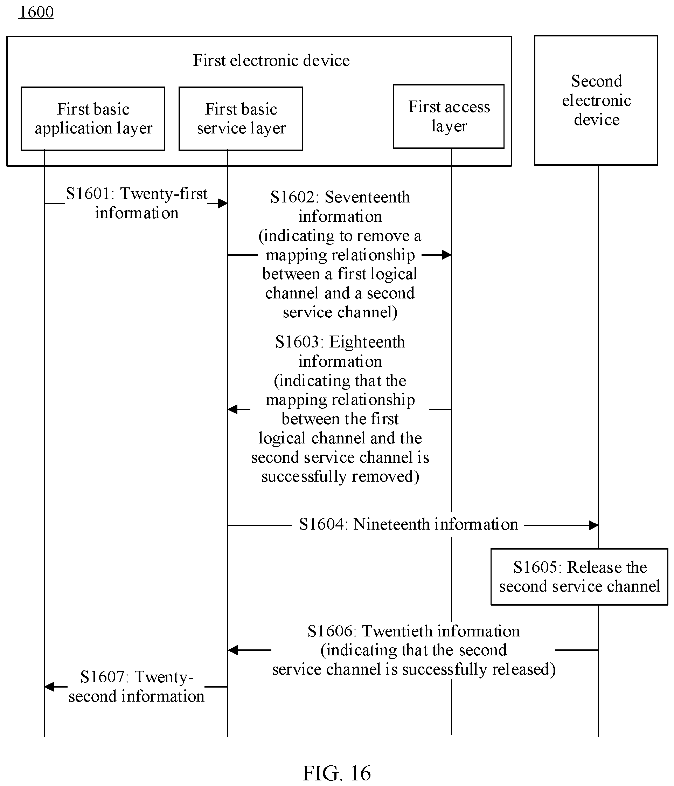

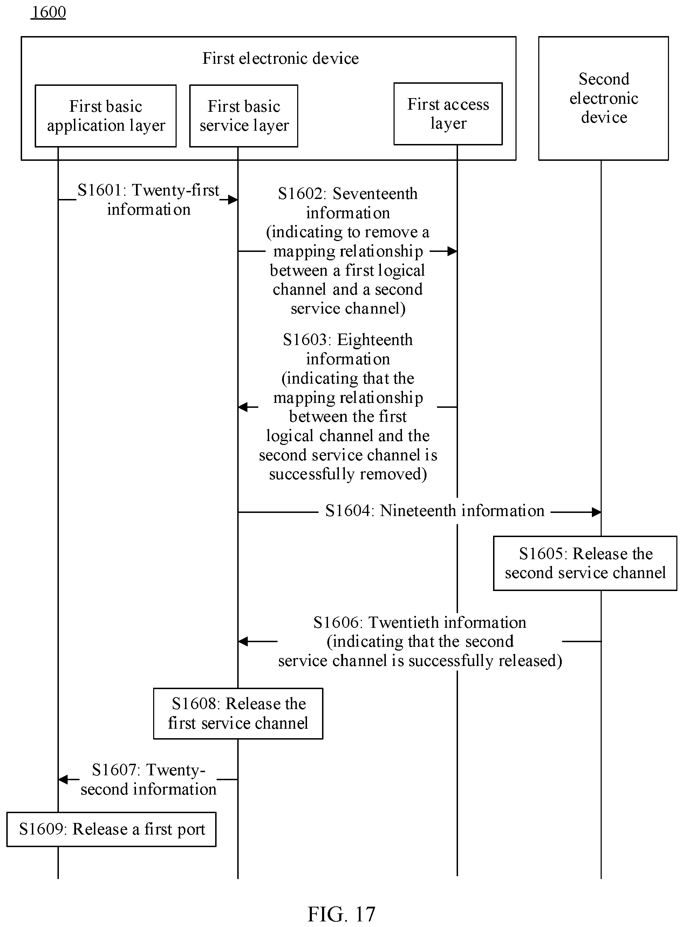

With reference to FIG. 11 to FIG. 15, the foregoing description describes the process of creating a multicast service channel and the process of joining a multicast group by a member in the method for configuring a channel for transmitting a multicast service provided in embodiments of this application. With reference to FIG. 16 and FIG. 17, the following describes the process of releasing a multicast service channel and the process of leaving multicast by a member in the method for configuring a channel for transmitting a multicast service provided in embodiments of this application.

FIG. 16 is a schematic flowchart of still another method for configuring a channel for transmitting a multicast service according to an embodiment of this application. In the method 1600 shown in FIG. 16, a second electronic device is used as an example to describe the process in which a multicast member leaves multicast. The second electronic device may be any secondary device that receives a multicast service sent by a first electronic device, for example, the foregoing first secondary device, the foregoing second secondary device, or the foregoing third secondary device.

The method 1600 includes step S1601 to step S1607.

S1601: A first basic service layer receives twenty-first information sent by a first basic application layer.

The twenty-first information indicates to release a channel for transmitting first data between the first electronic device and the second electronic device.

Optionally, the twenty-first information may include an identifier of a first service channel and device information of the second electronic device.

Herein, the identifier of the first service channel indicates a reconfigured service channel. The device information of the second electronic device indicates an electronic device that removes a data path from the first electronic device, that is, an electronic device that leaves multicast.

S1602: The first basic service layer sends seventeenth information to a first access layer.

The seventeenth information indicates the first access layer to remove a mapping relationship between a first logical channel and a second service channel.

Optionally, the seventeenth information may include the device information of the second electronic device and at least one of the following: the identifier of the first service channel and an identifier of the first logical channel.

Herein, the identifier of the first service channel or the identifier of the first logical channel or both indicate a released logical channel. The device information of the second electronic device indicates an electronic device that removes a logical link from the first electronic device.

In this step, the mapping relationship between the first logical channel and the second logical channel is removed. Correspondingly, the second electronic device may release the first logical channel on the second electronic device side. If another logical channel, for example, the foregoing second logical channel, is further established between the first electronic device and the second electronic device, the second electronic device may further release the second logical channel.

S1603: The first basic service layer receives eighteenth information sent by the first access layer.

The eighteenth information indicates that the mapping relationship between the first logical channel and the second service channel is successfully removed.

Optionally, the eighteenth information may include the device information of the second electronic device.

S1604: The first basic service layer sends nineteenth information to the second electronic device. The nineteenth information indicates the second electronic device to release the second service channel.

Optionally, the nineteenth information may include an identifier of a second port and an identifier of the second service channel. The second port is a port used by the second electronic device to receive multicast service data from the first electronic device.

S1605: The second electronic device releases the second service channel.

Specifically, the second electronic device may include a second basic service layer and a second basic application layer. The second basic service layer applies to the second basic application layer for removing of a mapping relationship between the second service channel and the second port based on the nineteenth information. After the mapping relationship between the second service channel and the second port is successfully removed, the second basic service layer releases the second service channel.

S1606: The first basic service layer receives twentieth information sent by the second electronic device.

The twentieth information indicates that the second service channel is successfully released. Correspondingly, the first basic service layer may determine, based on the twentieth information, that a data path between the second electronic device and the first electronic device is released.

S1607: The first basic service layer sends twenty-second information to the first basic application layer.

The twenty-second information indicates that the data path between the second electronic device and the first electronic device is successfully released.

By using the method 1600 shown in FIG. 16, any electronic device that receives the multicast service data from the first electronic device may leave multicast.

When the second electronic device is a last electronic device that is connected to the first electronic device and that receives the multicast service data (for example, the first data), a multicast service channel between the first electronic device and a secondary device may be released.

Specifically, as shown in FIG. 17, the method 1600 may further include the following step.

S1608: The first basic service layer releases the first service channel.

Step S1608 may be performed after step S1606 and before step S1607. The first basic service layer may remove a mapping relationship between the first service channel and a first port, to release the first service channel. The first port is a port that is used by the first electronic device to transmit the first data.

The method 1600 further includes the following step.

S1609: The first basic application layer releases the first port.

Step S1609 may be performed after step S1607. The first basic service layer may remove the mapping relationship between the first port and the first service channel, to release the first port. It should be noted that, when the second electronic device is the last electronic device that is connected to the first electronic device and that receives the multicast service data, it may be understood that the twenty-first information sent in step S 1601 indicates to release the first service channel. In this case, the twenty-first information may include the identifier of the first service channel, and does not need to include device information of an electronic device.

Similarly, it may be understood that the twenty-second information sent in step S1607 indicates to release the first port.

By way of example and not limitation, the seventeenth information may be, for example, the information #8B in FIG. 8, the information #9B in FIG. 9, or the information #10B in FIG. 10A. The eighteenth information may be, for example, the information #8C in FIG. 8, the information #9C in FIG. 9, or the information #10C in FIG. 10A. The nineteenth information may be, for example, the information #8D in FIG. 8, the information #9D in FIG. 9, or the information #10D or the information #10K in FIG. 10B. The twentieth information may be, for example, the information #8F in FIG. 8, the information #9F in FIG. 9, or the information #10F or the information #10M in FIG. 10B. The twenty-first information may be, for example, the information #8A in FIG. 8, the information #9A in FIG. 9, or the information #10A in FIG. 10A. The twenty-second information may be, for example, the information #9G in FIG. 9 or the information #10N in FIG. 10B. For descriptions of various information, refer to the foregoing related descriptions. For brevity, details are not described herein again.

In FIG. 17, a process in which a data path between an electronic device and the first electronic device is removed is used as an example for description. The process shown in FIG. 17 is also applicable to a process in which data paths between a plurality of electronic devices and the first electronic device need to be removed. For example, when a multicast service stops or ends, all data paths between the first electronic device and a plurality of multicast members may be released. The following still describes a difference between the processes in the two scenarios with reference to the process shown in FIG. 17.

Refer to FIG. 17. When a multicast service stops or ends, the following describes the difference.

In step S1601, the first basic application layer may send the twenty-first information to the first basic service layer.

The twenty-first information indicates to release the first service channel.

Optionally, the twenty-first information may include the identifier of the first service channel and/or device information of all online devices configured to receive a multicast service sent by the first electronic device.

Correspondingly, the first basic service layer determines, based on the twenty-first information, to release the first service channel, to release a channel for receiving a multicast service between the first electronic device and another secondary device.

In step S1602, the first basic service layer may send the seventeenth information to the first access layer.

The seventeenth information indicates to release the first logical channel. When a logical channel for transmitting uplink data is further established between the first electronic device and the another electronic device, it may be understood that the seventeenth information indicates to release a logical channel established between the first electronic device and each secondary device. Optionally, the seventeenth information may include the identifier of the first service channel and/or the identifier of the first logical channel.

Correspondingly, the first access layer may determine, based on the seventeenth information, to release the first logical channel, to release and remove a logical link between the first electronic device and the another secondary device. Specifically, the first access layer may remove the logical links between the first electronic device and the secondary devices sequentially or simultaneously. After the first access layer releases a logical link between the first electronic device and a last secondary device, the first access layer sends the eighteenth information to the first basic service layer, where the eighteenth information indicates that the first logical channel is successfully released. Alternatively, each time a logical link between a secondary device and the first electronic device is removed, the first access layer sends the eighteenth information to the first basic service layer, where the eighteenth information indicates that the logical link between the secondary device and the first electronic device is successfully removed, and also indicates that a mapping relationship between the first logical channel and a service channel on a secondary device side is removed.

For example, the second electronic device is used as an example. The eighteenth information sent by the first access layer in step S1603 indicates that the mapping relationship between the first logical channel and the second service channel is removed.

Then, steps S 1604 to S 1606 are performed between the first basic service layer and each secondary device, to release the service channel on each secondary device side.

After releasing of all the service channels on the secondary device side is completed, in step S1608, the first basic service layer releases the first service channel. Specifically, the first basic service layer removes the mapping relationship between the first service channel and the first port, and removes a mapping relationship between the first service channel and the first logical channel, to complete releasing of the first service channel.

In step S1607, the first basic service layer sends the twenty-second information to the first basic application layer, where the twenty-second information indicates the first basic application layer to release the first port.

Correspondingly, the first basic application layer releases the first port based on the twenty-second information, to complete release of the multicast service channel.

By using the methods shown in FIG. 16 and FIG. 17, an electronic device can leave multicast and release a multicast service channel. This implements flexible multicast communication.

In the methods shown in FIG. 11 to FIG. 17, the basic application layer may be the basic application layer 230 shown in FIG. 2, and an operation performed by the basic application layer may be specifically performed by a corresponding service module at the basic application layer 230 shown in FIG. 2. The basic service layer may be the basic service layer 220 shown in FIG. 2, and an operation performed by the basic service layer may be specifically performed by the connection management module at the basic service layer 220 shown in FIG. 2. The access layer may be the access layer 210 shown in FIG. 2, and an operation performed by the access layer may be specifically performed by a corresponding access module at the access layer 210 shown in FIG. 2.

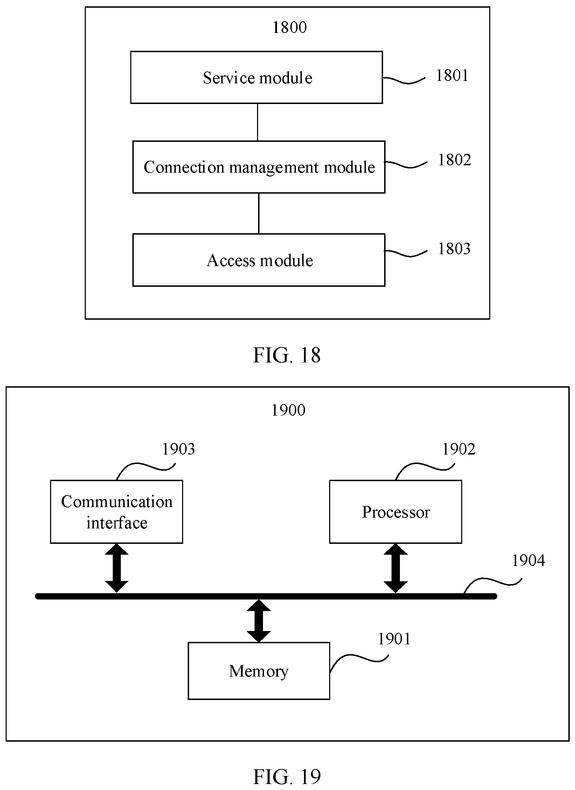

The foregoing description describes in detail the method embodiments of embodiments of this application with reference to FIG. 1 to FIG. 17, and the following describes in detail apparatus embodiments of embodiments of this application with reference to FIG. 18 and FIG. 19. It should be understood that the descriptions of the method embodiments correspond to the descriptions of the apparatus embodiments. Therefore, for parts not described in detail, refer to the foregoing method embodiments.

FIG. 18 is a schematic diagram of a structure of an apparatus according to an embodiment of this application. The apparatus 1800 in FIG. 18 may be a specific example of the first electronic device in FIG. 1 or FIG. 2. The apparatus 1800 shown in FIG. 18 may be configured to perform the methods shown in FIG. 11 to FIG. 17, and may specifically implement the embodiments shown in FIG. 3A to FIG. 3C to FIG. 10A and FIG. 10B. To avoid redundancy, details are not described again.

The apparatus 1800 shown in FIG. 18 includes a service module 1801, a connection management module 1802, and an access module 1803.

The service module 1801 may perform steps or operations performed by the first basic application layer in the methods shown in FIG. 11 to FIG. 17, or perform steps or operations performed by the basic application layer of the primary device in the embodiments shown in FIG. 3A to FIG. 3C to FIG. 10A and FIG. 10B, or perform another process of the methods described in this specification, for example, a process performed by a basic application layer of an electronic device.

The connection management module 1802 may perform steps or operations performed by the first basic service layer in the methods shown in FIG. 11 to FIG. 17, or perform steps or operations performed by the basic service layer of the primary device in the embodiments shown in FIG. 3A to FIG. 3C to FIG. 10A and FIG. 10B, or perform another process of the methods described in this specification, for example, a process performed by a basic service layer of an electronic device.

The access module 1803 may perform steps or operations performed by the first access layer in the methods shown in FIG. 11 to FIG. 17, or perform steps or operations performed by the access layer of the primary device in the embodiments shown in FIG. 3A to FIG. 3C to FIG. 10A and FIG. 10B, or perform another process of the methods described in this specification, for example, a process performed by an access layer of an electronic device.

By way of example and not limitation, the service module 1801 may be any service module at the basic application layer 230 shown in FIG. 2. The connection management module 1802 may be the connection management module at the basic service layer 220 shown in FIG. 2. The access module 1803 may be a module that supports an SLB access technology or a module that supports an SLE access technology at the access layer 210 shown in FIG. 2.

FIG. 19 is a schematic diagram of a structure of an apparatus according to another embodiment of this application. The apparatus 1900 shown in FIG. 19 may correspond to the apparatus described above, for example, the first electronic device or the primary device. Specifically, the apparatus 1900 may be a specific example of the first electronic device in FIG. 1 or FIG. 2.

The apparatus 1900 includes a processor 1902. In this embodiment of this application, the processor 1902 is configured to implement a corresponding control and management operation. For example, the processor 1902 is configured to support the apparatus in performing the methods or operations or functions shown in FIG. 11 to FIG. 17 in the foregoing embodiments and the methods or operations or functions in the embodiments shown in FIG. 3A to FIG. 3C to FIG. 10A and FIG. 10B.

Optionally, the apparatus 1900 may further include a memory 1901 and a communication interface 1903. The processor 1902, the communication interface 1903, and the memory 1901 may be connected to each other or connected to each other through a bus 1904. The communication interface 1903 is configured to support the apparatus in performing communication, and the memory 1110 is configured to store program code and data of the apparatus. The processor 1902 invokes the code or data stored in the memory 1901 to implement a corresponding operation. The memory 1901 may be coupled to or may not be coupled to the processor. The coupling in this embodiment of this application is indirect coupling or a communication connection between apparatuses, units, or modules for information exchange between the apparatuses, the units, or the modules, and may be in electrical, mechanical, or other forms.

The processor 1902 may be a central processing unit, a general-purpose processor, a digital signal processor, an application-specific integrated circuit, a field programmable gate array or another programmable logic device, a transistor logic device, a hardware component, or any combination thereof. The processor 1902 may implement or execute logical blocks, modules, and circuits in various examples described with reference to content disclosed in this application. The processor may alternatively be a combination for implementing a computing function, for example, a combination including one or more microprocessors, or a combination of a digital signal processor and a microprocessor. The communication interface 1903 may be a transceiver, a circuit, a bus, a module, or another type of communication interface. The bus 1904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 13, but this does not mean that there is only one bus or only one type of bus.

An embodiment of this application further provides a communication system, including the first electronic device and the second electronic device described above. Optionally, the third electronic device described above is further included.

An embodiment of this application further provides a computer-readable storage medium. The computer-readable storage medium has a program instruction. When the program instruction is executed by a processor, the processor is enabled to perform the foregoing method for configuring a channel for transmitting a multicast service.

An embodiment of this application further provides a chip system. The chip system includes at least one processor. When a program instruction is executed in the at least one processor, the at least one processor is enabled to perform the foregoing method for configuring a channel for transmitting a multicast service.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A method for configuring a channel for transmitting a multicast service, applied to a first electronic device, wherein the first electronic device comprises a first basic service layer and a first access layer, a first service channel is configured at the first basic service layer, a first logical channel is configured at the first access layer, the first service channel has a mapping relationship with the first logical channel, the first service channel and the first logical channel are configured to transmit first data, and the method being **characterised in that** it further comprises:
sending (S308, S1101), by the first basic service layer, first information to a second electronic device, wherein the first information notifies the second electronic device of the mapping relationship at the first electronic device between the first service channel and the first logical channel, and indicates the second electronic device to establish a second service channel to receive the multicast service;
receiving (S312, S1103), by the first basic service layer, second information sent by the second electronic device, wherein the second information indicates establishing a mapping relationship between the first service channel and the second service channel, the second service channel has a mapping relationship with the first logical channel at the second electronic device, and the first logical channel is configured to transmit the first data from the first service channel to the second service channel;
sending (S318, S1104), by the first basic service layer, third information to a third electronic device, wherein the third information notifies the third electronic device of the mapping relationship at the first electronic device between the first service channel and the first logical channel, and indicates the third electronic device to establish a third service channel to receive the multicast service; and
receiving (S322, S1106), by the first basic service layer, fourth information sent by the third electronic device, wherein the fourth information indicates establishing a mapping relationship between the first service channel and the third service channel, the third service channel has a mapping relationship with the first logical channel at the third electronic device, and the first logical channel is configured to transmit the first data from the first service channel to the third service channel.

2. The method according to claim 1, wherein before the sending, by the first basic service layer, first information to a second electronic device, the method further comprises:
establishing (S304, S1107), by the first basic service layer, the first service channel;
sending (S305, S1108), by the first basic service layer, fifth information to the first access layer, wherein the fifth information is used to apply for a logical channel for the first service channel; and
receiving (S307, S1109), by the first basic service layer, sixth information sent by the first access layer, wherein the sixth information indicates the first service channel to establish the mapping relationship with the first logical channel.

3. The method according to claim 2, wherein
the fifth information comprises an identifier of the first service channel and device information of the second electronic device, and the device information of the second electronic device in the fifth information indicates the first access layer to establish a logical link between the first electronic device and the second electronic device; and
the sixth information comprises the identifier of the first service channel, an identifier of the first logical channel, and the device information of the second electronic device, and the device information of the second electronic device in the sixth information indicates that establishment of the logical link between the first electronic device and the second electronic device is completed.

4. The method according to claim 2, wherein
the fifth information comprises an identifier of the first service channel and multicast member information, the multicast member information comprises a device identifier and/or a device address of at least one electronic device configured to receive the first data, and the multicast member information in the fifth information indicates the first access layer to establish a logical link between the first electronic device and each of the at least one electronic device configured to receive the first data; and
the sixth information comprises the identifier of the first service channel, an identifier of the first logical channel, and the multicast member information, and the multicast member information indicates that establishment of the logical link between the first electronic device and each of the at least one electronic device configured to receive the first data is completed.

5. The method according to claim 2, wherein
the fifth information comprises an identifier of the first service channel and multicast member information, the multicast member information comprises a device identifier and/or a device address of at least one electronic device configured to receive the first data, and the multicast member information in the fifth information indicates the first access layer to establish a logical link between the first electronic device and each of the at least one electronic device configured to receive the first data; and
the sixth information comprises the identifier of the first service channel, an identifier of the first logical channel, and device information of the second electronic device, and the device information of the second electronic device in the sixth information indicates that establishment of the logical link between the first electronic device and the second electronic device is completed.

6. The method according to any one of claims 2 to 5, wherein the first electronic device further comprises a first basic application layer, and before the establishing, by the first basic service layer, the first service channel, the method further comprises:
receiving (S303, S1110), by the first basic service layer, seventh information sent by the first basic application layer, wherein the seventh information indicates to apply for a service channel for a first port, and the first port is a port used by the first electronic device to transmit the first data; and
the method further comprises:
sending (S313, S1111), by the first basic service layer, eighth information to the first basic application layer, wherein the eighth information indicates the first port to establish a mapping relationship with the first service channel.

7. The method according to claim 6, wherein
the seventh information comprises an identifier of the first port, the multicast member information, and multicast member port information, the multicast member information comprises the device identifier and/or the device address of the electronic device configured to receive the first data, and the multicast member port information comprises an identifier of a port used by the electronic device configured to receive the first data; and
the eighth information comprises the identifier of the first port, the identifier of the first service channel, and the device information of the second electronic device; or
the eighth information comprises the identifier of the first port, the identifier of the first service channel, and the multicast member information.

8. The method according to claim 7, wherein the port used by the electronic device configured to receive the first data is obtained through negotiation between the first basic application layer of the first electronic device and each of the at least one electronic device configured to receive the first data.

9. The method according to claim 1 or 2, wherein
before the sending, by the first basic service layer, first information to a second electronic device, the method further comprises:
sending (S1501), by the first basic service layer, ninth information to the first access layer, wherein the ninth information indicates the first access layer to establish a logical link between the first electronic device and the second electronic device; and
receiving (S1502), by the first basic service layer, tenth information sent by the first access layer, wherein the tenth information indicates that establishment of the logical link between the first electronic device and the second electronic device is completed; and
before the sending, by the first basic service layer, third information to a third electronic device, the method further comprises:
sending (S1506), by the first basic service layer, eleventh information to the first access layer, wherein the eleventh information indicates the first access layer to establish a logical link between the first electronic device and the third electronic device; and
receiving (S1507), by the first basic service layer, twelfth information sent by the first access layer, wherein the twelfth information indicates that establishment of the logical link between the first electronic device and the third electronic device is completed.

10. The method according to claim 9, wherein
the logical link between the first electronic device and the second electronic device comprises the first logical channel and a second logical channel, the second logical channel separately has a mapping relationship with the first service channel and the second service channel, and the second logical channel is configured to transmit data that is sent by the second electronic device to the first electronic device;
the logical link between the first electronic device and the third electronic device comprises the first logical channel and a third logical channel, the third logical channel separately has a mapping relationship with the first service channel and the third service channel, and the third logical channel is configured to transmit data that is sent by the third electronic device to the first electronic device; and
the first logical channel is configured to transmit data that is sent by the first electronic device to the second electronic device and the third electronic device.

11. The method according to claim 10, wherein
the ninth information comprises device information of the second electronic device and an identifier of the first service channel;
the tenth information comprises the device information of the second electronic device, the identifier of the first service channel, an identifier of the first logical channel, and an identifier of the second logical channel;
the eleventh information comprises device information of the third electronic device and at least one of the following: the identifier of the first service channel and the identifier of the first logical channel; and
the twelfth information comprises the device information of the third electronic device, the identifier of the first service channel, the identifier of the first logical channel, and an identifier of the third logical channel.

12. The method according to claim 11, wherein
the device information of the second electronic device comprises a device identifier and/or a device address of the second electronic device; and
the device information of the third electronic device comprises a device identifier and/or a device address of the third electronic device.

13. An apparatus for configuring a channel for transmitting a multicast service, comprising:
a memory, configured to store a computer program; and
a processor, configured to execute the computer program stored in the memory, to enable the apparatus to perform the method according to any one of claims 1 to 12.

14. A computer-readable storage medium, storing computer-executable instructions, wherein when the computer-executable instructions are run on a computer, the computer is enabled to perform the method according to any one of claims 1 to 12.

15. A chip system, comprising at least one processor, wherein when program instructions are executed in the at least one processor, the at least one processor is enabled to perform the method according to any one of claims 1 to 12.

## Patentansprüche

1. Verfahren zum Konfigurieren eines Kanals zum Übertragen eines Multicast-Dienstes, angewendet auf eine erste elektronische Vorrichtung, wobei die erste elektronische Vorrichtung eine erste Basisdienstschicht und eine erste Zugriffsschicht umfasst, ein erster Dienstkanal an der ersten Basisdienstschicht konfiguriert ist, ein erster logischer Kanal an der ersten Zugriffsschicht konfiguriert ist, der erste Dienstkanal eine Mapping-Beziehung mit dem ersten logischen Kanal aufweist, der erste Dienstkanal und der erste logische Kanal konfiguriert sind, um erste Daten zu übertragen, und das Verfahren **dadurch gekennzeichnet ist, dass** es ferner umfasst:
Senden (S308, S1101), durch die erste Basisdienstschicht, von ersten Informationen an eine zweite elektronische Vorrichtung, wobei die ersten Informationen die zweite elektronische Vorrichtung über die Mapping-Beziehung an der ersten elektronischen Vorrichtung zwischen dem ersten Dienstkanal und dem ersten logischen Kanal benachrichtigen und die zweite elektronische Vorrichtung angeben, um einen zweiten Dienstkanal einzurichten, um den Multicast-Dienst zu empfangen;
Empfangen (S312, S1103), durch die erste Basisdienstschicht, von zweiten Informationen, die von der zweiten elektronischen Vorrichtung gesendet werden, wobei die zweiten Informationen das Einrichten einer Mapping-Beziehung zwischen dem ersten Dienstkanal und dem zweiten Dienstkanal angeben, der zweite Dienstkanal eine Mapping-Beziehung mit dem ersten logischen Kanal an der zweiten elektronischen Vorrichtung aufweist, und der erste logische Kanal konfiguriert ist, um die ersten Daten von dem ersten Dienstkanal an den zweiten Dienstkanal zu übertragen;
Senden (S318, S1104), durch die erste Basisdienstschicht, von dritten Informationen an eine dritte elektronische Vorrichtung, wobei die dritten Informationen die dritte elektronische Vorrichtung über die Mapping-Beziehung an der ersten elektronischen Vorrichtung zwischen dem ersten Dienstkanal und dem ersten logischen Kanal benachrichtigen und die dritte elektronische Vorrichtung angeben, um einen dritten Dienstkanal einzurichten, um den Multicast-Dienst zu empfangen; und
Empfangen (S322, S1106), durch die erste Basisdienstschicht, von vierten Informationen, die von der dritten elektronischen Vorrichtung gesendet werden, wobei die vierten Informationen das Einrichten einer Mapping-Beziehung zwischen dem ersten Dienstkanal und dem dritten Dienstkanal angeben, der dritte Dienstkanal eine Mapping-Beziehung mit dem ersten logischen Kanal an der dritten elektronischen Vorrichtung aufweist und der erste logische Kanal konfiguriert ist, um die ersten Daten von dem ersten Dienstkanal an den dritten Dienstkanal zu übertragen.

2. Verfahren nach Anspruch 1, wobei das Verfahren vor dem Senden, durch die erste Basisdienstschicht, von ersten Informationen and eine zweite elektronische Vorrichtung ferner umfasst:
Einrichten (S304, S1107) des ersten Dienstkanals durch die erste Basisdienstschicht;
Senden (S305, S1108), durch die erste Basisdienstschicht, von fünften Informationen an die erste Zugriffsschicht, wobei die fünften Informationen verwendet werden, um einen logischen Kanal für den ersten Dienstkanal anzumelden; und
Empfangen (S307, S1109), durch die erste Basisdienstschicht, von sechsten Informationen, die von der ersten Zugriffsschicht gesendet werden, wobei die sechsten Informationen den ersten Dienstkanal angeben, um die Mapping-Beziehung mit dem ersten logischen Kanal einzurichten.

3. Verfahren nach Anspruch 2, wobei
die fünften Informationen eine Kennung des ersten Dienstkanals und Vorrichtungsinformationen der zweiten elektronischen Vorrichtung umfassen, und die Vorrichtungsinformationen der zweiten elektronischen Vorrichtung in den fünften Informationen die erste Zugriffsschicht angeben, um eine logische Verbindung zwischen der ersten elektronischen Vorrichtung und der zweiten elektronischen Vorrichtung einzurichten; und
die sechsten Informationen die Kennung des ersten Dienstkanals, eine Kennung des ersten logischen Kanals und die Vorrichtungsinformationen der zweiten elektronischen Vorrichtung umfassen, und die Vorrichtungsinformationen der zweiten elektronischen Vorrichtung in den sechsten Informationen angeben, dass das Einrichten der logischen Verbindung zwischen der ersten elektronischen Vorrichtung und der zweiten elektronischen Vorrichtung abgeschlossen ist.

4. Verfahren nach Anspruch 2, wobei
die fünften Informationen eine Kennung des ersten Dienstkanals und Multicast-Mitgliedsinformationen umfassen, die Multicast-Mitgliedsinformationen eine Gerätekennung und/oder eine Geräteadresse mindestens einer elektronischen Vorrichtung umfassen, die konfiguriert ist, um die ersten Daten zu empfangen, und die Multicast-Mitgliedsinformationen in den fünften Informationen die erste Zugriffsschicht angeben, um eine logische Verbindung zwischen der ersten elektronischen Vorrichtung und jeder von der mindestens einen elektronischen Vorrichtung einzurichten, die konfiguriert ist, um die ersten Daten zu empfangen; und
die sechsten Informationen die Kennung des ersten Dienstkanals, eine Kennung des ersten logischen Kanals und die Multicast-Mitgliedsinformationen umfassen, und die Multicast-Mitgliedsinformationen angeben, dass das Einrichten der logischen Verbindung zwischen der ersten elektronischen Vorrichtung und jeder von der mindestens einen elektronischen Vorrichtung abgeschlossen ist, die konfiguriert ist, um die ersten Daten zu empfangen.

5. Verfahren nach Anspruch 2, wobei
die fünften Informationen eine Kennung des ersten Dienstkanals und Multicast-Mitgliedsinformationen umfassen, die Multicast-Mitgliedsinformationen eine Gerätekennung und/oder eine Geräteadresse mindestens einer elektronischen Vorrichtung umfassen, die konfiguriert ist, um die ersten Daten zu empfangen, und die Multicast-Mitgliedsinformationen in den fünften Informationen die erste Zugriffsschicht angeben, um eine logische Verbindung zwischen der ersten elektronischen Vorrichtung und jeder von der mindestens einen elektronischen Vorrichtung einzurichten, die konfiguriert ist, um die ersten Daten zu empfangen; und
die sechsten Informationen die Kennung des ersten Dienstkanals, eine Kennung des ersten logischen Kanals und Vorrichtungsinformationen der zweiten elektronischen Vorrichtung umfassen, und die Vorrichtungsinformationen der zweiten elektronischen Vorrichtung in den sechsten Informationen angeben, dass das Einrichten der logischen Verbindung zwischen der ersten elektronischen Vorrichtung und der zweiten elektronischen Vorrichtung abgeschlossen ist.

6. Verfahren nach einem der Ansprüche 2 bis 5, wobei die erste elektronische Vorrichtung ferner eine erste Basisanwendungsschicht umfasst, und das Verfahren vor dem Einrichten des ersten Dienstkanals durch die erste Basisdienstschicht ferner umfasst:
Empfangen (S303, S1110), durch die erste Basisdienstschicht, von siebten Informationen, die von der ersten Basisanwendungsschicht gesendet werden, wobei die siebten Informationen angeben, einen Dienstkanal für einen ersten Port anzumelden, und der erste Port ein Port ist, der von der ersten elektronischen Vorrichtung verwendet wird, um die ersten Daten zu übertragen; und
wobei das Verfahren ferner umfasst:
Senden (S313, S1111), durch die erste Basisdienstschicht, von achten Informationen an die erste Basisanwendungsschicht, wobei die achten Informationen den ersten Port angeben, um eine Mapping-Beziehung mit dem ersten Dienstkanal einzurichten.

7. Verfahren nach Anspruch 6, wobei
die siebten Informationen eine Kennung des ersten Ports, die Multicast-Mitgliedsinformationen und Multicast-Mitglieds-Portinformationen umfassen, die Multicast-Mitgliedsinformationen die Gerätekennung und/oder die Geräteadresse der elektronischen Vorrichtung umfassen, die konfiguriert ist, um die ersten Daten zu empfangen, und die Multicast-Mitglieds-Portinformationen eine Kennung eines Ports umfassen, der von der elektronischen Vorrichtung verwendet wird, die konfiguriert ist, um die ersten Daten zu empfangen; und
die achten Informationen die Kennung des ersten Ports, die Kennung des ersten Dienstkanals und die Vorrichtungsinformationen der zweiten elektronischen Vorrichtung umfassen; oder
die achten Informationen die Kennung des ersten Ports, die Kennung des ersten Dienstkanals und die Multicast-Mitgliedsinformationen umfassen.

8. Verfahren nach Anspruch 7, wobei der Port, der von der elektronischen Vorrichtung verwendet wird, die konfiguriert ist, um die ersten Daten zu empfangen, durch Verhandeln zwischen der ersten Basisanwendungsschicht der ersten elektronischen Vorrichtung und jeder von der mindestens einen elektronischen Vorrichtung erhalten wird, die konfiguriert ist, um die ersten Daten zu empfangen.

9. Verfahren nach Anspruch 1 oder 2, wobei
das Verfahren vor dem Senden, durch die erste Basisdienstschicht, von ersten Informationen an eine zweite elektronische Vorrichtung ferner umfasst:
Senden (S1501), durch die erste Basisdienstschicht, von neunten Informationen an die erste Zugriffsschicht, wobei die neunten Informationen die erste Zugriffsschicht angeben, um eine logische Verbindung zwischen der ersten elektronischen Vorrichtung und der zweiten elektronischen Vorrichtung einzurichten; und
Empfangen (S1502), durch die erste Basisdienstschicht, von zehnten Informationen, die von der ersten Zugriffsschicht gesendet werden, wobei die zehnten Informationen angeben, dass das Einrichten der logischen Verbindung zwischen der ersten elektronischen Vorrichtung und der zweiten elektronischen Vorrichtung abgeschlossen ist; und
das Verfahren vor dem Senden, durch die erste Basisdienstschicht, von dritten Informationen an eine dritte elektronische Vorrichtung ferner umfasst:
Senden (S1506), durch die erste Basisdienstschicht, von elften Informationen an die erste Zugriffsschicht, wobei die elften Informationen die erste Zugriffsschicht angeben, um eine logische Verbindung zwischen der ersten elektronischen Vorrichtung und der dritten elektronischen Vorrichtung einzurichten; und
Empfangen (S1507), durch die erste Basisdienstschicht, von zwölften Informationen, die von der ersten Zugriffsschicht gesendet werden, wobei die zwölften Informationen angeben, dass das Einrichten der logischen Verbindung zwischen der ersten elektronischen Vorrichtung und der dritten elektronischen Vorrichtung abgeschlossen ist.

10. Verfahren nach Anspruch 9, wobei
die logische Verbindung zwischen der ersten elektronischen Vorrichtung und der zweiten elektronischen Vorrichtung den ersten logischen Kanal und einen zweiten logischen Kanal umfasst, wobei der zweite logische Kanal separat eine Mapping-Beziehung mit dem ersten Dienstkanal und dem zweiten Dienstkanal aufweist, und der zweite logische Kanal konfiguriert ist, um Daten zu übertragen, die von der zweiten elektronischen Vorrichtung an die erste elektronische Vorrichtung gesendet werden;
die logische Verbindung zwischen der ersten elektronischen Vorrichtung und der dritten elektronischen Vorrichtung den ersten logischen Kanal und einen dritten logischen Kanal umfasst, wobei der dritte logische Kanal separat eine Mapping-Beziehung mit dem ersten Dienstkanal und dem dritten Dienstkanal aufweist, und der dritte logische Kanal konfiguriert ist, um Daten zu übertragen, die von der dritten elektronischen Vorrichtung an die erste elektronische Vorrichtung gesendet werden; und
der erste logische Kanal konfiguriert ist, um Daten zu übertragen, die von der ersten elektronischen Vorrichtung an die zweite elektronische Vorrichtung und die dritte elektronische Vorrichtung gesendet werden.

11. Verfahren nach Anspruch 10, wobei
die neunten Informationen Vorrichtungsinformationen der zweiten elektronischen Vorrichtung und eine Kennung des ersten Dienstkanals umfassen;
die zehnten Informationen die Vorrichtungsinformationen der zweiten elektronischen Vorrichtung, die Kennung des ersten Dienstkanals, eine Kennung des ersten logischen Kanals und eine Kennung des zweiten logischen Kanals umfassen;
die elften Informationen Vorrichtungsinformationen der dritten elektronischen Vorrichtung und mindestens eines der Folgenden umfassen: die Kennung des ersten Dienstkanals und die Kennung des ersten logischen Kanals; und
die zwölften Informationen die Vorrichtungsinformationen der dritten elektronischen Vorrichtung, die Kennung des ersten Dienstkanals, die Kennung des ersten logischen Kanals und eine Kennung des dritten logischen Kanals umfassen.

12. Verfahren nach Anspruch 11, wobei
die Vorrichtungsinformationen der zweiten elektronischen Vorrichtung eine Vorrichtungskennung und/oder eine Vorrichtungsadresse der zweiten elektronischen Vorrichtung umfassen; und
die Vorrichtungsinformationen der dritten elektronischen Vorrichtung eine Vorrichtungskennung und/oder eine Vorrichtungsadresse der dritten elektronischen Vorrichtung umfassen.

13. Einrichtung zum Konfigurieren eines Kanals zum Übertragen eines Multicast-Dienstes, die umfasst:
einen Speicher, der konfiguriert ist, um ein Computerprogramm zu speichern; und
einen Prozessor, der konfiguriert ist, um das in dem Speicher gespeicherte Computerprogramm auszuführen, um die Einrichtung in die Lage zu versetzen, das Verfahren nach einem der Ansprüche 1 bis 12 durchzuführen.

14. Computerlesbares Speichermedium, das computerausführbare Anweisungen speichert, wobei, wenn die computerausführbaren Anweisungen auf einem Computer ausgeführt werden, der Computer in die Lage versetzt wird, das Verfahren nach einem der Ansprüche 1 bis 12 durchzuführen.

15. Chipsystem, das mindestens einen Prozessor umfasst, wobei, wenn Programmanweisungen in dem mindestens einen Prozessor ausgeführt werden, der mindestens eine Prozessor in die Lage versetzt wird, das Verfahren nach einem der Ansprüche 1 bis 12 durchzuführen.

## Revendications

1. Procédé permettant de configurer un canal pour une transmission d'un service de multidiffusion, appliqué à un premier dispositif électronique, dans lequel le premier dispositif électronique comprend une première couche de service de base et une première couche d'accès, un premier canal de service est configuré au niveau de la première couche de service de base, un premier canal logique est configuré au niveau de la première couche d'accès, le premier canal de service a une relation de mappage avec le premier canal logique, le premier canal de service et le premier canal logique sont configurés pour transmettre des premières données, et le procédé étant **caractérisé en ce qu'**il comprend en outre :
l'envoi (S308, S1101), par la première couche de service de base, de premières informations à un deuxième dispositif électronique, dans lequel les premières informations informent le deuxième dispositif électronique de la relation de mappage au niveau du premier dispositif électronique entre le premier canal de service et le premier canal logique, et indiquent au deuxième dispositif électronique d'établir un deuxième canal de service pour recevoir le service de multidiffusion ;
la réception (S312, S1103), par la première couche de service de base, de deuxièmes informations envoyées par le deuxième dispositif électronique, dans lequel les deuxièmes informations indiquent l'établissement d'une relation de mappage entre le premier canal de service et le deuxième canal de service, le deuxième canal de service a une relation de mappage avec le premier canal logique au niveau du deuxième dispositif électronique, et le premier canal logique est configuré pour transmettre les premières données du premier canal de service au deuxième canal de service ;
l'envoi (S318, S1104), par la première couche de service de base, de troisièmes informations à un troisième dispositif électronique, dans lequel les troisièmes informations informent le troisième dispositif électronique de la relation de mappage au niveau du premier dispositif électronique entre le premier canal de service et le premier canal logique, et indiquent au troisième dispositif électronique d'établir un troisième canal de service pour recevoir le service de multidiffusion ; et
la réception (S322, S1106), par la première couche de service de base, de quatrièmes informations envoyées par le troisième dispositif électronique, dans lequel les quatrièmes informations indiquent l'établissement d'une relation de mappage entre le premier canal de service et le troisième canal de service, le troisième canal de service a une relation de mappage avec le premier canal logique au niveau du troisième dispositif électronique, et le premier canal logique est configuré pour transmettre les premières données du premier canal de service au troisième canal de service.

2. Procédé selon la revendication 1, dans lequel, avant l'envoi, par la première couche de service de base, de premières informations à un deuxième dispositif électronique, le procédé comprend en outre :
l'établissement (S304, S1107), par la première couche de service de base, du premier canal de service ;
l'envoi (S305, S1108), par la première couche de service de base, de cinquièmes informations à la première couche d'accès, dans lequel les cinquièmes informations sont utilisées pour demander un canal logique pour le premier canal de service ; et
la réception (S307, S1109), par la première couche de service de base, de sixièmes informations envoyées par la première couche d'accès, dans lequel les sixièmes informations indiquent au premier canal de service d'établir la relation de mappage avec le premier canal logique.

3. Procédé selon la revendication 2, dans lequel
les cinquièmes informations comprennent un identifiant du premier canal de service et des informations de dispositif du deuxième dispositif électronique, et les informations de dispositif du deuxième dispositif électronique dans les cinquièmes informations indiquent à la première couche d'accès d'établir une liaison logique entre le premier dispositif électronique et le deuxième dispositif électronique ; et
les sixièmes informations comprennent l'identifiant du premier canal de service, un identifiant du premier canal logique, et les informations de dispositif du deuxième dispositif électronique, et les informations de dispositif du deuxième dispositif électronique dans les sixièmes informations indiquent que l'établissement de la liaison logique entre le premier dispositif électronique et le deuxième dispositif électronique est terminé.

4. Procédé selon la revendication 2, dans lequel
les cinquièmes informations comprennent un identifiant du premier canal de service et des informations de membres de multidiffusion, les informations de membres de multidiffusion comprennent un identifiant de dispositif et/ou une adresse de dispositif d'au moins un dispositif électronique configuré pour recevoir les premières données, et les informations de membres de multidiffusion dans les cinquièmes informations indiquent à la première couche d'accès d'établir une liaison logique entre le premier dispositif électronique et chacun parmi l'au moins un dispositif électronique configuré pour recevoir les premières données ; et
les sixièmes informations comprennent l'identifiant du premier canal de service, un identifiant du premier canal logique, et les informations de membres de multidiffusion, et les informations de membres de multidiffusion indiquent que l'établissement de la liaison logique entre le premier dispositif électronique et chacun parmi l'au moins un dispositif électronique configuré pour recevoir les premières données est terminé.

5. Procédé selon la revendication 2, dans lequel
les cinquièmes informations comprennent un identifiant du premier canal de service et des informations de membres de multidiffusion, les informations de membres de multidiffusion comprennent un identifiant de dispositif et/ou une adresse de dispositif d'au moins un dispositif électronique configuré pour recevoir les premières données, et les informations de membres de multidiffusion dans les cinquièmes informations indiquent à la première couche d'accès d'établir une liaison logique entre le premier dispositif électronique et chacun parmi l'au moins un dispositif électronique configuré pour recevoir les premières données ; et
les sixièmes informations comprennent l'identifiant du premier canal de service, un identifiant du premier canal logique, et des informations de dispositif du deuxième dispositif électronique, et les informations de dispositif du deuxième dispositif électronique dans les sixièmes informations indiquent que l'établissement de la liaison logique entre le premier dispositif électronique et le deuxième dispositif électronique est terminé.

6. Procédé selon l'une quelconque des revendications 2 à 5, dans lequel le premier dispositif électronique comprend en outre une première couche de demande de base, et avant l'établissement, par la première couche de service de base, du premier canal de service, le procédé comprend en outre :
la réception (S303, S1110), par la première couche de service de base, de septièmes informations envoyées par la première couche de demande de base, dans lequel les septièmes informations indiquent de demander un canal de service pour un premier port, et le premier port est un port utilisé par le premier dispositif électronique pour transmettre les premières données ; et
le procédé comprend en outre :
l'envoi (S313, S1111), par la première couche de service de base, de huitièmes informations à la première couche de demande de base, dans lequel les huitièmes informations indiquent le premier port pour établir une relation de mappage avec le premier canal de service.

7. Procédé selon la revendication 6, dans lequel
les septièmes informations comprennent un identifiant du premier port, les informations de membres de multidiffusion, et des informations de ports de membres de multidiffusion, les informations de membres de multidiffusion comprennent l'identifiant de dispositif et/ou l'adresse de dispositif du dispositif électronique configuré pour recevoir les premières données, et les informations de ports de membres de multidiffusion comprennent un identifiant d'un port utilisé par le dispositif électronique configuré pour recevoir les premières données ; et
les huitièmes informations comprennent l'identifiant du premier port, l'identifiant du premier canal de service, et les informations de dispositif du deuxième dispositif électronique ; ou
les huitièmes informations comprennent l'identifiant du premier port, l'identifiant du premier canal de service, et les informations de membres de multidiffusion.

8. Procédé selon la revendication 7, dans lequel le port utilisé par le dispositif électronique configuré pour recevoir les premières données est obtenu par négociation entre la première couche de demande de base du premier dispositif électronique et chacun parmi l'au moins un dispositif électronique configuré pour recevoir les premières données.

9. Procédé selon la revendication 1 ou 2, dans lequel
avant l'envoi, par la première couche de service de base, de premières informations à un deuxième dispositif électronique, le procédé comprend en outre :
l'envoi (S1501), par la première couche de service de base, de neuvièmes informations à la première couche d'accès, dans lequel les neuvièmes informations indiquent à la première couche d'accès d'établir une liaison logique entre le premier dispositif électronique et le deuxième dispositif électronique ; et
la réception (S1502), par la première couche de service de base, de dixièmes informations envoyées par la première couche d'accès, dans lequel les dixièmes informations indiquent que l'établissement de la liaison logique entre le premier dispositif électronique et le deuxième dispositif électronique est terminé ; et
avant l'envoi, par la première couche de service de base, de troisièmes informations à un troisième dispositif électronique, le procédé comprend en outre :
l'envoi (S1506), par la première couche de service de base, de onzièmes informations à la première couche d'accès, dans lequel les onzièmes informations indiquent à la première couche d'accès d'établir une liaison logique entre le premier dispositif électronique et le troisième dispositif électronique ; et
la réception (S1507), par la première couche de service de base, de douzièmes informations envoyées par la première couche d'accès, dans lequel les douzièmes informations indiquent que l'établissement de la liaison logique entre le premier dispositif électronique et le troisième dispositif électronique est terminé.

10. Procédé selon la revendication 9, dans lequel
la liaison logique entre le premier dispositif électronique et le deuxième dispositif électronique comprend le premier canal logique et un deuxième canal logique, le deuxième canal logique a séparément une relation de mappage avec le premier canal de service et le deuxième canal de service, et le deuxième canal logique est configuré pour transmettre des données qui sont envoyées par le deuxième dispositif électronique au premier dispositif électronique ;
la liaison logique entre le premier dispositif électronique et le troisième dispositif électronique comprend le premier canal logique et un troisième canal logique, le troisième canal logique a séparément une relation de mappage avec le premier canal de service et le troisième canal de service, et le troisième canal logique est configuré pour transmettre des données qui sont envoyées par le troisième dispositif électronique au premier dispositif électronique ; et
le premier canal logique est configuré pour transmettre des données qui sont envoyées par le premier dispositif électronique au deuxième dispositif électronique et au troisième dispositif électronique.

11. Procédé selon la revendication 10, dans lequel
les neuvièmes informations comprennent des informations de dispositif du deuxième dispositif électronique et un identifiant du premier canal de service ;
les dixièmes informations comprennent les informations de dispositif du deuxième dispositif électronique, l'identifiant du premier canal de service, un identifiant du premier canal logique, et un identifiant du deuxième canal logique ;
les onzièmes informations comprennent des informations de dispositif du troisième dispositif électronique et au moins l'un parmi les éléments suivants : l'identifiant du premier canal de service et l'identifiant du premier canal logique ; et
les douzièmes informations comprennent les informations de dispositif du troisième dispositif électronique, l'identifiant du premier canal de service, l'identifiant du premier canal logique, et un identifiant du troisième canal logique.

12. Procédé selon la revendication 11, dans lequel
les informations de dispositif du deuxième dispositif électronique comprennent un identifiant de dispositif et/ou une adresse de dispositif du deuxième dispositif électronique ; et
les informations de dispositif du troisième dispositif électronique comprennent un identifiant de dispositif et/ou une adresse de dispositif du troisième dispositif électronique.

13. Appareil permettant de configurer un canal pour une transmission d'un service de multidiffusion, comprenant :
une mémoire, configurée pour stocker un programme informatique ; et
un processeur, configuré pour exécuter le programme informatique stocké dans la mémoire, pour activer l'appareil pour réaliser le procédé selon l'une quelconque des revendications 1 à 12.

14. Support de stockage lisible par ordinateur, stockant des instructions exécutables par ordinateur, dans lequel, lorsque les instructions exécutables par ordinateur sont exécutées sur un ordinateur, l'ordinateur est activé pour réaliser le procédé selon l'une quelconque des revendications 1 à 12.

15. Système de puce, comprenant au moins un processeur, dans lequel, lorsque des instructions de programme sont exécutées dans l'au moins un processeur, l'au moins un processeur est activé pour réaliser le procédé selon l'une quelconque des revendications 1 à 12.
